(19) Europäisches Patentamt
European Patent Office
Office européen des brevets

(11) **EP 4 344 552 A1**

(12) **EUROPEAN PATENT APPLICATION**

(43) Date of publication:
**03.04.2024 Bulletin 2024/14**

(21) Application number: **22198943.7**

(22) Date of filing: **30.09.2022**

(51) International Patent Classification (IPC):
**A23K 50/42** (2016.01)    **A23K 40/30** (2016.01)

(52) Cooperative Patent Classification (CPC):
**A23K 50/42; A23K 40/30**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **MARS, INCORPORATED**
**McLean, Virginia 22101 (US)**

(72) Inventors:
• **COCHET, Jérôme**
  **30470 AIMARGUES (FR)**
• **GOYON, Annabelle**
  **30470 AIMARGUES (FR)**

(74) Representative: **Cabinet Nony**
**11 rue Saint-Georges**
**75009 Paris (FR)**

(54)    **ANIMAL FOOD COMPOSITIONS WITH IMPROVED PALATABILITY, AND METHODS FOR PREPARING THE SAME**

(57)    The present disclosure relates to methods for preparing and processing animal food compositions. It further relates to animal food compositions with improved palatability, and kits for preparing the same.

EP 4 344 552 A1

**Description**

## FIELD OF THE DISCLOSURE

The present disclosure relates to methods for preparing and processing animal food compositions. It further relates to animal food compositions with improved palatability, and kits for preparing the same.

## BACKGROUND OF THE DISCLOSURE

Odour and taste play a role in an animal's preference or aversion to a food type. Odour is the primary cue in attracting an animal to a food composition or causing it to not approach. If an animal is not attracted to the food supplied to it, the food may not be consumed in sufficient amounts to maintain health or well-being. Thus, a problem of food refusal or aversion problem may result. Food refusal or aversion is the alteration of eating behaviour for psychological reasons. It may manifest as psychological food intolerance, where there is an adverse physical reaction associated with the ingestion of a particular food, or food avoidance.

There is thus a general need for improving the palatability of animal food products, and in particular of dry animal food products; and consequently, for improving methods for preparing and/or processing such products.

The process of creating an animal food product, in particular of a dry animal food product such as a kibble, is usually done by baking and/or extruding. The dough is typically fed into a machine called an expander and/or extruder, which uses pressurized steam or hot water to cook the ingredients. While inside the extruder, the dough is generally under extreme pressure and high temperatures. The dough is then pushed through a die (specifically sized and shaped hole) and then cut off using a knife. The puffed dough pieces are usually made into a kibble by passing it through a dryer so that moisture is dropped down to a defined target ensuring stability of the food until consumption.

One general solution to the problem of palatability is, for example, to coat, for example to spray the dry animal food composition (e.g. a kibble) with palatability enhancers, before being optionally sealed into packages. Unfortunately, the prior steps usually involve high temperatures, in particular for cooking the ingredients and preparing them for extrusion.

The final heated product is normally not in an optimal condition to be sprayed by temperature-sensitive aromas. Overall, heating steps are thus detrimental to the quality and integrity of the palatability enhancers which may be present on a dry animal food product such as a kibble.

Yet, the addition of cooling steps to the process is also time- and energy-consuming and thus extremely detrimental for productivity. Such additional steps may also decrease the homogeneity, and thus the overall quality, of the production.

Also, a lowered temperature may lead to the early solidification of some components, and ultimately to difficulties such as agglomeration, stickiness and uneven coating.

Hence, and in order to maintain or improve the palatability of the final animal food product, the available methods require a balance between scalability and sensibility, depending on the palatability enhancer (e.g. olfactive compounds) (e.g. sprayed) at the surface of the animal food product.

US 2010/0303976 A1 teaches a process for preparing coated dry kibbles with improved palatability.

WO 2015/066009 teaches a dry pet food composition including a palatability enhancing coating.

Samant et al. ("Dry Pet Food Flavor Enhancers and Their Impact on Palatability: A Review; Foods; 2021) teaches that dry pet foods (e.g. kibbles), while being popular, are the least palatable. It teaches (i) a selection of palatants, in particular flavor enhancers, meant to increase their acceptability to pets, and (ii) alternative methods of palatant applications that may impact palatability, including a two-step coating process wherein a flavorant and phosphate are applied on a pet food, followed by spraying of an acidic enhancer, and a multiple-coating technique wherein a dry pet food is coated with a primary coating comprising farinaceous and proteinaceous material, followed by a secondary coating of starch or egg.

Consequently, there remains a need to provide an animal food product and a method to increase the palatability of such an animal food product with high nutritional constraints and/or to avoid and treat food aversion and the resulting diseases or disorders.

There remains a need for methods of preparation of animal food products, including dry, semi-most and moist animal food products.

There remains a need for animal food products with improved palatability.

The disclosure has for purpose to meet the above-mentioned needs.

## SUMMARY OF THE DISCLOSURE

A **first** aspect of the present disclosure relates to a method for preparing an animal food product, comprising the steps of:

a) providing a dry food composition comprising a first coating, said first coating comprising a fat-containing composition comprising between about 0.5% and about 10% of fat in dry matter (FDM) of the total weight of the fat-containing composition;
b) applying a second coating, preferably by spraying, to the dry food composition, the second coating comprising (i) a palatability enhancer product in liquid form and (ii) a palatability enhancer product in powder form;

characterized in that the second coating is applied at a temperature less than about 37° C and/or within about 10° C of the ambient temperature.

Another aspect of the present disclosure relates to a kit comprising:

- A kibble comprising a core dry food composition suitable for animal consumption, and an external coating comprising a fat-containing composition comprising at least about 0.5% of fat in dry matter (FDM) of the total weight of the fat-containing composition, and less than about 10% of FDM,
- A palatability enhancer product in powder form, and
- A palatability enhancer product in liquid form.

Another aspect of the present disclosure relates to an animal food product obtainable by the method according to the present disclosure, said animal food product being in the form of a kibble.

Another aspect related to an animal food product comprising an external coating comprising at least i) a fat-containing composition comprising at least about 0.5% of fat in dry matter (FDM) of the total weight of the fat-containing composition, and less than about 10% of FDM, ii) a palatability enhancer product in powder form, and iii) a palatability enhancer product in liquid form.

Another aspect of the present disclosure relates to a method for feeding an animal, comprising a step of administering an animal food product according to the present disclosure.

## DESCRIPTION OF THE FIGURES

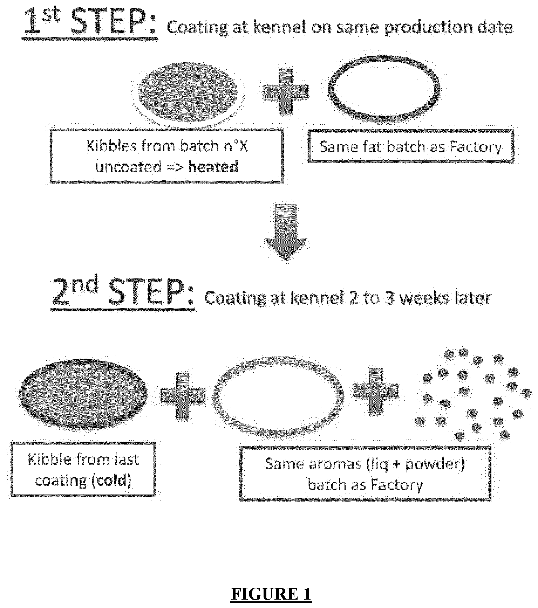

**Figure 1. General description of the production method according to the present disclosure.** A first coating step is performed on a dry food product with liquid fat, then the product is cooled down until stabilization (e.g. 2 to 3 weeks after production of the dry product). Then, in a second step, the cold dry product is sprayed with aroma liquids and palatant powders. At the end of the process, the product is directly packed.

## DETAILED DESCRIPTION OF THE DISCLOSURE

It is provided herein experimental evidence, based on pets studies, that the palatability conferred by palatability enhancers can be statistically improved, when such enhancers are coated at the surface of a dry composition which was previously coated with a fat-containing composition having at least about 0.5% of fat in dry matter (FDM) of the total weight of the fat-containing composition, and at ambient or low temperature.

More particularly, it is demonstrated that the efficacy of palatability enhancers in powder and liquid form can be statistically further improved when the dry composition is preliminarily coated with a fat-containing composition having less than about 10% fat in dry matter (FDM) of the total weight of the fat-containing composition.

More particularly, it is demonstrated that the statistical significance of this increase in palatability is long-lasting, for at least two-months after the preparation of said animal food products, which also can render the final prepared product distinguishable from other animal food products prepared with a different protocol.

More particularly, it is demonstrated that the overall increase in palatability is present, both, in conditions where the palatability enhancer product in liquid form is coated first on the pre-coated dry food composition, and in conditions where the palatability enhancer product in powder form is coated first.

This improvement is also particularly advantageous and applicable in the context of an industrial process, as it allows to distinguish both the production of the dry food composition, and the additional further processing and coating steps. For example, this process of preparation is particularly advantageous in that it can allow the production of dry food compositions at a given space and time, and then the additional coating step(s) in a "cold" (or ambient temperature) environment, at a later time or localization.

This improvement is also particularly advantageous for the preparation of dry animal food products, which are known in the Art to be less palatable according to standard protocols.

Without wishing to be bound by the theory, the inventors are of the opinion that the coating step, according to the present disclosure, is also more homogeneous and efficient; thus leading to improved stickiness of the palatability enhancer on the final product, including dry final products, even weeks after their preparation or even packaging.

A **first** aspect of the present disclosure thus relates to a method for preparing an animal food product, comprising the steps of:

> a) providing a dry food composition comprising a first coating, said first coating comprising a fat-containing composition comprising between about 0.5% and about 10% of fat in dry matter (FDM) of the total weight of the fat-containing composition;
> b) applying a second coating, preferably by spraying, to the dry food composition, the second coating comprising (i) a palatability enhancer product in liquid form and (ii) a palatability enhancer product in powder form;

characterized in that the second coating is applied at a temperature less than about 37° C and/or within about 10° C of the ambient temperature.

In another embodiment, the method for preparing an animal food product according to the disclosure can comprise the steps of:

> a) providing a dry food composition comprising a first coating, said first coating comprising a fat-containing composition comprising between about 0.5% and about 10% of fat in dry matter (FDM) of the total weight of the fat-containing composition;
> b) spraying a second coating to the dry food composition, the second coating comprising (i) a palatability enhancer product in liquid form and (ii) a palatability enhancer product in powder form;

characterized in that the second coating is sprayed at a temperature less than about 37° C and/or within about 10° C of the ambient temperature.

In another embodiment, the method for preparing an animal food product according to the disclosure can further comprise a step of packaging the prepared animal food product.

According to said particular embodiment, the method for preparing an animal food product can comprise the following steps of:

> a) providing a dry food composition comprising a first coating, said first coating comprising a fat-containing composition comprising between about 0.5% and about 10% of fat in dry matter (FDM) of the total weight of the fat-containing composition;
> b) applying a second coating, preferably by spraying, to the dry food composition , the second coating comprising (i) a palatability enhancer product in liquid form and (ii) a palatability enhancer product in powder form;
> c) packaging the prepared animal food product;

characterized in that the second coating is applied at a temperature less than about 37° C and/or within about 10° C of the ambient temperature.

In another embodiment, the step c) of packaging according to the method of the disclosure can be performed under conditions wherein the temperature of the animal food product is less than about 37° C and/or within about 10° C of the ambient temperature.

The palatability enhancer in liquid form and the palatability enhancer in powder form can be the same palatability enhancers or can be different palatability enhancers.

According to the disclosure, the step b) of applying a second coating comprising the palatability enhancer product in liquid form, and the palatability enhancer product in powder form, can be performed in a sequential manner or simultaneously, for example as a mixture.

According to an embodiment of the disclosure, the step b) of applying a second coating comprising (i) a palatability enhancer product in liquid form and (ii) a palatability enhancer product in powder form can be performed in a single step of applying said palatability enhancer in powder form and a said palatability enhancer in liquid form simultaneously.

Said palatability enhancers in powder and in liquid form can be apply simultaneously as separate compositions or can be applied simultaneously as a mixture or a premixture.

According to another embodiment of the disclosure, the step b) of applying a second coating comprising (i) a palatability enhancer product in liquid form and (ii) a palatability enhancer product in powder form can be performed in 2 sequential steps of i) applying first said palatability enhancer in powder form and ii) applying next said palatability enhancer in liquid form.

In such an embodiment, the method for preparing an animal food product according to the disclosure can further be characterized in that only the step of applying the palatability enhancer in liquid form is done at a temperature less than about 37° C and/or within about 10° C of the ambient temperature. In such an embodiment, the method for preparing an animal food product according to the disclosure can comprise the steps of:

a) providing a dry food composition comprising a first coating, said first coating comprising a fat-containing composition comprising between about 0.5% and about 10% of fat in dry matter (FDM) of the total weight of the fat-containing composition;

b) applying a second coating, preferably by spraying, to the dry food composition, the second coating comprising (i) a palatability enhancer product in powder form and (ii) a palatability enhancer product in powder form; said second coating being performed in 2 sequential steps of i) applying first said palatability enhancer in powder form and ii) applying next said palatability enhancer in liquid form;

characterized in that the palatability enhancer in liquid form is applied at a temperature less than about 37° C and/or within about 10° C of the ambient temperature.

In such an embodiment, the method for preparing an animal food product according to the disclosure can comprise the steps of:

a) providing a dry food composition comprising a first coating, said first coating comprising a fat-containing composition comprising between about 0.5% and about 10% of fat in dry matter (FDM) of the total weight of the fat-containing composition;

b) applying a second coating, preferably by spraying, to the dry food composition, the second coating comprising (i) a palatability enhancer product in powder form and (ii) a palatability enhancer product in powder form; said second coating being performed in 2 sequential steps of i) applying first said palatability enhancer in powder form and ii) applying next said palatability enhancer in liquid form;

characterized in that the palatability enhancer in powder form and the palatability enhancer in liquid form are both applied at a temperature less than about 37° C and/or within about 10° C of the ambient temperature.

According to another embodiment of the disclosure, the step b) of applying a second coating comprising (i) a palatability enhancer product in liquid form and (ii) a palatability enhancer product in powder form is performed in 2 sequential steps of i) applying first a palatability enhancer in liquid form and ii) applying next said palatability enhancer in powder form.

In such an embodiment, the method for preparing an animal food product according to the disclosure can further be characterized in that only the step of applying the palatability enhancer in powder form is done at a temperature less than about 37° C and/or within about 10° C of the ambient temperature.

In such an embodiment, the method for preparing an animal food product according to the disclosure can comprise the steps of:

c) providing a dry food composition comprising a first coating, said first coating comprising a fat-containing composition comprising between about 0.5% and about 10% of fat in dry matter (FDM) of the total weight of the fat-containing composition;

d) applying a second coating, preferably by spraying, to the dry food composition, the second coating comprising (i) a palatability enhancer product in powder form and (ii) a palatability enhancer product in powder form; said second coating being performed in 2 sequential steps of i) applying first said palatability enhancer in liquid form and ii) applying next said palatability enhancer in powder form;

characterized in that the palatability enhancer in powder form is applied at a temperature less than about 37° C and/or within about 10° C of the ambient temperature.

In such an embodiment, the method for preparing an animal food product according to the disclosure can comprise the steps of:

a) providing a dry food composition comprising a first coating, said first coating comprising a fat-containing composition comprising between about 0.5% and about 10% of fat in dry matter (FDM) of the total weight of the fat-containing composition;

b) applying a second coating, preferably by spraying, to the dry food composition, the second coating comprising (i) a palatability enhancer product in powder form and (ii) a palatability enhancer product in powder form; said second coating being performed in 2 sequential steps of i) applying first said palatability enhancer in liquid form and ii) applying next said palatability enhancer in powder form;

characterized in that the palatability enhancer in powder form and the palatability enhancer in liquid form are both applied at a temperature less than about 37° C and/or within about 10° C of the ambient temperature.

In such an embodiment, the method for preparing an animal food product according to the disclosure can comprise the steps of:

a) providing a dry food composition comprising a first coating, said first coating comprising a fat-containing composition comprising between about 0.5% and about 10% of fat in dry matter (FDM) of the total weight of the fat-containing composition;

b) applying a second coating, preferably by spraying, to the dry food composition, the second coating comprising a palatability enhancer product in powder form;

c) applying a third coating, preferably by spraying, to the coated dry food composition obtained at the previous step b), the third coating comprising a palatability enhancer product in liquid form;

characterized in that the third coating is applied at a temperature less than about 37° C and/or within about 10° C of the ambient temperature.

According to an embodiment of the disclosure, the dry food composition at **step** a) is characterized in that the fat-containing composition can partially cover the surface of the said dry composition.

It will, however, be readily understood that the second coating step(s) (e.g. coating with one or more palatability enhancer products as described herein) can preferably take advantage of the presence of the fat-containing composition at the surface of the dry food composition.

Hence, according to an embodiment of the disclosure, the dry food composition at **step a)** is characterized in that the fat-containing composition completely covers the surface of the said dry food composition.

The further coating step(s) as described herein can comprise or consist of a partial or complete covering on the surface of the dry food composition at **step a).**

In one example, the dry food composition can be partially covered with a coating such that only part of the dry food composition is covered, and part of the dry food composition is not covered and is thus exposed.

In another example, the dry food composition can be completely covered with a coating such that the entire dry food composition is covered and thus not exposed.

Other coatings can also be applied onto coatings such that a layering of coatings can be present on all or part of the surface of the dry food composition.

For example, the dry food composition can be completely coated with a first coating (e.g. a palatability enhancer product in liquid form), and the first coating can be completely coated with a second coating (e.g. a palatability enhancer product in powder form) such that the first coating and the second coating each form a separate layer.

Alternatively, the dry composition can be partially coated with a first coating, and the first coating can be partially coated with a second coating.

Additional coating, in particular a plurality of coatings, can be added, such as third, fourth, fifth, sixth, up to the desired number of coatings. In one embodiment, each can form a separate layer. In another embodiment, each can form partial layers. In one embodiment, a plurality of coatings can form a single layer, and each layer more can be formed from one or a plurality of coatings.

The present disclosure is not intended to be interpreted as limitative with regards to the number of coatings and layers which are meant to be coated at the surface of the dry food composition.

In another embodiment, the method for preparing an animal food product according to the disclosure can comprise one or more additional coating steps before or after applying the second coating comprising the palatability enhancer products in liquid and powder forms.

For example, the method according to the disclosure can comprise one or more additional coating steps before applying the second coating comprising the palatability enhancer products in liquid and powder forms.

For example, the method according to the disclosure can comprise one or more additional coating steps after applying the second coating comprising the palatability enhancer products in liquid and powder forms.

In another embodiment, the method for preparing an animal food product according to the disclosure does not comprise any step of heating the dry food composition provided at **step a).**

In another embodiment, the method for preparing an animal food product according to the disclosure does not comprise any step of heating the dry food composition before applying the second coating comprising the palatability enhancer product in liquid form and the palatability enhancer product in solid form.

In another embodiment, the method for preparing an animal food product according to the disclosure does not comprise any step of heating the dry food composition above ambient temperature, or alternatively within about 10°C of the ambient temperature.

In another embodiment, the method for preparing an animal food product according to the disclosure does **not** comprise any step of heating the dry food composition at about 37°C, or above a temperature of about 37°C; which may thus be at, or above, 37°C, 38°C, 39°C, 40°C, 41°C, 42°C, 43°C, 44°C, 45°C, 46°C, 47°C, 48°C, 49°C, 50°C, 51°C, 52°C, 53°C, 54°C, 55°C, 56°C, 57°C, 58°C, 59°C, 60°C, 61°C, 62°C, 63°C, 64°C, 65°C, 66°C, 67°C, 68°C, 69°C, 70°C, 71°C, 72°C, 73°C, 74°C, 75°C, 76°C, 77°C, 79°C, 80°C, 81°C, 82°C, 83°C, 84°C, 85°C, 86°C, 87°C, 88°C, 89°C, 90°C, 91°C, 92°C, 93°C, 94°C, 95°C, 96°C, 97°C, 98°C, 99°C, 100°C, 101°C, 102°C, 103°C, 104°C, 105°C, 106°C, 107°C, 108°C, 109°C, and 110°C.

In another embodiment of the method for preparing an animal food product according to the disclosure, the temperature of the provided dry food composition is less than about 37° C. According an embodiment of the method, the temperature of the provided dry food composition is less than about 25° C.

In another embodiment, the method for preparing an animal food product according to the disclosure can comprise applying, preferentially by spraying, to the dry food composition the second coating comprising the palatability enhancer product in liquid form, in particular the olfactive product in liquid form.

Examples of such palatability enhancers which are available in liquid form can comprise: acetic acid; propanoic acid; butyric acid; 3-methylbutyric acid; hexanoic acid; citric acid; tartaric acid; fumaric acid; lactic acid; hexamic acid; acetaldehyde; 3-methyl butanal; pentanal; heptanal; octanal; benzaldehyde, pentanol; 2-ethyl hexanol; 2,3-butanediol, 1,5-octadien-3-ol; acetone, furfural, 2-Methyl-3-furanthiol, 2-Furanmethanethiol, 3-Mercapto-2-pentanone, ethyl furanone, 2,4-Decadienal, 2,3-Butanedione, di-(2-methyl-3-furyl)-disulfid, butanone, 2-heptanone; 1,5-octadien-3-one, 2-pentyl furan; 2-ethylfuran; 2,5-dimethylfuran; 2-[(methyldithio)methyl]-furan; 2-(2-propenyl)-furan, furanmethanol, thymol, carvacrol, 2,3-pentanedione, 4-hydroxy-3(2H)-furanone, 2,5-dimethylpyrazine; ethyl pyrazine, methyl ethyl disulfide; dimethyl trisulfide; methyl-2-methyl-3-furyl disulfide, 2-acetylthiazole.

In an embodiment of the disclosure, such palatability enhancers can comprise water, hydrolysate and oil blend. By the expression "hydrolysates", it must be understood any chemically heterogeneous mixture comprising polypeptides and free amino acids wherein at least 85% of the amino acid content is comprised of oligopeptide chains, polypeptide chains (less than 18 kD), and free amino acids.

In another embodiment, the method for preparing an animal food product according to the disclosure can comprise applying, preferentially by sprinkling, to the dry food composition the second coating comprising the palatability enhancer product in powder (i.e. solid) form, in particular the olfactive product in powder (i.e. solid) form.

Examples of such palatability enhancers which are available in powder form can comprise: proline, hydroxyproline, glutamic acid, aspartic acid, arginine, cystine, glutamine, isoleucine, lysine,Threonine, histidine, alanine, glycine, valine and ornithine, adenosine monophosphate (AMP), guanosine monophosphate (GMP), inosine monophosphate (IMP), uridine monophosphate (UMP), cytidine monophosphate (CMP), xanthosine monophosphate (XMP), Anisole, ethyl vanillin; vanillin, indole, pyrazine, 2-methyl thiophene, 2,6-dimethylpyrazine, Theanine.

In an embodiment of the disclosure, such palatability enhancers can comprise biological extracts, dried yeast, yeast extracts, liver powder, pyrophosphates, phosphates, phospholipids, peptones and combinations thereof and also ingredients in powder like cheese, soy sauce, etc.

In another embodiment of the method for preparing an animal food product according to the disclosure, the palatability enhancer product, for example the olfactive product, can be selected from flavours, flagrances, chemical molecules, aromas, extracts, digest, hydrolysates, protein ingredient, and carbohydrate food.

Non-volatile compounds relate to taste, (i.e. they are detected on the tongue), volatile compounds relate to aroma, and are compounds that affect the smell of the food, (i.e. compounds detected in the nose); and some compounds fall within both categories. The combination of both taste and aroma gives the food its flavour. Flavour, as used herein, therefore encompasses both the taste and aroma of a foodstuff.

In another embodiment, the palatability enhancer product according to the disclosure can be, or can comprise, one or more non-volatile compounds. In another embodiment, the palatability enhancer product can be, or can comprise, one or more volatile compound(s). In another embodiment, the palatability enhancer product can be, or can comprise, a mixture of one or more volatile compound(s) and of one or more non-volatile compound(s).

In another embodiment of the method for preparing an animal food product according to the dislcosure, the palatability enhancer product can be an olfactive product, and the palatability enhancer product in liquid form can be the same as the palatability enhancer product in powder form.

In another embodiment, the palatability enhancer product can be an olfactive product selected from acetic acid, propanoic acid, butyric acid, 3-methylbutyric acid, hexanoic acid, citric acid, tartaric acid, fumaric acid, lactic acid, hexamic acid, butyl hexanoate, heptyl formate, ethyl decanoate, ethyl caprylate, acetaldehyde, 3-methyl butanal, pentanal, heptanal, octanal, benzaldehyde, anisole, pentanol, 2-ethyl hexanol, 2,3-butanediol, thymol, carvacrol, 1,5-octadien-3-ol, acetone, 2,3-pentanedione, 2-piperidione, 2-heptanone, 1,5-octadien-3-one, ethyl vanillin, vanillin, pyrazine, methyl pyrazine, methyl pyrazine, 2,5-dimethylpyrazine, 2,6-dimethylpyrazine, 2-methyl-6-(methio)-pyrazine, 2-ethyl-3,5-dimethylpyrazine, 2-ethyl-5-methyl pyrazine, 2-ethyl-6-methylpyrazine, ethyl pyrazine, 2-pentyl furan, 2-ethylfuran, 2,5-dimethylfuran, 2-[(methyldithio)methyl]-furan, 2-(2-propenyl)-furan, 2-furanmethanol, 4-hydroxy-3(2H)-furanone and alkyl-substituted 4-hydroxy-3(2H)-furanone compounds, indole, furfural, sulphurol, 2-acetylpyridine, 2,3-dihydrothiophene, 2-methyl thiophene, 3-methyl thiophene, 2,5-dimethyl thiophene, dihydro-2-methyl-3(2H)- thiophene, benzo[b]thiophene-4-ol, 5-methyl-2-thiophenecarboxaldehyde, methyl ethyl disulfide, dimethyl trisulfide, methyl-2-methyl-3-furyl disulfide, 2-methyl-1-ethyl pyrrolidine, 2-acetylthiazole, 4-methylthiazole, 2-ethylthiazole, theanine, glutamine, tea, 2-methyl-3-furanthiol, 2-furanmethanethiol, 3-mercapto-2-pentanone, ethyl furanone, 2,4-decadienal, 2,3-butanedione, di-(2-methyl-3-furyl)-disulfide, proline, hydroxyproline, glutamic acid, aspartic acid, arginine, cystine, glutamine, isoleucine, lysine, threonine, histidine, alanine, glycine, valine, ornithine, adenosine monophosphate (AMP), guanosine monophosphate (GMP), inosine monophosphate (IMP), uridine monophosphate (UMP), cytidine monophosphate (CMP), xanthosine monophosphate (XMP), and a mixture thereof.

In another embodiment, the palatability enhancer product can comprise a live microorganism, or fraction thereof.

The dry food composition is characterized by a moisture content of less than about 12% by weight, relative to its total weight.

According to some embodiments, the dry food composition is characterized by a moisture content which is less than about 12%, 11%, 10%, 9%, 8%, 7%, 6%, or less than about 5% by weight relative to the total weight of the dry food composition.

In any case, while the dry food composition which is considered in the method of preparation is - by definition - a dry product, it will be readily understood herein that the prepared animal food product according to the disclosure is not itself necessarily dry.

In some embodiments, coating of the dry food composition with a plurality of palatability enhancer products can increase the overall moisture of the animal food product at or above about 12% by weight.

In some embodiments, the prepared animal food product can be a dry, semimoist or wet animal food product.

In another preferred, embodiment of the method according to the disclosure, the prepared animal food product can be a dry animal food product. Hence, according to said embodiment, the disclosure relates to a method for preparing a dry animal food product, comprising the steps of:

a) providing a dry food composition comprising a first coating, said first coating comprising a fat-containing composition comprising between about 0.5% and about 10% of fat in dry matter (FDM) of the total weight of the fat-containing composition;
b) applying a second coating, preferably by spraying, to the dry food composition, the second coating comprising (i) a palatability enhancer product in liquid form and (ii) a palatability enhancer product in powder form;

characterized in that the second coating is applied at a temperature less than about 37° C and/or within about 10° C of the ambient temperature.

According to said embodiments, the prepared dry animal food product can be, for example, a dry animal food product having a moisture content of less than about 12% by weight, relative to the total weight of the food composition, for example less than 11%, 10%, 9%, 8%, 7%, 6%, or less than 5% by weight relative to the total weight of the animal food product.

According to an embodiment, the fat-containing composition can comprise at least about 0.5% of fat in dry matter (FDM) of the total weight of the fat-containing composition, and less than about 10%, 9%, 8%, 7%, 6%, or less than 5% of FDM of the total weight of the fat-containing composition.

According to an embodiment, the fat-containing composition can comprise at least about 1%, 2%, 3% or at least 4% of fat in dry matter (FDM) of the total weight of the fat-containing composition, and less than about 8% of FDM of the total weight of the fat-containing composition.

According to an embodiment, the fat-containing composition can comprise one or more fat component selected from poultry fat, chicken fat, turkey fat, pork fat, lard, tallow, beef fat, rind fat, vegetable oils, corn oil, soy oil, cottonseed oil, palm oil, algae oil, copra, insect oil, ostrich, palm kernel oil, linseed oil, canola oil, rapeseed oil, fish oil, menhaden oil, anchovy oil, and/or olestra.

According to an embodiment, the fat-containing composition can comprise one or more fat component selected from rind fat, pork fat, poultry fat and lard fat.

For example, and without limitation, dry food compositions and animal food products according to the present disclosure can include particulates; pellets; pieces of pet food, dehydrated meat, meat analog, vegetables, and combinations thereof; and pet snacks, such as meat or vegetable jerky, rawhide, and biscuits.

According to an embodiment of the disclosure, the dry food composition can be in the form of a kibble.

According to another non-mutually exclusive, embodiment, the dry food composition can comprise a core and a coating.

According to an embodiment of the disclosure, the dry food composition can comprise of a pre-coated kibble comprising a core and a first coating ; for example from 85% to 99% core in weight and from 1% to 15% coating in weight, for example from 92% to 98% core and from 2% to 8% coating.

In one embodiment, the prepared animal food product may consist of a coated kibble comprising a dry food composition and a second coating ; for example from 80% to 97% dry food composition in weight and from 3% to 20% second coating in weight, for example from 90% to 95% dry food composition and from 5% to 10% second coating.

According to an embodiment of the disclosure, the core can comprise from about 45% to about 55% carbohydrate source, from about 35% to about 45% protein source, from about 0.1% to about 5% fat source, and from about 5% to about 10% other ingredients. The coating can comprise from about 65% to about 75% protein component, a non-limiting example of which can be chicken by-product meal, from about 5% to about 10% binder component, a non-limiting example of which can be egg white, high lactose whey by-product, whey protein isolate or chicken broth, from about 0.5% to about 10% fat component, a non-limiting example of which can be chicken fat, and from about 1% to about 10% palatant component, a non-limiting example of which can be chicken liver digest. According to said embodiment, the coated kibble can be the prepared dry animal food product.

According to an embodiment, the dry food compositions and prepared animal food products according to the disclosure can be nutritionally complete.

A **second** aspect of the present disclosure relates to a kit comprising:

- A kibble comprising a core dry food composition suitable for animal consumption, and an external coating comprising a fat-containing composition comprising at least about 0.5% of fat in dry matter (FDM) of the total weight of the fat-containing composition, and less than about 10% of FDM,
- A palatability enhancer product in powder form, and
- A palatability enhancer product in liquid form.

A third aspect of the present invention disclosure relates to an animal food product obtainable by the method according to the present disclosure, said animal food product being in the form of a kibble. Another aspect of the present disclosure relates to an animal food product obtained by the method according to the present disclosure, said animal food product being in the form of a kibble.

According to another embodiment, the present disclosure relates to an animal food product comprising an external coating comprising at least i) a fat-containing composition comprising at least about 0.5% of fat in dry matter (FDM) of the total weight of the fat-containing composition, and less than about 10% of FDM, ii) a palatability enhancer product in powder form, and iii) a palatability enhancer product in liquid form.

According to an embodiment, the animal food product comprising the external coating is a dry animal food product.

According to an embodiment, the animal food product comprising the external coating is characterized in that it comprises:

- A first coating comprising the fat-containing composition;
- A second coating comprising the palatability enhancer product in powder form and the palatability enhancer in liquid form.

According to an embodiment, the animal food product comprising the external coating is characterized in that it comprises:

- A first coating comprising the fat-containing composition;
- A second coating comprising the palatability enhancer product in powder form;
- A third coating comprising the palatability enhancer in liquid form.

According to an embodiment, the animal food product comprising the external coating is characterized in that it comprises:

- A first coating comprising the fat-containing composition;
- A second coating comprising the palatability enhancer product in liquid form;
- A third coating comprising the palatability enhancer in powder form.

A **fourth** aspect of the present disclosure relates to a method for feeding an animal, comprising a step of administering to said animal an animal food product according to the present disclosure.

## Definitions

The terms used in the present description generally have their ordinary meaning in this field, in the context of the disclosure and in the specific context in which each term is used. Certain terms are defined below in order to provide additional information for describing the compositions and the methods of the present description and the manner of manufacture and use thereof.

As used in the description and the accompanying claims, the singular forms "a", "the" include the plural unless the context clearly stipulates the contrary. Thus, for example, reference to "a compound" includes mixtures of compounds.

The terms "about" or "approximately" signify that the particular value, determined by ordinary skill in the art, is within an acceptable range of error, which will partly depend on the manner in which the value is measured or determined, i.e., the limits of the system of measurement. For example, "about" may signify in a range of three or more than three standard deviations, depending on the practice in the field in question. Alternatively, "about" may signify a range of about 10% of a given value. Furthermore, in particular with regard to systems or processes, the term may signify an order of magnitude preferably of five times, and more preferably two times, a value.

As used herein, the terms "companion animal" or "pet" mean a domestic animal including, but not limited to domestic dogs, cats, horses, cows, ferrets, rabbits, pigs, rats, mice, gerbils, hamsters, horses, and the like. Domestic dogs and cats are particular examples of pets.

As used herein, the terms "animal feed/food", "animal feed/food compositions", "animal feed/food kibble", "pet food", or "pet food composition" all mean a composition intended for ingestion by a pet. Pet foods can include, without limitation, nutritionally complete compositions suitable for daily feed, such as kibbles, as well as supplements and/or treats, which can or not be nutritionally balanced.

As used in the present description, the terms "comprise", "comprising" or any other variant of these terms, are intended to cover a nonexclusive inclusion, so that a method, a composition or a material that comprises a list of elements does not comprise only these elements but may include other elements that are not expressly enumerated or inherent in this method, this composition or this material.

As used herein, the term "nutritionally complete" means that the composition, such as pet food, has known required nutrients to sustain life in proper amounts and proportion based on recommendations of recognized authorities, including governmental agencies, such as, but not limited to, Unites States Food and Drug Administration's Center for Veterinarian Medicine, the American Feed Control Officials Incorporated, in the field of pet nutrition, except for the additional need for water

As used herein, the term "coating" means a partial or complete covering of the pre-made dry food composition, e.g. for pre-made dry food compositions in the form of a kibble, that covers at least a portion of a surface, for example on the surface of a pre-made dry food compositions characterized by the presence of a core and a shell at least partially covering said core. In one example, a core may be partially covered with a coating such that only part of the core is covered, and part of the core is not covered and is thus exposed. In another example, the core may be completely covered with a coating such that the entire core is covered and thus not exposed. Therefore, a coating may cover from a negligible amount up to the entire surface. A coating can also be coated onto other coatings such that a layering of coatings can be present. For example, a core can be completed coated with coating A, and coating A can be completely coated with coating B, such that coating A and coating B each form a layer.

As used herein, the term "core", or "core matrix", means the particulate pellet of a kibble and is typically formed from a core matrix of ingredients and has a moisture, or water, content of less than about 12% by weight. The particulate pellet may be coated to form a coating on a core, which may be a coated kibble. The core may be without a coating or may be with a partial coating. Pre-made dry food compositions, for example kibbles and/or core matrices of a kibble, can comprise farinaceous material, proteinaceous material, and mixtures and combinations thereof. For example, the core can comprise a core matrix of protein, carbohydrate, and fat.

As used herein, the terms "palatability" or "palatable" refer to being desirable to the palate or taste. Further, the terms "palatability" or "palatable" as used herein refer to the extent to which an animal food product, in particular a pet food product, appeals to the palate or taste of the animal. This is suitable measured by feeding tests, e.g., difference tests or ranking tests. In certain embodiments, "palatability" can mean a relative preference for one food product over another. For example, when an animal shows a preference for one of two or more food products, the preferred food product is more "palatable", and has "enhanced palatability" or "increased palatability". In certain embodiments, the relative palatability of one food product compared to one or more other food products can be determined, for example, in side-by-side, free-choice comparisons, e.g., by relative consumption of the food products, or other appropriate measures of preference indicative of palatability

The term *"palatability enhancer"* encompasses *"olfactive products"* and *"tastants"*.

The terms *"tastant"* and *"olfactive product"* include any compound, composition, formulation, or other material useful for enhancing the attractiveness and palatability of a comestible composition such as a food composition, supplement, medicament, or the like. Thus, such olfactive product may contribute to initial appeal, continued consumption, or repeated presentation aspects of palatability, or any combination thereof. Such product can include liquid and/or powder palatants.

Tastants relate to those compound(s), composition(s), formulation(s), or other material, which can produce a taste sensation by activating taste receptor cells(TRCs), which may thus comprise one or more of the five basic tastes (sweet, bitter, umami sour and salty). Such tastants can be organic or inorganic and are generally water-soluble.

Examples of tastants, according to the disclosure, can be selected from (-)-Haematoxylin, (+)-4β-hydroxyhernandulcin, (+)-Dihydroquercetin 3-acetate, (+)-Haematoxylin, (±)-chiro-inositol, (1-{4-[(hydroxyimino)methyl]cyclohex-3-en-1-yl}ethylidene)(methoxy)amine, (2R,4R)-monatin (monosodium salt), (2S,4aS,7R,8aS)-(-)-2-(3'-Hydroxy-4'-methoxyphenyl)-9,9-dimethyl tetrahydro-5H-4a,7-methano-4H-1,3-benzoxathiane, (4-bromophenyl)sulfamic acid sodium salt, (E)-3-(4-methoxybenzoyl)acrylic acid, (NE)-N-[(4-methylcyclohexa-1,4-dien-1-yl)methylidene]hydroxylamine, (NE)-N-[[4-(1-methoxyethyl)cyclohexa-1,3-dien-1-yl]methylidene]hydroxylamine, (NE)-N-[[4-(1-methoxyethyl)cyclohexa-1,4-dien-1-yl]methylidene]hydroxylamine, [5,7-dihydroxy-2-(4-hydroxyphenyl)-6-methoxy-4-oxo-2,3-dihydrochromen-3-yl] acetate, 1,2-Butanediol, 1,2-Propanediol, 1,3-Benzodioxan derivative, 1,3-Benzodioxane isovanillyl, 1,3-Cyclohexadiene, 1,4-dimethyl-, 1,3-Dithiane-5-ylsulfamic acid sodium salt, 1',4',6'-Trichloro sucrose, 1,4-Anhydro-glucitol, 1,4-Anhydro-mannitol, 1,4-Anhydro-ribitol, 1,4-Anhydro-xylitol, 1,4-Benzodioxane isovanillyl, 1',4'-Dichloro sucrose, 1,5-Anhydro-galactitol, 1,5-Anhydro-glucitol, 1,5-Anhydro-mannitol, 1,5-Dimethyl-2-phenyl-3-oxo-4-pyrazolidinylsulfamic acid sodium salt, 1',6'-Dichloro sucrose, 1,6-Dichloro-1,6-deoxy-D-fructofuranose, 1',6'-Di-O-Methyl sucrose, 1,6-Di-S-1,6-dithio-D-fructofuranose, 1,9-Dicarboxylic acid, 2,3,4,4a,9,9a-hexahydro-1,4a-dimethyl-1H-fluorene, 1-{4-[(hydroxyimino)methyl]cyclohex-3-en-1-yl}ethan-1-one, 1-Aminocyclobutane-1-carboxylic acid, 1'-Chloro sucrose, 1-Cyclohexane-1-carboxaldehyde oxime, 1-Cyclopentene-1-carboxaldehyde oxime, 1'-Deoxy sucrose, 1H-indazol-6-yl guanidineacetic acid derivative 1, 1H-indazol-6-yl guanidineacetic acid derivative 2, 1-Methyl-1,3-cyclohexadiene, 1-Methylcyclohexene, 1'-O-methyl sucrose, 1-Phenylsulfonyl-3,4,6-trimethyl-3-cyclohexenecarboxylic acid, 1-Phenylsulfonyl-3,4-dimethyl-3-cyclohexenecarboxylic acid, 1-Phenylsulfonyl-4,6-dimethyl-3-cyclohexenecarboxylic acid, 1-Phenylsulfonyl-4-methyl-3-cyclohexenecarboxylic acid, 2-(3,4-dihydroxybenzoyl)benzoic acid, 2-(3,4-dihydroxyphenyl)-3,5,7-trihydroxy-6-methoxy-3,4-dihydro-2H-1-benzopyran-4-one, 2-(3,4-dihydroxyphenyl)-5,7-dihydroxy-6-methoxy-4-oxo-3,4-dihydro-2H-1-benzopyran-3-ylacetate,2-(3-hydroxy-4-methoxybenzoyl)benzoic acid, 2-(3-hydroxy-4-methoxyphenoxymethyl)benzoic acid, 2-(3-hydroxy-4-methoxyphenyl)-1,3-benzodioxan-4-one, 2-(3-hydroxy-4-methoxyphenyl)-1,3-benzodioxole, 2-(3-hydroxy-4-methoxyphenyl)-1,3-benzothioxan-4-one, 2-(3-hydroxy-4-methoxyphenyl)-1,3-benzoxathiole, 2-(3-hydroxy-4-methoxyphenyl)-2,3-dihydro-1,4-benzodithiine, 2-(3-hydroxy-4-methoxyphenyl)-2,3-dihydro-1,4-benzoxathiin-6-ol, 2-(3-hydroxy-4-methoxyphenyl)-2,3-dihydro-1,4-benzoxathiine, 2-(3-hydroxy-4-methoxyphenyl)-2,3-dihydro-1,4-benzoxathiine S,S-Dioxide, 2-(3-hydroxy-4-methoxyphenyl)-2,4-dihydro-1,3-benzodithiin-5-ol, 2-(3-hydroxy-4-methoxyphenyl)-2,4-dihydro-3,1-benzoxathiin-5-ol, 2-(3-hydroxy-4-methoxyphenyl)-3,4-dihydro-2H-1-benzothiopyran, 2-(3-hydroxy-4-methoxyphenyl)-4H-1,3-benzodithiine, (R)-form, 2-(3-hydroxy-4-methoxyphenyl)-4H-1,3-benzodithiole , 2-(3-hydroxy-4-methoxyphenyl)-4H-1,3-benzoxathiine, 2-(3-mercapto-4-methoxyphenyl)-4H-3,1-benzoxathiine, 2-(4-chlorobenzoyl)benzoic acid, 2-(4-ethoxybenzoyl)benzoic acid, 2-(4-ethylphenylsulfonyl)-3-methylbutanoic acid, 2-(4-hydroxybenzoyl)benzoic acid, 2-(4-methoxybenzoyl)benzoic acid, 2-(4-methoxyphenylthio) benzoic Acid S-Oxide, 2-(4-methylbenzoyl)benzoic acid, 2-(4-methylphenylsulfonyl)-3-methylbutanoic acid, 2-(benzenesulfonyl)-3-methylpentanoic acid, 2,2-Dimethyl-1-phenylsulfonylcyclopropanecarboxylic acid enantiomer 1, 2,2-Dimethyl-1-phenylsulfonylcyclopropanecarboxylic acid enantiomer 2, 2',3-Dihydroxy-4-ethoxydihydrochalcone, 2',3-Dihydroxy-4-methoxydihydrochalcone, 2,4,6-Trihydroxy-3-[3-(3-hydroxy-4-methoxyphenyl)-1-oxopropyl]-benzoic acid, 2,6-Bis(trifluoromethyl)-4-pyridylsulfamic acid sodium salt, 2-[(2-{4-[(hydroxyimino)methyl]cyclohex-3-en-1-yl}propan-2-yl)oxy]acetic acid, 2-[3-(4-nitrophenoxycarboxy)phenyl]-3,1-benzoxathiane , 2-[3-(4-nitrophenylcarbamoyloxy)-4-methoxy)phenyl]-3,1-benzodioxane , 2-[3-(4-nitrophenylcarbamoyloxy)-4-methoxyphenyl]-3,1- benzoxathiane, 2-[3-(4-nitrophenylcarbonylmethoxy)-4-methoxyphenyl]-3,1-benzoxathiane , 2-[4-(dimethylamino)benzoyl]benzoic acid, 2-Amino-2-{[1-oxo-1-(propan-2-yloxy)propan-2-yl]carbamoyl}acetic acid, L-, 2-Aminobenzoic acid, 2-Chloropyrid-5-yl guanidineacetic acid derivative, 2-Cyanopyrid-5-yl guanidineacetic acid derivative 1, 2-Cyanopyrid-5-yl guanidineacetic acid derivative 2, 2-Cyanopyrid-5-yl guanidineacetic acid derivative 3, 2-Cyclopentyl-2-phenylsulfonylethanoic acid, 2-Deoxyfructose, 2-Ethoxy-5-(2-phenylethyl)phenol, 2-Hydroxy-(3-hydroxy-4-methoxyphenyl)-acetophenone, 2-Methoxy-5 -(3-phenylpropyl)phenol, 2-Methoxy-5 -(phenyl sulfanylmethyl)phenol, 2-Methoxy-5 - [2-(1,3-benzodioxole-5-yl)ethyl]phenol, 2-Methoxy-5-[2-(2-methoxyphenyl)ethyl]phenol, 2-Methoxy-5-[2-(2-methylphenyl)ethyl]phenol, 2-Methoxy-5-[2-(3-methoxyphenyl)ethyl]phenol, 2-Methoxy-5-[2-(3-methylphenyl)ethyl]phenol, 2-Methyl-2-butene, 2-Naphthyl guanidineacetic acid derivative, 2-Phenylsulfonyl-2,3-dimethylbutanoic acid, 2-Phenylsulfonyl-3-methylbutanoic acid, 2-Phenylsulfonylbutanoic acid, 3-({[4-(ethoxycarbonyl)phenyl]carbamothioyl}amino)-3-[(1-methoxy-1-oxo-3-phenylpropan-2-yl)carbamoyl]propanoic acid, 3-({[4-(ethoxycarbonyl)phenyl]carbamoyl}amino)-3-[(1-methoxy-1-oxo-3-phenylpropan-2-yl)carbamoyl]propanoic acid, 3-({1-[(adamantan-1-yl)formamido]ethyl}carbamoyl)-3-aminopropanoic acid, 3-(2,4-dihydro-3,1-benzoxathiin-2-yl)-6-methoxy-2-[2-(4-nitrophenyl)ethenyl]phenol, 3-(2H-1,3-benzodioxol-5-yl)-3-{[(4-cyanophenyl)carbamoyl]amino}propanoic acid, 3-(3-carbamoyl-2,4,6-tribromophenyl)propionic acid, 3-(3-hydroxy-4-methoxyphenyl) isochroman, 3-(3-hydroxy-4-methoxyphenyl)-1-(3-carboxyphenyl)propan-1-one,3-(3-Hydroxy-4-methoxyphenyl)-2,3-dihydro-1,4-benzoxathiine, (R)-form, 3-(3-Hydroxy-4-methoxyphenyl)-2,3-dihydro-1,4-benzoxathiine, (S)-form, 3-(3-Hydroxy-4-methoxyphenyl)-3,4-dihydro-2H-1-benzopyran, 3-(4-chloroanthraninoyl)-DL-alanine, 3-(4H-3,1-benzoxathiin-2-yl)phenol, 3,3,3-Trimethylpropyl carbosulfamate, 3',4'-Dihydroxyphenyl-3,1-benzoxathiane , 3,4-Methylenedioxyphenyl guanidineacetic acid derivative, 3,5-Dibromo-2-pyridylsulfamic acid sodium salt, 3,5-Dichlorophenyl guanidineacetic acid derivative 1, 3,5-Dichlorophenyl guanidineacetic acid derivative 2, 3,5-Dichlorophenyl guanidineacetic acid derivative 3, 3,5-Dichlorophenyl guanidineacetic acid derivative 4, 3,5-Dichlorophenyl guanidineacetic acid derivative 5, 3,5-Dichlorophenyl guanidineacetic acid derivative 6, 3,5-Dichlorophenyl guanidineacetic acid derivative 7, 3,5-Dichlorophenyl guanidineacetic acid derivative 8, 3,5-Dichlorophenyl guanidineacetic acid derivative 9, 3',5-Dihydroxy-4'-ethoxyflavanone, 3',5-Dihydroxy-4'-methoxyflavanone, 3',5-Dihydroxy-4'-propoxyflavanone, 3-[(1,3-diethoxy-1,3-dioxopropan-2-yl)carbamoyl]-3-{[(4-nitrophenyl)carbamoyl]amino}propanoic acid, 3-[(1,3-dimethoxy-1,3-dioxopropan-2-yl)carbamoyl]-3-{[(4-nitrophenyl)carbamoyl]amino}propanoic acid, 3-[(1-cyclohexyl-2-methoxy-2-oxoethyl)carbamoyl]-3-{[(4-nitrophenyl)carbamoyl]amino}propanoic acid, 3-[(1-ethoxy-1-oxopropan-2-yl)carbamoyl]-3-{[(4-nitrophenyl)carbamoyl]amino}propanoic acid, 3-[(1-methoxy-1-oxo-3-phenylpropan-2-yl)carbamoyl]-3-({4-(methoxycarbonyl)phenyl]carbamoyl} amino)propanoic acid, 3-[(1-methoxy-1-oxo-3-phenylpropan-2-yl)carbamoyl]-3-({[4-(methylsulfamoyl)phenyl]carbamoyl}amino)propanoic acid, 3-[(1-methoxy-1-oxo-3-phenylpropan-2-yl)carbamoyl]-3-{[(4-nitrophenyl)carbamothioyl]amino}propanoic acid, 3-[(1-methoxy-1-oxo-3-phenylpropan-2-yl)carbamoyl]-3-{[(4-nitrophenyl)carbamoyl]amino}propanoic acid, 3-[(1-methoxy-1-oxohexan-2-yl)carbamoyl]-3-{[(4-nitrophenyl)carbamoyl]amino}propanoic acid, 3-[(1-methoxy-1-oxopentan-2-yl)carbamoyl]-3-{[(4-nitrophenyl)carbamoyl]amino}propanoic acid, 3-[(1-methoxy-1-oxopropan-2-yl)carbamoyl]-3-{[(4-nitrophenyl)carbamoyl]amino}propanoic acid, 3-[(3-cyclohexyl-1-methoxy-1-oxopropan-2-yl)carbamoyl]-3-{[(4-nitrophenyl)carbamoyl]amino}propanoic acid, 3-[(4-nitrophenoxy)carbonylamino]propanoic acid, 3-{[(4-acetylphenyl)carbamoyl]amino}-3-(1-methoxy-1-oxo-3-phenylpropan-2-yl)carbamoyl]propanoic acid, 3-{[(4-carbamoylphenyl)carbamoyl]amino}-3-(3-hydroxyphenyl)propanoic acid, 3-{[(4-carbamoylphenyl)carbamoyl]amino}-3-(pyridin-3-yl)propanoic acid, 3-{[(4-cyanophenyl)carbamothioyl]amino}-3-({1-[(dicyclopropylmethyl)carbamoyl]ethyl}carbamoyl)propanoic acid, 3-{[(4-cyanophenyl)carbamothioyl]amino}-3-[(1-phenylethyl)carbamoyl]propanoic acid, 3-{[(4-cyanophenyl)carbamothioyl]amino}-3-phenylpropanoic acid, 3-{[(4-cyanophenyl)carbamoyl]amino}-3-({1-[(dicyclopropylmethyl)carbamoyl]ethyl}carbamoyl)propanoic acid, 3-{[(4-cyanophenyl)carbamoyl]amino}-3-(2,3-dihydro-1H-inden-5-yl)propanoic acid, 3-{[(4-cyanophenyl)carbamoyl]amino}-3-(2-nitrophenyl)propanoic acid, 3-{[(4-cyanophenyl)carbamoyl]amino}-3-(3-hydroxyphenyl)propanoic acid, 3-{[(4-cyanophenyl)carbamoyl]amino}-3-(3-methoxyphenyl)propanoic acid, 3-{[(4-cyanophenyl)carbamoyl]amino}-3-(3-nitrophenyl)propanoic acid, 3-{[(4-cyanophenyl)carbamoyl]amino}-3-(4-ethylphenyl)propanoic acid, 3-{[(4-cyanophenyl)carbamoyl]amino}-3-(4-hydroxyphenyl)propanoic acid, 3-{ [(4-cyanophenyl)carbamoyl]amino}-3-(4-methoxyphenyl)propanoic acid, 3-{[(4-cyanophenyl)carbamoyl]amino}-3-(4-nitrophenyl)propanoic acid, 3-{[(4-cyanophenyl)carbamoyl]amino}-3-(naphthalen-2-yl)propanoic acid, 3-{[(4-cyanophenyl)carbamoyl]amino}-3-(quinolin-3-yl)propanoic acid, 3-{[(4-cyanophenyl)carbamoyl]amino}-3-[(1,1,1-trifluoro-3-methoxy-3-oxopropan-2-yl)carbamoyl]propanoic acid, 3-{[(4-cyanophenyl)carbamoyl]amino}-3-[(1-methoxy-1-oxopropan-2-yl)carbamoyl]propanoic acid, 3-{[(4-cyanophenyl)carbamoyl]amino}-3-[(1-phenylethyl)carbamoyl]propanoic acid, 3-{[(4-cyanophenyl)carbamoyl]amino}-3-[(2-methoxy-2-oxo-1-phenylethyl)carbamoyl]propanoic acid, 3-{[(4-cyanophenyl)carbarnoyl]arnino}-3-[(3-hydroxy-1-rnethoxy-1-oxopropan-2-yl)carbamoyl]propanoic acid, 3-{[(4-cyanophenyl)carbarnoyl]arnino}-3-[(3-hydroxy-1-oxo-1-propoxypropan-2-yl)carbamoyl]propanoic acid, 3-{[(4-cyanophenyl)carbamoyl]amino}-3-{[1-methoxy-1,3-dioxo-3-({1,3,3-trimethylbicyclo[2.2.1]heptan-2-yl}oxy)propan-2-yl]carbamoyl}propanoic acid, 3-{[(4-cyanophenyl)carbamoyl]amino}-4-phenylbutanoic acid, 3-{[(4-cyanophenyl)carbamoyl]amino}-5-phenylpentanoic acid, 3-{[(4-fluorophenyl)carbarnoyl]arnino}-3-[(1-rnethoxy-1-oxo-3-phenylpropan-2-yl)carbamoyl]propanoic acid, 3-{[(4-nitrophenyl)carbamoyl]amino}-3-[(1-oxo-1-propoxypropan-2-yl)carbamoyl]propanoic acid, 3-{ [(6-carbamoylpyridin-3-yl)carbamoyl]amino}-3-(pyridin-3-yl)propanoic acid, 3-{ [(6-carbamoylpyridin-3-yl)carb amoyl] amino } -3 -phenylpropanoic acid, 3-{[(6-cyanopyridin-3-yl)carbamoyl]amino}-3-(pyridin-3-yl)propanoic acid, 3-{[1-(acetyloxy)-3-hydroxybutan-2-yl]carbamoyl}-3-aminopropanoic acid, 3-{[1-(acetyloxy)-3-hydroxypropan-2-yl]carbamoyl}-3-aminopropanoic acid, 3-{[1-(acetyloxy)-3-methylbutan-2-yl]carbamoyl}-3-aminopropanoic acid, 3-{[1-(acetyloxy)pentan-2-yl]carbamoyl}-3-aminopropanoic acid, 3-{[1-(acetyloxy)propan-2-yl]carbamoyl}-3-aminopropanoic acid, 3-{[2-(acetyloxy)ethyl]carbamoyl}-3-aminopropanoic acid, 3-{[3-(acetyloxy)-1-methoxy-1-oxopropan-2-yl]carbamoyl}-3-aminopropanoic acid, 3-Amino-3-({1-[(1,1-dicyclopropylethyl)carbamoyl]ethyl}carbamoyl)propanoic acid, 3-Amino-3-({1-[(2,2,3,4,4-pentamethylpentan-3 -yl)carbamoyl] ethyl} carbamoyl)propanoic acid, 3 -Amino-3-({1-[(2,2,4,4-tetrarnethyl-1,1-dioxo-1lambda6-thietan-3-yl)carbamoyl]ethyl}carbamoyl)propanoic acid, 3-Amino-3-({1-[(2,2,4,4-tetramethyl-1-oxo-1lambda4-thietan-3-yl)carbamoyl]ethyl}carbamoyl)propanoic acid, 3-Amino-3-({1-[(2,2,4,4-tetramethylcyclobutyl)carbamoyl]ethyl}carbamoyl)propanoic acid, 3-Amino-3-({1-[(2,2,6,6-tetramethylcyclohexyl)carbamoyl]ethyl}carbamoyl)propanoic acid, 3-Amino-3-({1-[(2,2-dimethylpropanoyl)oxy]propan-2-yl}carbamoyl)propanoic acid, 3-Amino-3-({1-[(2,3,4-trimethylpentan-3-yl)carbamoyl]ethyl}carbamoyl)propanoic acid, 3-Amino-3-({1-[(2,6-dimethylcyclohexyl)formamido]ethyl}carbamoyl)propanoic acid, 3-Amino-3-({1-[(2,6-dimethylcyclohexyl)oxy]-3-methoxy-1,3-dioxopropan-2-yl}carbamoyl)propanoic acid, 3-Amino-3-({1-[(2-cyclopropyl-3,3-dimethylbutan-2-yl)carbamoyl]ethyl}carbamoyl)propanoic acid, 3-Amino-3-({1-[(2-cyclopropylpropan-2-yl)carbamoyl]ethyl}carbamoyl)propanoic acid, 3-Amino-3-({1-[(2-ethylbutanoyl)oxy]propan-2-yl}carbamoyl)propanoic acid, 3-Amino-3-({ 1-[(2-methylbutanoyl)oxy]propan-2-yl}carbamoyl)propanoic acid, 3-Amino-3-({ 1-[(2-methylprop-2-enoyl)oxy]propan-2-yl}carbamoyl)propanoic acid, 3-Amino-3-({ 1-[(2-methylpropanoyl)oxy]butan-2-yl}carbamoyl)propanoic acid, 3-Amino-3-({1-[(2-methylpropanoyl)oxy]propan-2-yl}carbamoyl)propanoic acid, 3-Amino-3-({ 1-[(3-hydroxy-2,2,4,4-tetramethylcyclobutyl)carbamoyl]ethyl}carbamoyl)propanoic acid, 3-Amino-3-({ 1-[(3-methylbutanoyl)oxy]propan-2-yl}carbamoyl)propanoic acid, 3-Amino-3-({1-[(3-methylpentan-3-yl)carbamoyl]ethyl}carbamoyl)propanoic acid, 3-Amino-3-({ 1-[(ethoxycarbonyl)oxy]-3-methoxy-1,3-dioxopropan-2-yl}carbamoyl)propanoic acid, 3-Amino-3-({1-ethoxy-3-[(2-methylcyclohexyl)oxy]-1,3-dioxopropan-2-yl}carbamoyl)propanoic acid, 3-Amino-3-({ l-hydroxy-3-[(2-methylbutanoyl)oxy]propan-2-yl}carbamoyl)propanoic acid, 3-Amino-3-({ 1-hydroxy-3-[(2-methylpropanoyl)oxy]propan-2-yl}carbamoyl)propanoic acid, 3-Amino-3-({ 1-hydroxy-3-[(3-methylbutanoyl)oxy]propan-2-yl}carbamoyl)propanoic acid, 3-Amino-3-({ 1-methoxy-1,3-dioxo-3-[(3,3,5-trimethylcyclohexyl)oxy]propan-2-yl}carbamoyl)propanoic acid, 3-Amino-3-({1-methoxy-3-[(2-methylcyclohexyl)oxy]-1,3-dioxopropan-2-yl}carbamoyl)propanoic acid, cis-form, 3-Amino-3-({1-methoxy-3-[(2-methylcyclohexyl)oxy]-1,3-dioxopropan-2-yl}carbamoyl)propanoic acid, trans-form, 3-Amino-3-({1-methoxy-3-[(2-methylpropanoyl)oxy]-1-oxopropan-2-yl}carbamoyl)propanoic acid, 3-Amino-3-({ 1-methoxy-3-[(3-methylcyclohexyl)oxy]-1,3-dioxopropan-2-yl}carbamoyl)propanoic acid, 3-Amino-3-({ 1-methoxy-3-[(4-methylcyclohexyl)oxy]-1,3-dioxopropan-2-yl}carbamoyl)propanoic acid, 3-Amino-3-({2-[(2-methylpropanoyl)oxy]ethyl}carbamoyl)propanoic acid, 3-Amino-3-({2-[(3-methylbutanoyl)oxy]ethyl}carbamoyl)propanoic acid, 3-Amino-3-({3-[(2,2-dimethylpropanoyl)oxy]-1-methoxy-1-oxopropan-2-yl}carbamoyl)propanoic acid, 3-Amino-3-({3-methyl-1-[(2-methylpropanoyl)oxy]butan-2-yl}carbamoyl)propanoic acid, 3-Amino-3-[(1,5-dimethoxy-1,5-dioxopentan-2-yl)carbamoyl]propanoic acid, 3-Amino-3-[(1,5-dimethoxy-4-methyl-1,5-dioxopentan-2-yl)carbamoyl]propanoic acid, 3-Amino-3-[(1-{[(tert-butoxy)carbonyl]oxy}-3-ethoxy-1,3-dioxopropan-2-yl)carbamoyl]propanoic acid, 3-Amino-3-[(1-butoxy-1-oxopropan-2-yl)carbamoyl]propanoic acid, 3-Amino-3-[(1-butoxy-3-hydroxy-1-oxopropan-2-yl)carbamoyl]propanoic acid, 3-Amino-3-[(1-cyclohexylpropan-2-yl)carbamoyl]propanoic acid, 3-Amino-3-[(1-ethoxy-1-oxohexan-2-yl)carbamoyl]propanoic acid, 3-Amino-3-[(1-ethoxy-3-hydroxy-1-oxobutan-2-yl)carbamoyl]propanoic acid, 3-Amino-3-[(1-ethoxy-3-hydroxy-1-oxopropan-2-yl)carbamoyl]propanoic acid, 3-Amino-3-[(1-hydroxy-1-phenylpropan-2-yl)carbamoyl]propanoic acid, 3-Amino-3-[(1-methoxy-1-oxo-3-phenylbutan-2-yl)carbamoyl]propanoic acid, 3-Amino-3-[(1-methoxy-1-oxobutan-2-yl)carbamoyl]propanoic acid, 3-Amino-3-[(1-methoxy-1-oxoheptan-2-yl)carbamoyl]propanoic acid, 3-Amino-3-[(1-methoxy-1-oxohexan-2-yl)carbamoyl]propanoic acid, 3-Amino-3-[(1-methoxy-1-oxooctan-2-yl)carbamoyl]propanoic acid, 3-Amino-3-[(1-methoxy-1-oxopentan-2-yl)carbamoyl]propanoic acid, 3-Amino-3-[(1-methoxy-5-methyl-1-oxohexan-2-yl)carbamoyl]propanoic acid, 3-Amino-3-[(1-oxo-1-propoxybutan-2-yl)carbamoyl]propanoic acid, 3-Amino-3-[(1-oxo-1-propoxypentan-2-yl)carbamoyl]propanoic acid, 3-Amino-3-[(1-phenoxypropan-2-yl)carbamoyl]propanoic acid, 3-Amino-3-[(2-methyl-1-phenylpropan-2-yl)carbamoyl]propanoic acid, 3-Amino-3-[(2-oxo-2-propoxyethyl)carbamoyl]propanoic acid, 3-Amino-3-[(3-hydroxy-1-methoxy-1-oxobutan-2-yl)carbamoyl]propanoic acid, 3-Amino-3-[(3-hydroxy-1-methoxy-1-oxohexan-2-yl)carbamoyl]propanoic acid, 3-Amino-3-[(3-hydroxy-1-methoxy-1-oxopropan-2-yl)carbamoyl]propanoic acid, 3-Amino-3-[(3-hydroxy-1-oxo-1-propoxybutan-2-yl)carbamoyl]propanoic acid, 3-Amino-3-[(3-hydroxy-1-oxo-1-propoxypropan-2-yl)carbamoyl]propanoic acid, 3-Amino-3-[(3-methyloctan-2-yl)carbamoyl]propanoic acid, 3-Amino-3-[(4-ethoxy-1-methoxy-1,4-dioxobutan-2-yl)carbamoyl]propanoic acid, 3-Amino-3-[(4-ethoxy-4-oxobutan-2-yl)carbamoyl]propanoic acid, 3-Amino-3-[(4-ethoxybutan-2-yl)carbamoyl]propanoic acid, 3-Amino-3-[(4-methoxy-4-oxobutan-2-yl)carbamoyl]propanoic acid, 3-Amino-3-[(5-acetamido-1-methoxy-1-oxopentan-2-yl)carbamoyl]propanoic acid, 3-Amino-3-[(5-methylhexan-2-yl)carbamoyl]propanoic acid, 3-Amino-3-[(6-acetamido-1-methoxy-1-oxohexan-2-yl)carbamoyl]propanoic acid, 3-Amino-3-[(heptan-2-yl)carbamoyl]propanoic acid, 3-Amino-3-{[1-({bicyclo[2.2.1]heptan-2-yl}formamido)ethyl]carbamoyl}propanoic acid, 3-Amino-3-{[1-(2,2-dicyclopropylacetamido)ethyl]carbamoyl}propanoic acid, 3-Amino-3-{[1-(2,2-dimethylpropanamido)ethyl]carbamoyl}propanoic acid, 3-Amino-3-{[1-(2-methylcyclobutanecarbonyloxy)propan-2-yl]carbamoyl}propanoic acid, 3-Amino-3-{[1-(2-methylcyclopropanecarbonyloxy)propan-2-yl]carbamoyl}propanoic acid, 3-Amino-3-{[1-(4-hydroxyphenyl)propan-2-yl]carbamoyl}propanoic acid, 3-Amino-3-{[1-(butanoyloxy)-3-hydroxypropan-2-yl]carbamoyl}propanoic acid, 3-Amino-3-{[1-(butanoyloxy)-3-methylbutan-2-yl]carbamoyl}propanoic acid, 3-Amino-3-{[1-(butanoyloxy)propan-2-yl]carbamoyl}propanoic acid, 3-Amino-3-{ 1-(cyclobutanecarbonyloxy)-3-hydroxypropan-2-yl]carbamoyl}propanoic acid, 3-Amino-3-{[1-(cyclobutanecarbonyloxy)-3-methylbutan-2-yl]carbamoyl}propanoic acid, 3-Amino-3-{[1-(cyclobutanecarbonyloxy)butan-2-yl]carbamoyl}propanoic acid, 3-Amino-3-{[1-(cyclobutanecarbonyloxy)propan-2-yl]carbamoyl}propanoic acid, 3-Amino-3-{[1-(cyclohexylcarbamoyl)ethyl]carbamoyl}propanoic acid, 3-Amino-3-{[1-(cyclohexylformamido)ethyl]carbamoyl}propanoic acid, 3-Amino-3-{[1-(cyclohexyloxy)-3-ethoxy-1,3-dioxopropan-2-yl]carbamoyl}propanoic acid, 3-Amino-3-{[1-(cyclohexyloxy)-3-hydroxy-1-oxopropan-2-yl]carbamoyl}propanoic acid, 3-Amino-3-{[1-(cyclohexyloxy)-3-methoxy-1,3-dioxopropan-2-yl]carbamoyl}propanoic acid, 3-Amino-3-{[1-(cyclopentanecarbonyloxy)-3-hydroxypropan-2-yl]carbamoyl}propanoic acid, 3-Amino-3-{[1-(cyclopentanecarbonyloxy)propan-2-yl]carbamoyl}propanoic acid, 3-Amino-3-{[1-(cyclopentylformamido)ethyl]carbamoyl}propanoic acid, 3-Amino-3-{[1-(cyclopentyloxy)-3-ethoxy-1,3-dioxopropan-2-yl]carbamoyl}propanoic acid, 3-Amino-3-{[1-(cyclopentyloxy)-3-methoxy-1,3-dioxopropan-2-yl]carbamoyl}propanoic acid, 3-Amino-3-{[1-(cyclopropanecarbonyloxy)-3-hydroxypropan-2-yl]carbamoyl}propanoic acid, 3-Amino-3-{[1-(cyclopropanecarbonyloxy)-3-methylbutan-2-yl]carbamoyl}propanoic acid, 3-Amino-3-{[1-(cyclopropanecarbonyloxy)butan-2-yl]carbamoyl}propanoic acid, 3-Amino-3-{[1-(cyclopropanecarbonyloxy)propan-2-yl]carbamoyl}propanoic acid, 3-Amino-3-{[1-(pentanoyloxy)propan-2-yl]carbamoyl}propanoic acid, 3-Amino-3-{[1-(phenylformamido)ethyl]carbamoyl}propanoic acid, 3-Amino-3-{ 1-(prop-2-enoyloxy)propan-2-yl]carbamoyl}propanoic acid, 3-Amino-3-{[1-(propanoyloxy)butan-2-yl]carbamoyl}propanoic acid, 3-Amino-3-{ 1-(propanoyloxy)propan-2-yl]carbamoyl}propanoic acid, 3-Amino-3-{[1-(tert-butoxy)-3-ethoxy-1,3-dioxopropan-2-yl]carbamoyl}propanoic acid, 3-Amino-3-{[1-(tert-butoxy)-3-methoxy-1,3-dioxopropan-2-yl]carbamoyl}propanoic acid, 3-Amino-3-{[1-ethoxy-1,3-dioxo-3-({1,3,3-trimethylbicyclo[2.2.1]heptan-2-yl}oxy)propan-2-yl]carbamoyl}propanoic acid, 3-Amino-3-{[1-hydroxy-3-(4-hydroxyphenyl)propan-2-yl]carbamoyl}propanoic acid, 3-Amino-3-{[1-hydroxy-3-(propanoyloxy)propan-2-yl]carbamoyl}propanoic acid, 3-Amino-3-{[1-methoxy-1,3-dioxo-3-({1,7,7-trimethylbicyclo[2.2.1]heptan-2-yl}oxy)propan-2-yl]carbamoyl}propanoic acid, 3-Amino-3-{[1-methoxy-1-oxo-3-(propan-2-ylsulfanyl)propan-2-yl]carbamoyl}propanoic acid, 3-Amino-3-{[1-methoxy-1-oxo-3-(propanoyloxy)propan-2-yl]carbamoyl}propanoic acid, 3-Amino-3-{[1-methoxy-1-oxo-3-(propyl sulfanyl)propan-2-yl] carb amoyl}propanoic acid, 3-Amino-3-{[1-oxo-1-(pentyloxy)propan-2-yl]carbamoyl}propanoic acid, 3-Amino-3-{[1-oxo-1-(propan-2-yloxy)butan-2-yl]carbamoyl}propanoic acid, 3-Amino-3-{[1-oxo-1-(propan-2-yloxy)pentan-2-yl]carbamoyl}propanoicacid,3-Amino-3-{[1-oxo-1-(propan-2-yloxy)propan-2-yl]carbamoyl}propanoic acid, 3-Amino-3-{[2-(butanoyloxy)ethyl]carbamoyl}propanoic acid, 3-Amino-3-{[2-(cyclobutanecarbonyloxy)ethyl]carbamoyl}propanoic acid, 3-Amino-3-{[2-(cyclohexyloxy)-2-oxoethyl]carbamoyl}propanoic acid, 3-Amino-3-{[2-(cyclopropanecarbonyloxy)ethyl]carbamoyl}propanoic acid, 3-Amino-3-{[2-(propanoyloxy)ethyl]carbamoyl}propanoic acid, 3-Amino-3-{[2-methyl-3-oxo-3-(propan-2-yloxy)propyl]carbamoyl}propanoic acid, 3-Amino-3-{[3-(butan-2-yloxy)-3-oxopropyl]carbamoyl}propanoic acid, 3-Amino-3-{[3-(butanoyloxy)-1-methoxy-1-oxopropan-2-yl]carbamoyl}propanoic acid, 3-Amino-3-{[3-(cyclohexyloxy)-2-methyl-3-oxopropyl]carbamoyl}propanoic acid, 3-Amino-3-{[3-(cyclohexyloxy)-3-oxopropyl]carbamoyl}propanoic acid, 3-Amino-3-{[3-(cyclopentyloxy)-2-methyl-3-oxopropyl]carbamoyl}propanoic acid, 3-Amino-3-{[3-(cyclopentyloxy)-3-oxopropyl] carbamoyl}propanoic acid, 3-Amino-3-{[3-(ethylsulfanyl)-1-methoxy-1-oxopropan-2-yl]carbamoyl}propanoic acid, 3-Amino-3-{[3-(furan-2-yl)propyl]carbamoyl}propanoic acid, 3-Amino-3-{[3-(tert-butoxy)-1-methoxy-1-oxopropan-2-yl]carbamoyl}propanoic acid, 3-Amino-3-{[3-(tert-butoxy)-2-methyl-3-oxopropyl]carbamoyl}propanoic acid, 3-Amino-3-{[3-(tert-butoxy)-3-oxopropyl] carbamoyl}propanoic acid, 3-Amino-3-{[3-(tert-butylsulfanyl)-1-methoxy-1-oxopropan-2-yl]carbamoyl}propanoic acid, 3-Amino-3-{[3-hydroxy-1-(2-methylpropoxy)-1-oxobutan-2-yl]carbamoyl}propanoic acid, 3-Amino-3-{[3-hydroxy-1-(2-methylpropoxy)-1-oxopropan-2-yl]carbamoyl}propanoic acid, 3-Amino-3-{[3-hydroxy-1-(propanoyloxy)butan-2-yl]carbamoyl}propanoic acid, 3-Amino-3-{[3-hydroxy-1-oxo-1-(propan-2-yloxy)butan-2-yl]carbamoyl}propanoic acid, 3-Amino-3-{[3-hydroxy-1-oxo-1-(propan-2-yloxy)propan-2-yl]carbamoyl}propanoic acid, 3-Amino-3-{[3-methyl-1-(propanoyloxy)butan-2-yl]carbamoyl}propanoic acid, 3 -Amino-3- {[3-methyl-1-oxo-1-(propan-2-yloxy)butan-2-yl]carbamoyl}propanoic acid, 3-Amino-3-{[3-methyl-1-oxo-1-(propan-2-yloxy)pentan-2-yl]carbamoyl}propanoic acid, 3-Amino-3-{[3-oxo-3-(pentan-2-yloxy)propyl]carbamoyl}propanoic acid, 3-Amino-3-{[3-oxo-3-(pentan-3-yloxy)propyl]carbamoyl}propanoic acid, 3-Amino-3-{[3-oxo-3-(propan-2-yloxy)propyl]carbamoyl}propanoic acid, 3-Amino-3-{[4-(butan-2-yloxy)-4-oxobutan-2-yl]carbamoyl}propanoic acid, 3-Amino-3-{ [4-(cyclohexyloxy)-4-oxobutan-2-yl]carbamoyl}propanoic acid, 3-Amino-3-{[4-(tert-butoxy)-1-methoxy-1,4-dioxobutan-2-yl]carbamoyl}propanoic acid, 3-Amino-3-{ [4-(tert-butoxy)-4-oxobutan-2-yl]carbamoyl}propanoic acid, 3-Amino-3-{[4-oxo-4-(propan-2-yloxy)butan-2-yl]carbamoyl}propanoic acid, 3-Amino-4-(2-cyclohexylethylamino)-4-oxobutanoic acid, 3-Amino-4-(heptylamino)-4-oxobutanoic acid, 3-Amino-4-(hexylamino)-4-oxobutanoic acid, 3-Amino-4-[(1-ethoxy-1-oxopropan-2-yl)amino]-4-oxobutanoic acid, 3-Amino-4-[(1-hydroxy-3-phenylpropan-2-yl)amino]-4-oxobutanoic acid, 3-Amino-4-[(2-methoxy-2-oxoethyl)amino]-4-oxobutanoic acid, 3-Amino-4-[(3-cyclohexyl-1-methoxy-1-oxopropan-2-yl)amino]-4-oxobutanoic acid, 3-Amino-4-[(3-methoxy-3-oxopropyl)amino]-4-oxobutanoic acid, 3-Amino-4-[(4-methoxy-4-oxobutyl)amino]-4-oxobutanoic acid, 3-Amino-4-[[1-(cyclopentylamino)-1-oxopropan-2-yl]amino]-4-oxobutanoic acid, 3-Amino-4-[[3-(4-hydroxyphenyl)-1-methoxy-1-oxopropan-2-yl]amino]-4-oxobutanoic acid, 3-Amino-4-[1-(4-fluorophenyl)propan-2-ylamino]-4-oxobutanoic acid, 3-Amino-4-[2-(4-fluorophenyl)ethylamino]-4-oxobutanoic acid, 3-Amino-4-[2-(4-hydroxyphenyl)ethylamino]-4-oxobutanoic acid, 3-Amino-4-[4-(furan-2-yl)butan-2-ylamino]-4-oxobutanoic acid, 3-Amino-4-bromobenzonitrile, 3-Amino-4-chlorobenzonitrile, 3-Amino-4-ethoxybenzonitrile, 3-Amino-4-methoxybenzonitrile, 3-Amino-4-oxo-4-(1-phenylpropan-2-ylamino)butanoic acid, 3-Amino-4-oxo-4-(2-phenoxyethylamino)butanoic acid, 3-Amino-4-oxo-4-(4-phenylbutan-2-ylamino)butanoic acid, 3-Amino-4-propoxybenzonitrile, 3-Aminobenzoic acid, 3-Aminobenzonitrile, 3-Anilino-2-styryl-3H-naphthol[1,2-d]imidazole-5-sulfonate (SSN), 3-Carboxamido-2,4,6-tribromo-cinnamic acid, 3-Hydroxy-4-methoxybenzyl phenyl ether, 3-Hydroxy-4-methoxybenzyl salicylate, 3-Ketosucrose, 3-Methoxy-1,3,5-estratrien-4-ol, 3-O-β-D-xylopyranoside analog of glycyrrhizin , 3-Pyridyl guanidineacetic acid derivative, 3-Quinolyl guanidineacetic acid derivative, 4' Chloro-deoxy-galactosucrose, 4-(1-methoxyethyl)-1-methyl-1,3-cyclohexadiene, 4-(1-methoxyethyl)-1-methyl-1,4-cyclohexadiene, 4-(1-methoxyethyl)-1-methylcyclohexene, 4-(diethylamino)phenylsulfamic acid sodium salt, 4,1',4',6'-Tetrabromo galactosucrose, 4,1',4',6'-Tetrabromo sucrose, 4,1',4',6'-Tetrachloro galactosucrose, 4,1',4',6'-Tetrachloro sucrose, 4,1',4'-Trichloro galactosucrose, 4,1',6'-Tribromo galactosucrose, 4,1',6'-Trichloro-4'-bromo sucrose, 4,1',6'-Trichloro-4'-iodo sucrose, 4,1',6'-Trifluoro sucrose, 4,1',6'-Triiodo sucrose, 4,1'-Dichloro galactosucrose, 4,1'-Dichloro sucrose, 4,4',6'-Trichloro galactosucrose, 4,6,1',6'-Tetrachloro galactosucrose, 4,6,1',6'-Tetrachloro sucrose, 4,6'-Dichloro galactosucrose, 4,6-Dimethyl-2-pyridylsulfamic acid sodium salt, 4,6'-Di-O-Methyl sucrose, 4,6-Di-O-Methyl sucrose, 4-1'-4'-Trichloro sucrose, 4-1'-6'-Tribromo sucrose, 4-1'-6'-Trichloro sucrose, 4-4'-6'-Trichloro sucrose, 4'-Bromo sucralose, 4-Chloro galactosucrose, 4-Chloro-1',4',6'-tribromo galactosucrose, 4'-Chloro-4'-deoxy sucrose, 4-Chlorosaccharin, 4-Chloro sucrose, 4-Cyanophenyl guanidineacetic acid derivative 2, 4-Cyanophenyl guanidineacetic acid derivative 3, 4-Cyanophenyl guanidineacetic acid derivative 4, 4-Cyanophenyl guanidineacetic acid derivative 5, 4-Cyanophenyl guanidineacetic acid derivative 6, 4-Cyanophenyl guanidineacetic acid derivative 7, 4-Cyanophenyl guanidineacetic acid derivative 8, 4-Cyanophenyl guanidineacetic acid derivative 9, 4-Cyanophenyl guanidineacetic acid derivative 10, 4-Cyanophenyl guanidineacetic acid derivative 11, 4-Cyanophenyl guanidineacetic acid derivative 12, 4-Cyanophenyl guanidineacetic acid derivative 13, 4-Cyanophenyl guanidineacetic acid derivative 14, 4-Cyanophenyl guanidineacetic acid derivative 15, 4-Cyanophenyl guanidineacetic acid derivative 16, 4-Cyanophenyl guanidineacetic acid derivative 17, 4-Cyanophenyl guanidineacetic acid derivative 18, 4-Cyanophenyl guanidineacetic acid derivative 19, 4-Cyanophenyl guanidineacetic acid derivative 20, 4-Cyanophenyl guanidineacetic acid derivative 21, 4-Cyanophenyl guanidineacetic acid derivative 22, 4-Cyanophenyl guanidineacetic acid derivative 23, 4-Cyanophenyl guanidineacetic acid derivative 24, 4-Cyanophenyl guanidineacetic acid derivative 25, 4-Cyanophenyl guanidineacetic acid derivative 26, 4-Cyanophenyl guanidineacetic acid derivative 27, 4-Cyanophenyl guanidineacetic acid derivative 28, 4-Cyanophenyl guanidineacetic acid derivative 29, 4-Cyanophenyl guanidineacetic acid-N'-sulfonyl derivative 1, 4-Cyanophenyl guanidineacetic acid-N'-sulfonyl derivative 2, 4-Cyanophenyl guanidineacetic acid-N'-sulfonyl derivative 3, 4-Cyanophenyl guanidineacetic acid-N'-sulfonyl derivative 4, 4-Cyanophenyl guanidineacetic acid-N'-sulfonyl derivative 5, 4-Cyanophenyl guanidineacetic acid-N'-sulfonyl derivative 6, 4-Cyanophenyl guanidineacetic acid-N'-sulfonyl derivative 7, 4-Deoxy-4-halo-galactosucrose derivative 36, 4-Deoxy-4-halo-galactosucrose derivative 37, 4-Deoxy-4-halo-galactosucrose derivative 42, 4-Deoxy-4-halo-galactosucrose derivative 43, 4-Deoxy-4-halo-galactosucrose derivative 45, 4-Deoxy-4-halo-galactosucrose derivative 48, 4-Deoxysucrose, 4-Ethenyl-1-methylcyclohexene, 4-Fluoro-1'-4'-6'-tribromo sucrose, 4-Fluoro-1'-4'-6'-trichloro sucrose, 4-Fluoro-1',4',6'-trichloro galactosucrose, 4'-Fluoro sucralose, 4-Galactosyl-kojibiose, 4'-Iodo sucralose, 4-Methoxymethyl-1-methyl-1,4-cyclohexadiene, 4-Methoxymethyl-1-methylcyclohexene, 4-Methoxyphenyl urea, 4-Methylcyclohexylsulfamate, 4-Nitrophenyl guanidineacetic acid, 4-0-Methyl sucrose, 4-O-n-propyl glycosides DHC, 4'-Fluoro-4-1'-6'-Trichloro sucrose, 4-Propoxyphenyl urea, 4β,10α-dimethyl-1,2,3,4,5,10-hexahydrofluorene-4α,6α-dicarboxylic acid, 5-(2,4-dihydro-3,1-benzoxathiin-2-yl)-2-methoxyphenyl N-phenylcarbamate, 5-(2-cyclohexylethyl)-2-methoxyphenol, 5-(3,4-dihydro-2H-1-benzopyran-2-yl)-2-methoxyphenol, 5-(4-cyanoanilino)-5-oxo-4-[(2,2,2-trifluoroacetyl)amino]pentanoic acid, 5-(4H-3,1-benzoxathiin-2-yl)-2-methoxyphenol, (R)-form, 5-(benzylamino)-2-methoxyphenol, 5,6-Dimethyl-1,2,3-oxathiazin-4(3H)-one 2,2-dioxide, 5-[2-(2-hydroxyphenyl)ethyl]-2-methoxyphenol, 5-[2-(4-fluorophenyl)ethyl]-2-methoxyphenol, 5-[2-(4-hydroxyphenyl)ethyl]-2-methoxyphenol, 5-[8-(acetyloxy)-1-oxo-3,4-dihydro-1H-2-benzopyran-3-yl]-2-methoxyphenyl acetate, 5-[hydroxy(phenoxy)methyl]-2-methoxyphenol, 5-{2-[2-(hydroxymethyl)phenyl]ethyl}-2-methoxyphenol, 5-Bromopyrimidine-2-carbonitrile, 5-Deoxy-D-threo-Hexulose, 5-Ethyl-6-methyl-2,2-dioxooxathiazin-4-one, 5-Indanyl guanidineacetic acid derivative, 5-Methyl-1,3,4-thiadiazole-2-ylsulfamic acid sodium salt, 5-Methyl-2,2-dioxooxathiazin-4-one, 5-Nitro-2-propyl-aniline, 5-Thio-β-D-glucopyranose, 6,1',6'-Trichloro sucrose, 6,6'-Di-0-methyl sucrose, 6'-Chloro galactosucrose, 6-Chloro-6-deoxy-D-fructofuranose, 6-Chloro-D-tryptophan, 6'-Chloro sucrose, 6-Deoxy sucrose, 6-Ethyl-5-methyl-2,2-dioxooxathiazin-4-one, 6-Ethyl-acesulfame, 6-Fluorobenzo[d]isothiazol-3(2H)-one 1,1-dioxide, 6-Hydroxy-1,1-dioxo-1,2-benzothiazol-3-one, 6-Methylsaccharin, 6-O-acetate sucrose, 6'-O-Methyl sucrose, 6-O-methyl sucrose, 6-Quinolyl guanidineacetic acid derivative 1, 6-Quinolyl guanidineacetic acid derivative 2, 6-Thio analogue of fructose, 6-Thio-β-D-fructopyranose, 6-Trifluoromethyl-tryptophan , 7-Amino-1,1-dioxo-1,2-benzothiazol-3-one, 8-Desoxyphyllodulcin, 8-Hydroxy-3-(3-hydroxy-4-methoxyphenyl) isochroman, 8-Hydroxy-3-(3-hydroxy-4-methoxyphenyl)-3,4-dihydroisocarbostyril, 9-Methoxy-7,11b-dihydrobenz[b]indeno[1,2-d]pyran-6a,10-diol, Abrusoside A, Abrusoside B, Abrusoside C, Abrusoside D, Abrusoside E, Abrusoside E 6"-monomethyl ester, Acesulfame, Acesulfame K, Acesulfame_potassium_CH3CH2_H, Acesulfame_potassium_CH3CH2CH2_CH3, Acesulfame_potassium_H_H, Acetaldehyde oxime, Advantame, Albiziasaponin B, Alitame, Allo-inositol, Allyl oxy-nitroaniline, Ammonium glycyrrhizinate, anti-5-Benzyl-2-Furfuraldehyde oxime, anti-Furfuraldehyde oxime, Arabinose, ASA 1 (2,2-dimethyl-1-phenylsulfonylalkanoic acid), ASA 3 (2,4-dimethyl-1-phenylsulfonylcylohexanecarboxylic acid), ASA 5 (1-Phenylsulfonyl-6-methyl-3-cyclohexenecarboxylic acid), Aspartame, Aspartame-acesulfame, Aspartic acid fenchyl ester, Aspartic acid-beta-4-nitroanilide, Aspartyl-phenylalanyl-OBu, Aspartyl-phenylalanyl-OEt, Aspartyl-phenylalanyl-OPr, Baiyunoside, Benzofurazan-5-yl guanidineacetic acid derivative, Bernardame, Beryllium chloride, Bromo-nitroaniline, Butanoic acid, 3-amino-4-[(1,3-dimethylpentyl)amino]-4-oxo-, Butanoic acid, 3-amino-4-[(1-ethylpentyl)amino]-4-oxo-, Butanoic acid, 3-amino-4-[(1-methylheptyl)amino]-4-oxo-, Butanoic acid, 3-amino-4-[(1-methylpentyl)amino]-4-oxo-, Butylsulfamate, Calcium cyclamate, Calcium saccharin, Carrelame, Cellobiose, Chloroform, Chloro-nitroaniline, Compound (R)-(+)-9, Cyanoarylurea aspartame, Cyanosuosan, Cyclamate, Cyclocarioside A, Cycloheptyl sulfamic acid (Na-salt), Cyclooctyl sulfamic acid (Na-salt), Cyclopentyl sulfamic acid (Na-salt), D-Ala-L-Asp-L-Phe-OMe, D-Alanine, D-Arabitol, D-Asparagine, Decahydroisoquinoline-2-ylsulfamic acid sodium salt, Deoxy-halo-sucrose derivative 29, D-Galactose, D-Glucose, D-Glutamine, D-Histidine, Diazathiosuperaspartame, Dihydroquercetin 3-acetate 4'-(methyl ether), Dihydroxyacetone, Dimethyl urea, Disodium glycyrrhizinate, D-Isoleucine, D-Lactose, beta-form, D-Lactulose, D-Leucine, D-Leucrose, D-Lysine, D-Maltose, D-Maltotriose, D-Mannitol, D-Mannose, D-Methionine, D-Norvaline, D-Phenylalanine, D-Rhamnose, D-Serine, D-Sorbitol, D-Tagatose, D-Threonine, D-Tryptophan, D-Tyrosine, Dulcin, Dulcoside A, D-Valine, D-Xylose, D-α-aminobutyric acid, Erythritol, Ethoxy-nitroaniline, Ethylene glycol, Exo-8,9,10-Tribornylsulfamate, Fluoro-nitroaniline, Fucose, Furfural, Galactitol, Galactosucrose, Gaudichaudioside A, Glucosyl sucrose, Glycerol, Glycine, Glycine analog of cyanosuosan, Glycyrrhizin, Glycyrrhizinate_2, Guanidine, Guanidine carboxylic acid tetrazolyl isostere, Guanidine derivative 5, Guanidine derivative 6, Guanidine derivative 10, Guanidine derivative 11, Guanidine-acetic acid, Heptylame, Hernandulcin, Hesperetin DHC, Hesperetin dihydrochalcone modified 1, Hesperetin dihydrochalcone modified 2, Hesperetin dihydrochalcone modified 3, Hesperetin dihydrochalcone modified 6, Hesperinin glucoside DHC, Hexahydrothiepin-3-ylsulfamic acid sodium salt, Hexahydrothiepin-4-ylsulfamic acid sodium salt, Homoeohesperidin DHC, Hydrogenated starch hydrolysates (HSH), Hydroxy-nitroaniline, Invert sugar, Iodo-nitroaniline, Isopropoxy-nitroaniline, Isomaltitol, Isomogroside V, Isovanillic derivative 24, Isovanillic derivative 25, Kojibiose, Lactitol, Lactosucrose, Lactulosucrose, L-Alanine, L-Alanine tert-butyl ester hydrochloride, L-Alanine tertiary butyl ester, L-Arabitol, L-Aspartylaminoacetate derivative 171 & 178, L-Aspartylaminoacetate derivative 173 & 180, L-Aspartyl-D-alanine methyl ester, L-Aspartyl-D-alanyl tetramethylcyclopentyl, L-Aspartyl-DL-aminomalonic acid fenchyl methyl diester, L-Asp-D-Ala-OPr, L-Asp-L-Cys(tBu)-OMe, L-Fructose, L-Galactose, L-Glucose, L-Hydroxy proline, Limonene, Liquiritin, L-Mannose, L-Proline, L-(R)-retro-inverso analogue of aspartyl-alanyl tetramethylcyclopentyl, L-(S)-retro-inverso analogue of aspartyl-alanyl tetramethylcyclopentyl, L-Serine, L-Sorbose, L-Threonine, Lugduname, L-α-aminobutyric acid, Maltitol, Maltulose, Methanesulfonamide, 1-chloro-N-(phenylmethyl)-, Methoxy-nitroaniline, Methyl 2-deoxy-α-D-gluco-pyranoside, Methyl 3-deoxy-α-D-gluco-pyranoside, Methyl 4-deoxy-α-D-gluco-pyranoside, Methyl 6-deoxy-α-D-gluco-pyranoside, Methyl dihydroxyacetone, Methyl α-D-glucopyranoside, Methyl β-D-fructopyranoside, Methyl-nitroaniline, Methyl-β-D-Arabinopyranose, Mogrol, Mogroside II, Mogroside IV, Mogroside V, Monatin, Monoglucuronide of glycyrrhizic acid (MGGR), Monohydroxyacetone, Mukurozioside IIb, N-((tetrahydro-2H-thiopyran)-4-yl)amidosulfuric acid sodium salt, N-((tetrahydrothiophen)-3-yl)amidosulfuric acid sodium salt, N-(1-Phenylbutan-2-yl)-alpha-asparagine, N-(2-methylbut-2-enylidene)hydroxylamine, N-(2-methylbutyl)amidosulfuric acid sodium salt, N-(3-hydroxy-4-methoxybenzyl) aniline, N-[(3,4-dihydro-2H-pyran-5-yl)methylidene]hydroxylamine, N-[(4-cyanophenyl)carbamoyl]-3-(3-pyridinyl)-betaAla-OH, N-[(4-cyanophenyl)carbamoyl]-3-(4-pyridinyl)-betaAla-OH, N-[(4-cyanophenyl)carbamoyl]-3-phenyl-betaAla-OH, N-[(4-ethenylcyclohex-1-en-1-yl)methylidene]hydroxylamine, N-[(4-ethoxycyclohex-1-en-1-yl)methylidene]hydroxylamine, N-[(4-methoxycyclohex-1-en-1-yl)methylidene]hydroxylamine, N-[(4-methylcyclohexa-1,3-dien-1-yl)methylidene]hydroxylamine, N-[(cyclohexa-1,3-dien-1-yl)methylidene]hydroxylamine, N-[(cyclohexa-1,4-dien-1-yl)methylidene]hydroxylamine, N-[[4-(1-methoxyethyl)cyclohexen-1-yl]methylidene]hydroxylamine, N-[1-(acetyloxy)butan-2-yl]-alpha-asparagine, N-{[4-(2-methyloxiran-2-yl)cyclohex-1-en-1-yl]methylidene}hydroxylamine, N-{[4-(methoxymethyl)cyclohex-1-en-1-yl]methylidene}hydroxylamine, N-{[4-(methoxymethyl)cyclopent-1-en-1-yl]methylidene}hydroxylamine, N'-Acetyl kynurenine, N-Acetyl-D-glucosamine, Naringin dihydrochalcone, n-Butoxy-nitroaniline, N-Butylsulfamic acid sodium salt, Neoastilbin, Neoeriocitrin dihydrochalcone, Neohesperidin DHC derivative 3, Neohesperidin DHC derivative 10, Neohesperidin dihydrochalcone (NHDC), Neotame, N'-Formyl kynurenine, N-Isobutylsulfamic acid sodium salt, N-Isopentylsulfamic acid sodium salt, Nitroaniline, Nitrobenzene, N-Propylsulfamic acid sodium salt, Osladin, P 4000, Palatinit (Isomalt), Palatinose, p-Aminosaccharin, p-Tolylurea, Periandrin I, Periandrin II, Periandrin III, Periandrin IV, Periandrin V, Perillaldehyde, Perillartine, Phenyl 3-hydroxy-4-methoxybenzoate, Phenyl guanidineacetic acid derivative 8, Phenyl guanidineacetic acid derivative 9, Phenyl guanidineacetic acid derivative 11, Phenyl guanidineacetic acid derivative 12, Phenyl guanidineacetic acid derivative 14, Phenyl guanidineacetic acid derivative 16, Phenyl guanidineacetic acid derivative 18, Phenyl guanidineacetic acid derivative 20, Phenyl guanidineacetic acid derivative 22, Phenyl guanidineacetic acid derivative 23, Phenyl guanidineacetic acid-N'-(S)-1-phenylethyl derivative 2, Phenyl guanidineacetic acid-N'-(S)-1-phenylethyl derivative 3, Phenyl guanidineacetic acid-N'-(S)-1-phenylethyl derivative 4, Phenyl guanidineacetic acid-N'-(S)-1-phenylethyl derivative 5, Phenyl guanidineacetic acid-N'-(S)-1-phenylethyl derivative 6, Phenyl guanidineacetic acid-N'-(S)-1-phenylethyl derivative 7, Phenyl guanidineacetic acid-N'-(S)-1-phenylethyl derivative 8, Phenyl guanidineacetic acid-N'-(S)-1-phenylethyl derivative 9, Phenyl guanidineacetic acid-N'-(S)-1-phenylethyl derivative 10, Phenyl guanidineacetic acid-N'-(S)-1-phenylethyl derivative 12, Phenyl guanidineacetic acid-N'-(S)-1-phenylethyl derivative 13, Phenyl guanidineacetic acid-N'-(S)-1-phenylethyl derivative 14, Phenyl guanidineacetic acid-N'-(S)-1-phenylethyl derivative 15, Phenyl guanidineacetic acid-N'-(S)-1-phenylethyl derivative 16, Phloridzin, Phloroglucinol, Phthalic acid mono(4-methoxyphenyl) ester, Phyllodulcin, Polypodoside A, Polypodoside B, Poncirin dihydrochalcone, Potassium 3-[3,5-dihydroxy-4-[3-(3-hydroxy-4-methoxyphenyl)propanoyl]phenoxy]propyl-hydroxyphosphinate, Potassium 3-{3,5-dihydroxy-4-[3-(3-hydroxy-4-methoxyphenyl)propanoyl]phenoxy}propane-1-sulfonate, Potassium glycyrrhizinate, Potassium saccharin, Prunin DHC, Pseudo-β-D-fructopyranose, Pseudo-β-D-galactopyranose, Pseudo-β-D-glucopyranose, Psicose, Pterocaryoside A, Pterocaryoside B, Raffinose, Rebaudioside A, Rebaudioside A analog, Rebaudioside B, Rebaudioside C, Rebaudioside D, Rebaudioside E, Rebaudioside F, Rebaudioside G, Rebaudioside H, Rebaudioside I, Rebaudioside J, Rebaudioside K, Rebaudioside L, Rebaudioside M, Rebaudioside N, Rebaudioside O, Rebaudioside R, Rebaudioside S, Rebaudioside T, Rebaudioside U, Rebaudioside V, Rebaudioside W, Rebaudioside Y, Rebaudioside Z, Resorcinol, Ribose, Rubusoside, Saccharin, Sedoheptulosan, Selligueain A, Siamenoside I, Sodium 1-(sulfonatoamino)propan-2-ol, Sodium 2,2,4-trioxo-3,4-dihydro-1,2lambda6,3-oxathiazin-3-ide, Sodium 5-(sulfonatoamino)pentan-1-ol, Sodium 5,6-dimethyl-2,2,4-trioxo-3,4-dihydro-1,2lambda6,3-oxathiazin-3-ide, Sodium 5-ethyl-2,2,4-trioxo-3,4-dihydro-1,2lambda6,3-oxathiazin-3-ide, Sodium 5-ethyl-6-methyl-2,2,4-trioxo-3,4-dihydro-1,2lambda6,3-oxathiazin-3-ide, Sodium 5-methyl-2,2,4-trioxo-3,4-dihydro-1,2lambda6,3-oxathiazin-3-ide, Sodium 5-methyl-2,2,4-trioxo-6-(propan-2-yl)-3,4-dihydro-1,2lambda6,3-oxathiazin-3-ide, Sodium 6-ethyl-2,2,4-trioxo-3,4-dihydro-1,2lambda6,3-oxathiazin-3-ide, Sodium 6-methyl-2,2,4-trioxo-5-propyl-3,4-dihydro-1,2lambda6,3-oxathiazin-3-ide, Sodium cyclamate, Sodium m-bromophenyl sulphamate, Sodium m-chlorophenyl sulphamate, Sodium m-cyanophenyl sulphamate, Sodium m-fluorophenyl sulphamate, Sodium m-methylphenyl sulphamate, Sodium N-(1,3,4-thiadiazol-2-yl)sulfamate, Sodium N-(1,3-thiazol-2-yl)sulfamate, Sodium N-(1-ethoxycarbonylpiperidin-4-yl)sulfamate, Sodium N-(2,2-dimethylpropyl)sulfamate, Sodium N-(2,3-dihydro-1H-inden-4-yl)sulfamate, Sodium N-(2-bromo-4-methylphenyl)sulfamate, Sodium N-(2-ethoxyphenyl)sulfamate, Sodium N-(2-ethyl-5-methylphenyl)sulfamate, Sodium N-(2-ethylbutyl)sulfamate, Sodium N-(2-methylpentyl)sulfamate, Sodium N-(2-methylphenyl)sulfamate, Sodium N-(2-methylthian-4-yl)sulfamate, Sodium N-(2-propan-2-ylphenyl)sulfamate, Sodium N-(2-propylphenyl)sulfamate, Sodium N-(3,5-dichlorophenyl)sulfamate, Sodium N-(3,5-difluorophenyl)sulfamate, Sodium N-(3-ethoxyphenyl)sulfamate, Sodium N-(3-ethylphenyl)sulfamate, Sodium N-(3-methoxy-5-methylphenyl)sulfamate, Sodium N-(3-methylcyclohexyl)sulfamate, Sodium N-(3-methylcyclopentyl)sulfamate, Sodium N-(3-propan-2-ylphenyl)sulfamate, Sodium N-(4,5-dimethyl-1,3-thiazol-2-yl)sulfamate, Sodium N-(4-bromo-2-ethylphenyl)sulfamate, Sodium N-(4-bromo-2-methylphenyl)sulfamate, Sodium N-(4-bromo-3-methylphenyl)sulfamate, Sodium N-(4-butoxycarbonylphenyl)sulfamate, Sodium N-(4-butyl-1,3-thiazol-2-yl)sulfamate, Sodium N-(4-methoxy-1,3 -benzothiazol-2-yl)sulfamate, Sodium N-(4-methyl-1,3 -benzothiazol-2-yl)sulfamate, Sodium N-(4-methyl-1,3-thiazol-2-yl)sulfamate, Sodium N-(4-morpholin-4-ylphenyl)sulfamate, Sodium N-(4-pentyl-1,3-thiazol-2-yl)sulfamate, Sodium N-(4-propan-2-yloxycarbonylphenyl)sulfamate, Sodium N-(4-propyl-1,3-thiazol-2-yl)sulfamate, Sodium N-(5-cyclobutyl-1,3,4-thiadiazol-2-yl)sulfamate, Sodium N-(5-ethyl-1,3,4-thiadiazol-2-yl)sulfamate, Sodium N-(5-methoxycarbonyl-2-methylphenyl)sulfamate, Sodium N-(5-methylthiolan-3-yl)sulfamate, Sodium N-(5-propyl-1,3,4-thiadiazol-2-yl)sulfamate, Sodium N-(5-tridecyl-1,3,4-thiadiazol-2-yl)sulfamate, Sodium N-(6-chloro-1,3-benzothiazol-2-yl)sulfamate, Sodium N-(6-ethylpyridin-2-yl)sulfamate, Sodium N-(6-methyl-1,3-benzothiazol-2-yl)sulfamate, Sodium N-(6-propylpyridin-2-yl)sulfamate, Sodium N-[2-(ethylamino)phenyl]sulfamate, Sodium N-[2-(ethylsulfanyl)ethyl]sulfamate, Sodium N-[2-(methylsulfanyl)ethyl]sulfamate, Sodium N-[3-(1-hydroxyethyl)phenyl]sulfamate, Sodium N-[3-(trifluoromethoxy)phenyl]sulfamate, Sodium N-[4-(2-methylpropoxycarbonyl)phenyl]sulfamate, Sodium N-[4-(2-methylpropyl)-1,3-thiazol-2-yl]sulfamate, Sodium N-[4-(dimethylamino)phenyl]sulfamate, Sodium N-[4-(propan-2-yl)phenyl]sulfamate, Sodium N-[5-(ethylsulfanyl)-1,3,4-thiadiazol-2-yl]sulfamate, Sodium N-[5-(propan-2-yl)-1,3,4-thiadiazol-2-yl]sulfamate, Sodium N-[5-(trifluoromethyl)-1,3,4-thiadiazol-2-yl]sulfamate, Sodium phenylsulfamate, Sodium saccharin, Sorbo-isomer of 4,1',4',6'-tetrachloro sucrose, Sorbose, Spiro[(4-H-1,3-benzodithian)-2,1'-(5'-methoxy-6'hydroxy-[1H]-2',3'-dihydroindene)], SRI Oxime V, Stachyose, Steviol, Steviolbioside, Stevioside, Sgal-2, Strogin 1, Strogin 2, Strogin 4, Sucralose, Sucralose analogue 49, Sucralose analogue 51, Sucralose analogue 52, Sucrononic acid, Sucrose, Sulfone, Suosan, Suosan (N-glycine homolog), Suosan-aspartame hybrid 3, Suosan-aspartame hybrid 4, Suosan-aspartame hybrid 14, Suosan-aspartame hybrid 21, Superaspartame, syn-5-Benzyl-2-Furfuraldehyde oxime, syn-Furfuraldehyde oxime, Telosmoside A8, Telosmoside A9, Telosmoside A10, Telosmoside A11, Telosmoside A12, Telosmoside A13, Telosmoside A14, Telosmoside A15, Telosmoside A16, Telosmoside A17, Telosmoside A18, Tetrachloroethane, Tetrahydro-2H-thiopyran-3-ylsulfamic acid sodium salt, Thiocane-5-ylsulfamic acid sodium salt, Thiocyanosuosan, Thiophenesaccharin, Thiosuosan, Thiosuperaspartame, trans-Anethole, trans-Cinnamaldehyde, Trehalose, Trehalulose, Tripotassium glycyrrhizinate, Turanose, Xylitol, Xylobiose, Xylose, α-D-Fructofuranose, α-D-Lactose, α-D-Psicofuranose, α-L-Arabinopyranose, α-L-Rhamnopyranose, β-(3-hydroxy-4-methoxyphenyl) ethylbenzene, β-Cyclodextnn, β-D-Arabinose, β-D-Fructose, β-D-Glucopyranose, β-D-Ribopyranose, β-D-Xylofuranose, β-L-Fucopyranose, β-L-Glucopyranose, (-)-3-Methoxy-4-hydroxyphenol 1-O-?-D-(6?-O-galloyl)-glucopyranoside, (-)-alpha-thujone, (-)-Epicatechin, (-)-Epicatechin gallate, (-)-Epigallocatechin (EGC), (-)-Parthenolide, (-)-Quercoresinoside B, (+)-Quercoresinoside A, (+)-Taxifolin, (+)-Tetramethylhaematoxylin , (+/-) Equol, (22R,25R)-3beta-(4-0-alpha-L-Rhamnopyranosyl-beta-D-glucopyranosyloxy)-26-(beta-D-glucopyranosyloxy)furosta-5-ene-22-ol, (25R)-Furostane-3?,22,26-triol-3-O-[?-L-rhamnopyranosyl-(1?4)-?-D-glucopyranoside]-26-O-?-D-glucopyranoside, (2-methylcyclohexyl)sulfamic acid methyl ester, (2R)-3-(allylthio)-2-[(4R)-4-(allylthiomethyl)-6-formyl-3-oxo-3,4-dihydropyrrolo-[1,2-a]pyrazin-2(1H)-yl] propanoic acid, (2R)-3-(allylthio)-2-[(4S)-4-(allylthiomethyl)-6-formyl-3-oxo-3,4-dihydropyrrolo[1,2-a]pyrazine-2(1H)-yl]propionic acid, (2S,3R,4R,5R,6S)-2-[(2R,3S,4R,5R,6R)-4,5-Dihydroxy-2-(hydroxymethyl)-6-[[(1R,2S,6R,7S,9S,12S,13S,16S)-6-hydroxy-7,9,13-trimethyl-6-[(3S)-3-methyl-4-[(2R,3R,4S,5S,6R)-3,4,5-trihydroxy-6-(hydroxymethyl)oxan-2-yl]oxybutyl]-5-oxapentacyclo[10.8.0.02,9.04,8.013,18]icosan-16-yl]oxy]oxan-3-yl]oxy-6-methyloxane-3,4,5-triol, (2S,3R,4S,5S,6R)-2-[(2R,3R,4S,5S,6R)-4-hydroxy-6-(hydroxymethyl)-2-[(1R,2S,4S,5'S,6R,7S,8R,9S,12S,13S,16S,18R)-5',7,9,13-tetramethylspiro[5-oxapentacyclo[10.8.0.02,9.04,8.013,18]icosane-6,2'-oxane]-16-yl]oxy-5-[(2S,3R,4S,5S)-3,4,5-trihydroxyoxan-2-yl]oxyoxan-3-yl]oxy-6-(hydroxymethyl)oxane-3,4,5-triol, (2S,6S)-octahydrodipyrrolo[1,2-a;1',2'-d]pyrazine-5,10-dione, cis-cyclo(L-Pro-L-Pro), (3S,3aS,5S,7R,10E,11aS)-7-hydroxy-3,10-dimethyl-6-methylene-2-oxo-2,3,3a,4,5,6,7,8,9,11a-decahydrocyclodeca[b]furan-5-yl acetate, (4-hydroxy-5-methoxypentyl)benzol, (6-methoxy-3-propylhexyl)benzene, (E)-1-(3,6-dihydro-2H-pyran-4-yl)-N-hydroxymethanimine, (E)-1-(3,6-dihydro-2H-thiopyran-4-yl)-N-hydroxymethanimine, (E)-1-(5,6-dihydro-2H-pyran-3-yl)-N-hydroxymethanimine, (E)-1-(bicyclo[2.2.2]octa-2,5-dien-2-yl)-N-hydroxymethanimine, (E)-1-[4-(1,2-dimethoxy-2-propanyl)-1-cyclohexen-1-yl]-N-hydroxymethanimine, (E)-N-hydroxy-1-[5-(1-methoxyethyl)-1,4-cyclohexadien-1-yl]methanimine, (E)-N-hydroxy-1-[5-(1-methoxyethyl)-1-cyclohexen-1-yl]methanimine, (E)-N-hydroxy-1-[5-(methoxymethyl)-1-cyclohexen-1-yl]methanimine , (S)-Praziquantel, 1&alpha,6&alpha,8&alpha-trihydroxy-5&alpha,7&betaH-guaia-3,9,11(13)-trien-12-oic acid, 1,1-Dimethylbiguanide citrate, 1',2'-Dihydroisoxanthohumol C, 1',2'-Dihydroxanthohumol C, 1',2'-Dihydroxanthohumol F, 1',2'-Dihydroxanthohumol K, 1,3,7,9-Tetramethyluric acid, 1,3-Butylene glycol, 1,5-Pentanediol, 1,8-Naphthalaldehydic acid, 10, 15-Bisfuranyl-1-oxo-2,3-dihydro-1H-indolizinium-6-olate, 11,13-Dihydrolactucin, 1-Acetoxy-2,4-dihydroxyheneicosa-12,15-diene, 1-Acetoxy-2,4-dihydroxyheptadeca-16-ene, 1-Acetoxy-2,4-dihydroxyheptadeca-16-yne, 1-Acetoxy-2-hydroxy-4-oxoheneicosa-5,12,15-triene, 1-Acetoxy-2-hydroxy-4-oxoheptadeca-16-ene, 1-Acetoxy-2-hydroxy-4-oxoheptadecane, 1-Acetoxy-2-hydroxy-4-oxo-octadeca-12-ene, 1-Isopropyl-4-methyl, 1-Methoxy-2-(1-methylcyclohexene-4-yl)-2-propanol, 1-Methoxy-4-methyl-6-phenylhexan-2-ol, 1-Methoxy-4-prenylphloroglucinol, 1-Methoxy-6-phenylhexan-2-ol, 1-Methy-2-quinolinone, 1-Methyl-5-(1-methoxyethyl)-1,4-cyclohexadiene, 1-Methyl-5-(1-methoxyethyl)cyclohexene, 1-Naphthoic acid, 1-Nitronaphthalene, 1-O-beta-D-(2-methylbutyryl)phloroglucinol glucopyranoside, 1-O-beta-D-(2-methylpropanoyl)phloroglucinol glucopyranoside, 1-O-oleoyl-glycerol, 1-0-Sinapoyl-beta-D-glucoside, 1-Penten-3-ol, 2-(2,4-dichlorobenzenesulfonyl)-3-methylbutanoic acid, 2-(2,4-dimethoxybenzoyl)benzoic Acid , 2-(3,4-dichlorophenylsulfonyl)-3-methylbutanoic acid, 2-(4-nitrobenzoyl)benzoic Acid, 2-(cyclohexene-4-yl)-1,2-propanediol, 2,2,4-Trihydroxychalcone, 2',3'-Dehydrocyclohumulohydrochinon, 2,3-Di(pyrrolidine-1-yl)-5-hydroxy-5-methyl-2-cyclopentene-1-one, bis(pyrrolidino)hexose reductone, 2',3-Dihydroxy-4-propoxydihydrochalcone, 2",3"-Epoxyxanthofumol, 2,4-Dinitro-propoxybenzene, 2,6-Dimethylpiperidine, 2-[2-(dibutylamino)ethyl]-1,1-dioxo-1,2-benzothiazol-3-one, 2-[2-(diethylamino)ethyl]-1,1-dioxo-1,2-benzothiazol-3-one, 2-[3-(diethylamino)propyl]-1,1-dioxo-1,2-benzothiazol-3-one, 2-{4-[(E)-(Hydroxyimino)methyl]-3-cyclohexen-1-yl}-1,2-propanediol, 2-{4-[(E)-(Hydroxyimino)methyl]-3-cyclohexen-1-yl}-1-methoxy-2-propanol, 2-{4-[(E)-(Hydroxyimino)methyl]-3-cyclohexen-1-yl}-2-methoxy-1-propanol,2-{4-[(hydroxyimino)methyl]cyclohex-3-en-1-yl}propan-2-ol, 2-Amino-5-nitrothiazole, 2-Heptanol, 2-Heptyl-3-hydroxy-quinolone, 2'-Hydroxyxanthohumol M, 2-Methoxy-2-(1-methylcyclohexene-4-yl)-1-propanol, 2-Methoxy-4-methylphenol, 2-Methoxy-5-(2-phenylpropyl)phenol, 2-Methylbicyclo[2.2.2]octa-2,5-diene, 2-Naphthyl beta-D-glucopyranoside, 2-Nitro phenyl beta-D-glucopyranoside, 2-Nitroaniline, 2-Octanone, 2-O-oleoyl-glycerol, 2-Thiouracil, 3-(2-(4-Nitrophenyl)acetamido)propanoic acid, 3-(3,4-dimethoxyphenyl)-8-hydroxy-3,4-dihydroisochromen-1-one, 3-(p-chlorophenylosulfonyl)butanoic acid, 3-(propan-2-yloxy)-1,2-benzothiazole 1,1-dioxide, 3-(p-tolilosulfonyl)propionic acid, 3,2-Dihydroxychalcone, 3,4-Dinitrobenzoic acid, 3,5-Diiodosalicylic acid, 3,6,3,4-Tetrahydroxyflavone, 3,6-Dihydro-4-methyl-2H-pyran, 3,7,4-Trihydroxyflavone, 3,7-Dimethyl-1-octanol, 3-{[(4-cyanophenyl)carbamoyl](cyclohexyl)amino}propanoic acid, 3-{benzyl[(4-cyanophenyl)carbamoyl]amino}propanoic acid, 3-Amino-3-[(1-cyclohexylpropan-2-yl)(methyl)carbamoyl]propanoic acid, LD-form, 3-Amino-3-[(1-cyclohexylpropan-2-yl)(methyl)carbamoyl]propanoic acid, LL-form, 3-Amino-3-[(6-amino-1-methoxy-1-oxohexan-2-yl)carbamoyl]propanoic acid, 3-Amino-3-[methyl(1-phenylpropan-2-yl)carbamoyl]propanoic acid, LD-form, 3-Amino-3-[methyl(1-phenylpropan-2-yl)carbamoyl]propanoic acid, LL-form, 3-Amino-3-{[1-(1H-indol-2-yl)propan-2-yl]carbamoyl}propanoic acid, 3-Amino-3-{[1-(2H-1,3-benzodioxol-5-yl)propan-2-yl]carbamoyl}propanoic acid, 3-Amino-3-{[1-(4-methanesulfonamidophenyl)propan-2-yl]carbamoyl}propanoic acid, 3-Amino-4-(4-methylpentan-2-ylamino)-4-oxobutanoic acid, 3-Amino-4-[(1-methoxy-3-methyl-1-oxopentan-2-yl)amino]-4-oxobutanoic acid, 3-Amino-4-[(1-methoxy-4-methyl-1-oxopentan-2-yl)amino]-4-oxobutanoic acid, 3-Amino-4-chlorobenzoic acid, 3-Amino-4-oxo-4-(2-phenylpropylamino)butanoic acid, 3-Heptanol, 3-Hydroxy-4-methoxybenzyl benzoate, 3-Methyl-2-phenylbutyraldehyde, 3-Methyl-5,6-dihydro-2H-pyran, 3-O-Caffeoyl-γ-quinic acid lactone, 3-Phenylsulfonylpropionic acid, 4-(methoxymethyl)-2-methylcyclohexene, 4,2,5-Trihydroxychalcone, 4,4'-Oxydi-2-butanol, 4-Ethoxyphenylthiourea, 4-Fluorotoluene, 4'-Hydroxy-6-methoxyflavone, 4'-Hydroxy-7-methoxyflavone, 4-Hydroxyanisol, 4-Hydroxychalcone, 4'-Hydroxyflavone, 4'-Hydroxytunicatachalcone, 4-Isopropylbenzaldehydeoxime, 4-Methyl-5,6-dihydro-2H-thiopyran, 4-O-Caffeoyl-muco-γ-quinic acid lactone, 5-(1-carboxyethyl)-2-(6-hydroxy-7,7-dimethyl-1-oxo-1,3,3a,6,7,7a-hexahydro-2-benzofuran-3a-yl)cyclohexane-1-carboxylic acid, 5-(1-carboxyethyl)-2-(6-hydroxy-7,7-dimethyl-1-oxo-octahydro-2-benzofuran-3a-yl)cyclohexane-1-carboxylicacid,5-(1-carboxyethyl)-2-(7,7-dimethyl-1,6-dioxo-octahydro-2-benzofuran-3a-yl)cyclohexane-1-carboxylic acid, 5-(2-cyclohexylethyl)-2-methoxycyclohexan-1-ol, 5-(3-hydroxy-2-phenylpropyl)-2-methoxyphenol, 5,2'-Dihydroxyflavone, 5,4'-Dihydroxyflavone, 5,5'-Methylenedisalicylic acid, 5,7,2'-Trihydroxyflavone, 5,7,4'-Trimethoxyflavone, 5,7-Dimethoxyflavone, 5-Hydroxyflavone, 5-Hydroxymethyl-1-[(5-hydroxymethyl-2-furanyl)methyl]-1Hpyrrole-2-carbaldehyde, 5-Methoxysaccharin, 5-Methyl-2,3-dipyrrolidin-1-ylcyclopent-2-en-1-one, 5-Nitrosaccharin, 5-O-Caffeoyl-muco-y-quinide, 5-O-Caffeoylquinic acid, 5'-Prenylxanthohumol, 5-Propyl-2-thiouracil, 6,4'-Dihydroxyflavone, 6,7,4'-Trihydroxyisoflavone, 6,7-Dimethoxyflavone, 6-{[2,5-bis(chloromethyl)-3,4-dihydroxyoxolan-2-yl]oxy}-5-chloro-2-(chloromethyl)oxane-3,4-diol, 6-Chloro sucrose, 6-Iodo-1,2-benzisothiazole-3(2H)-one 1,1-dioxide, 6-Methoxyluteolin, 6-Methoxymellein, 6-Methylcoumarin, 6-Nitrosaccharin, 6"-O-Acetylgenistin, 6-O-benzoyl sucrose, 6-O-benzyl sucrose, 6-Phosphate sucrose, 7,3',4'-Trihydroxyflavone, 7,3',4'-Trihydroxyisoflavone, 7,4'-Dihydroxyflavone, 7,4'-Dimethoxyisoflavone, 7,8,4'-Trihydroxyisoflavone, 7-Hydroxyisoflavone, 7-Methoxy-3-oxo-2,3-dihydro-1,2-benzoisothiazole 1,1-dioxide, 7-Methyl-2,3,6,7-tetrahydrocyclopenta[b]azepin-8(1H)-one, 7-Nitrosaccharin, 8-Deoxylactucin-15-sulphate, 8-Prenylnaringenin, 9,10,13-Trihydroxy-trans-11-octadecenoic acid, Absinthin, Acecarbromal, Acetanisole, Acetophenone, Acetylpyrazine, Acetylthiourea, Aconine, Acortatarin A, Adenosine, Adhulupone, Adhumulinone, Adhumulone, Adlupulone, Aglycon H.g.-12, Alerlisin, Allobarbital, Aloin, alpha,alpha-Dimethylphenethyl alcohol, alpha-Glu-Trp, alpha-Glu-Tyr, alpha-Methylbenzyl acetate, alpha-Terpinyl anthranilate, alpha-Tetralone, Alverine citrate, Amarogentin, Aminophylline, Ammonium picrate, Amobarbital, Amobarbital sodium salt, Amodiaquin dihydrochloride, Amphetamine phosphate, Amphetamine sulfate, Amprotropine phosphate, Amylocaine hydrochloride, Andrographolide, Androsterone, Anethole trithione, Antazoline hydrochloride, Antazoline phosphate, anti-Cyclohexane carboxaldehyde, Antipyrine, ANTU, Apigenin, Aprobarbital, Aprobarbital sodium salt, Arborescin, Arbutin, Arecoline hydrobromide, Arglabin, Aristolochic acid, Artabsin, Artecalin, Artemisin, Artemorin, Asparasaponin II, Aspirin, Atranorin, Atropine, Atropine sulfate, Avenacoside A, Avenacoside B, Avenanthramide 1c, Avenanthramide 1f, Avenanthramide 1p, Avenanthramide 1s, Avenanthramide 2c, Avenanthramide 2f, Avenanthramide 2p, Avenanthramide 2s, Avocadene, Avocadyne, Azacyclonol hydrochloride, Azathioprine, Azintamide, Bakankosin, Barbital, Barbital sodium salt, Benzaldehyde, Benzamide, Benzethonium chloride, Benzilic acid, Benzoin, Berberine, Berberine chloride, Bergapten, beta-carotene, beta-colubrine, Biochanin A, Bretylium tosylate, Brucine, Bufotoxin, Bupropion hydrochloride, Butabarbital sodium salt, Butalbital, Butallylonal, Butallylonal sodium salt, Butanoic acid, 3-amino-4-[(1-ethylbutyl)amino]-4-oxo-, Butein, Butethal, Butethamine m-isomer hydrochloride, Butyl levulinate, Caffeic acid, Caffeic acid ethyl ester, Caffeine, Calcium hydroxide, Calcium lactate, Camphotamide, Capparisine B, Caprolactam, Carbimazole, Carbinoxamine maleate, Carisoprodol, Carnosol, Cascarillin, Catechin, Cefpodoxime 1-(isopropoxycarbonyloxy)ethyl ester, cefpodoxime proxetil, Cephaeline, Cetraric acid, Chalcone, Chenodiol, Chloral hydrate, Chloramphenicol, Chlorbenzoxamine dihydrochloride, Chlorbetamide, Chlorhexadol, Chlorhexidine, Chlormerodrin, Chlormetacrine dihydrochloride, Chloroprocaine, Chloroquine, Chloroquine phosphate, Chlorpheniramine, Choline chloride, Chonemorphine, Chrysamminic acid, Chrysin, Chrysoeriol, Cinchonine, Cinchophen, Cinnamedrine, Cinnamyl alcohol, Ciprofloxacin, cis-11-Methyl-2-dodecenoic acid, cis-Adhumulinic acid, cis-Alloisoadhumulone, cis-Alloisocohumulone, cis-Alloisohumulone, cis-Cohumulinic acid, cis-Cyclo(Gly-L-Phe), cis-Cyclo(Gly-L-Pro), cis-Cyclo(L-Ala-Gly), cis-Cyclo(L-Ala-L-Ile), cis-Cyclo(L-Ala-L-Leu), cis-Cyclo(L-Ala-L-Phe), cis-Cyclo(L-Ala-L-Pro), cis-Cyclo(L-Ala-L-Tyr), cis-Cyclo(L-Ala-L-Val), cis-Cyclo(L-Asn-L-Phe), cis-Cyclo(L-Asp-L-Phe), cis-Cyclo(L-Ile-L-Phe), cis-Cyclo(L-Ile-L-Pro), cis-Cyclo(L-Leu-Gly), cis-Cyclo(L-Leu-L-Phe), cis-Cyclo(L-Leu-L-Pro), cis-Cyclo(L-Phe-L-Pro), cis-Cyclo(L-Phe-L-Ser), cis-Cyclo(L-Pro-L-Thr), cis-Cyclo(L-Pro-L-Tyr), cis-Cyclo(L-Val-L-Leu), cis-Cyclo(L-Val-L-Phe), cis-Cyclo(L-Val-L-Pro), cis-Cyclo(L-Val-L-Tyr), cis-Cyclo(L-Val-L-Val), cis-Humulinic acid, cis-Isoadhumulone, cis-Isocohumulone, cis-Isohumulone, cis-p-Coumaric acid ethyl ester, cis-p-Coumaric acid methyl ester, Clarithromycin, Clindamycin, Clobutinol hydrochloride, Clonixin, Cnicin, Cocaine hydrochloride, Codamine, Cohulupone, Cohumulinone, Cohumulone, Colchicine, Columbin, Colupulone, Compound 842, Compound 843, Compound 844, Compound 845, Compound 849, Compound 850, Compound 854, Compound 855, Compound 857, Compound V, Compound VII, Compound IX, Compound X, Compound XV, Compound XVII, Compound XX, Compound XXIV, Conessine hydrobromide, Convallatoxin, Coriamyrtin, Costunolide, Coumarilic acid, Coumestrol, Creatine, Creatinine, Crispolide, Cromolyn, Cucurbitacin B, Cucurbitacin D, Cucurbitacin E, Cucurbitacin I, Cyanidin, Cyanidin-3-glucoside, Cyclexedrine hydrochloride, Cyclobarbital, Cyclobarbital calcium, Cyclohexene, 4-(1,2-dimethoxy-1-methylethyl)-1-methyl-, Cycloheximide, Cyclohexylamine, Cyclolinopeptide E, Cyclooctanone, Cyclopentamine hydrochloride, Cyclopentobarbital, Cycrimine hydrochloride, Cynaropicrin, Daidzein, Daidzin, D-Alanine tertiary butyl ester, D-Amygdalin, Dapsone, Datiscetin, D-Camphor, D-Citronellol, Deferiprone, Dehydrocholic acid, Dehydrocyanaropicrin, Dehydrotricycloadlupone, Dehydrotricyclocolupone, Dehydrotricyclolupone, Denatonium benzoate, Denatonium chloride, Denatonium derivative 1, Denatonium derivative 2, Denatonium derivative 3, Denatonium derivative 4, Denatonium derivative 5, Denatonium derivative 6, Denatonium derivative 7, Denatonium derivative 8, Denatonium derivative 9, Denatonium derivative 10, Denatonium derivative 11, Denatonium derivative 12, Denatonium derivative 13, Denatonium derivative 14, Denatonium saccharide, Dexamethasone, Dextroamphetamine sulfate, Dextromethorphan, Dextromoramide bitartrate, D-Fenchone, Diazepam, Dibekacin sulfate, Diclofenac, Dicumarol, Dicyclomine hydrochloride, Diethyl phthalate, Diethylbromoacetamide, Digitoxin, Dihydro taurin, Dihydroepinodosin, Dihydroisodonal, Dihydrooridonin tetraacetate, Diisobutylamine, Diltiazem hydrochloride, Dimemorfan phosphate, Dimethocaine hydrochloride, Dimethyl sulfoxide, Dimethylthioformamide, Diosbulbin D, Dioscin, Dioxypyramidon, Diperodon hydrochloride, Diphenhydramine, Diphenidol, Dipyridamole, Diterpene derivative 3, Diterpene derivative 4, Divinyl glycol, Divinyl sulfoxide, D-Leu-D-Leu, Docosahexaenoic acid, Dodecarbonium chloride, Domiphen bromide, Donepezil hydrochloride, Doxepin, Drotebanol, Dyphylline, Edrophonium bromide, EINECS 227-420-9, Emetine, Enalapril, Enmein, Enmein-3-acetate, Enoxacin, epi-Acortatarin A, Epigallocatechin gallate, Epirizole, Epizaluzanin C, Eprazinone dihydrochloride, Eriodictyol, Eriodictyolchalcone, Erythromycin, Esculine, Ethyl 3-(3-hydroxy-4-methoxyphenyl)-2-phenylpropanoate, Ethyl benzoate, Ethyl benzoylacetate, Ethyl biscoumacetate, Ethyl formate, Ethyl maltol, Ethyl trans-caffeate, Ethylbenzhydramine hydrochloride, Ethylene thiourea, Ethylhydrocupreine, Ethylpyrazine, Etilefrin hydrochloride, Eugenin, Eugenyl methyl ether, Falcarindiol, Falcarindiol 3-acetate, Falcarinol, Famotidine, Fencamine hydrochloride, Fenchyl alcohol, Fennel oil, Fenproporex hydrochloride, Fentanyl citrate, Ferroin, Ferulic acid ethyl ester, Fisetin, Flavanone, Flavone, Flufenamic acid, Formomonetin, Fraxin, Furfuryl alcohol, Furostanol saponin (TFI), Fustin, Galegine, Gallic acid ethyl ester, Gamabufotalin, gamma,gamma'-dipyridyl, gamma-Glu-Tyr, Ganoderic acid A, Garryine, Gatifloxacin, Gaudichaudioside D, Gazarin, Genistein, Genkwanin, Gentianine, Gentiobiose, Gentiopicrin, Geranyl acetate, Geranyl formate, Geranyl propionate, Germacradien-6,11-dihydroxy-8,12-olide, Germacrolide, Geshoidin, Ginkgolide A, Ginkgolide B, Ginkgolide C, Glaucarubin, Glimepiride, Gln-Leu-Phe-Asn-Pro-Ser-Thr-Asn-Pro-Trp-His-Ser-Pro-OH, Glucobrassicin, Glucose pentaacetate, Glucovanillin, Glyceryl caprate, Glyceryl monolinoleate, Glyceryl monostearate, Glyceryl palmitate, Glyceryl tripropanoate, Glycitein, Glycitin, Goitrin, Gossypetin, Grosheimin, Guaifenesin, Haloperidol, Harman, Helenalin, Helicin, Heptabarbital, Herbacetin, Herbolide A, Herbolide D acetate, Hexethal sodium, Hexobarbital sodium, Hg-12, Homidium bromide, Homocamfin, Homoeriodictyol, Homoquinizolate, Homoserine lactone, N-(3-oxohexanoyl)-L-, Homoserine lactone, N-(3-oxooctanoyl)-L-, Homoserine lactone, N-butyryl-L-, Homoserine lactone, N-hexanoyl-L-, Hulupinic acid, Hulupone, Humulinone, Humulone, Hydrocortisone, Hydrogen peroxide, Hydroperoxy-cis-alloisoadhumulone, Hydroperoxy-cis-alloisocohumulone, Hydroperoxy-cis-alloisohumulone, Hydroperoxy-trans-alloisoadhumulone, Hydroperoxy-trans-alloisocohumulone, Hydroperoxy-trans-alloisohumulone, Hydroperoxytricycloadlupone, Hydroperoxytricyclocolupone, Hydroperoxytricyclolupone, Hydroxychloroquine sulfate, Hydroxy-cis-alloisoadhumulone, Hydroxy-cis-alloisocohumulone, Hydroxy-cis-alloisohumulone, Hydroxylupanine, Hydroxy-trans-alloisoadhumulone, Hydroxy-trans-alloisocohumulone, Hydroxy-trans-alloisohumulone, Hydroxytricycloadlupone, Hydroxytricyclocolupone, Hydroxytricyclolupone, Hydroxyzine dihydrochloride, Hypoxanthine, Imidazole, Imipramine N-Oxide hydrochloride, Improsulfan tosylat, Inaperisone hydrochloride, Inosine, Iodinated glycerol, Ipodate sodium salt , Isobutyl acetate, Isobutyl propionate, Isobutyl salicylate, Isobutylsulfamic acid ethyl ester, Isodonal, Isoeugenyl methyl ether, Isoflavone, Isoliquiritigenin, Isolupinine, Isometheptene mucate, Isopimpinellin, Isopropyl alcohol, Isorhamnetin, Isoxanthohumol, Isoxanthohumol H, Isoxanthohumol M, Isoxanthohumol P, Isoxantholupon, Isoxsuprine hydrochloride, Kaempferol, Kaempferol 3-O-beta-D-(6"-O-malonyl)-glucoside, Kaempferol-3-O-beta-D-glucopyranoside, Khellin, Labetalol-HCl, Lactucin, Lactucin-15-oxalate, Lactucopicrin, Lactucopicrin-15-oxalate, Lactupicrin, Laevuflex, Lafutidine, L-Ala-L-Leu, L-Ala-L-Val, Lappaconitine, L-Arginine, L-Aspartyl-L-alanine methyl ester, L-Aspartyl-L-alanyl tetramethylcyclopentyl, L-Asp-D-Phe-OMe, Leu-Leu-Leu, Leu-Phe, Leu-Trp, L-Gly-D-Leu, L-Gly-D-Phe, L-Gly-L-Leu, L-Gly-L-Phe, L-Histidine , Lidocaine, Lidocaine HCl, Limonin, Linamarin, Lincomycin hydrochloride, Liquiritigenin, L-Isoleucine, Lithium bromide, L-Leucine, L-Leu-D-Leu, L-Leu-L-Ala, L-Leu-L-Gly, L-Leu-L-Leu, L-Lysine, L-Menthone, L-Norleucine, L-Norvaline, Lomefloxacin, L-Phe-L-Gly, L-Phe-L-Gly-L-Gly-L-Phe, L-Phe-L-Gly-L-Phe-L-Gly, L-Phenylalanine, L-Tryptophan, L-Tyrosine, Lupinine, Lupulone, Luteolin, L-Valine, L-Val-L-Ala, Lycoctonine, Lycopodine, Magnesium bromide, Magnesium chlorate, Magnesium chloride, Magnesium lactate, Magnesium sulfate, Malathion, Malvidin-3-glucoside, Marrubiin, Matrine, m-Benzenedisulfamic acid, disodium salt, Meconin, Mefenamic acid, Melilotoside, Menthyl isovalerate, Meperidine hydrochloride, Mephenesin, Meprobamate, Meranzin, Mersalyl, m-Tolylurea, Methacycline hydrochloride, Methadone, Methadone hydrochloride, Methamphetamine hydrochloride, Methantheline bromide, Methimazole, Methoxsalen, Methoxyphenamine hydrochloride, Methyl 2-[2-(3-hydroxy-4-methoxyphenyl)ethyl]benzoate, Methyl acetate, Methyl anthranilate, Methylbenzethonium chloride, Methylergonovine maleate, Methylthiouracil, Methyl-$\alpha$-D-2,6-dideoxy-gluco-pyranoside, Methyl-$\alpha$-D-3,6-dideoxy-gluco-pyranoside, Methyl-$\alpha$-D-4,6-dideoxy-gluco-pyranoside, Methyprylon, Metralindole hydrochloride , Mibefradil dihydrochloride, Miconazole, m-Nitrobenzene, Momordicine I, Momordin Ic, Momordin II, Morin, Morphine hydrochloride, Moveltipril calcium salt, Myricetin, N-(1-naphthyl)imidodisulfuric acid disodium salt, N-(2,2-diethoxyethyl)imidodisulfuric acid disodium salt, N-(2-methylprop-2-enylidene)hydroxylamine, N-(2-morpholinoethyl)imidodisulfuric acid disodium salt, N-(2-piperidinoethyl)imidodisulfuric acid disodium salt, N-(5-methoxy-2-methylpent-2-en-1-ylidene)hydroxylamine, N-(7-methoxy-2-methylhept-2-en-1-ylidene)hydroxylamine, N,N-Diethyl-6-nitro-1,1-dioxo-1,2-benzothiazol-3-amine, N-[(3-ethenylcyclohex-1-en-1-yl)methylidene]hydroxylamine, N-[(4-methylcyclohex-1-en-1-yl)methylidene]hydroxylamine, N-[2-(diethylamino)ethyl]imidodisulfuric acid disodium salt, N-[2-(dimethylamino)ethyl]imidodisulfuric acid disodium salt, N-[3-(dimethylamino)propyl]imidodisulfuric acid disodium salt, N-[6-[Bis(sodiooxysulfonyl)amino]hexyl]imidodisulfuric acid disodium salt, N-{[4-(propan-2-yl)cyclohexa-1,4-dien-l-yl]methylidene}hydroxylamine, N-{[5-(methoxymethyl)cyclopent-1-en-1-yl]methylidene}hydroxylamine, N1,N4,N8-Tris(dihydrocaffeoyl)spermidine, N1,N8-Bis(dihydrocaffeoyl)spermidine, Naphazoline hydrochloride, Narcobarbital, Naringin, Nealbarbital, Neoeriocitrin, Neohesperidin, Neoquassin, Neostigmine bromide, Nerol, Neryl isovalerate, N-Ethylthiourea, Nialamide, Nicotine, Niflumic acid, Nikethamide, N-Isobutyl acetamide, Nitrofurazone, N-Methylthiourea, Nobiletin, Nobilin, Nodosin, Nodosinol, Nomilin, Nonyl acetate, Nonyl alcohol, Nortricycloadlupone, Nortricyclocolupone, Nortricyclolupone, Noscapine, N-Phenyl-[p-phenylenebis(sulfamic acid sodium)] salt, Obacunone, Officinalisnin I, Officinalisnin II, Ofloxacin, Oleuropein, Omeprazole, o-Methoxybenzaldehyde, Oridonin, Orphenadrine, Ouabain, Oxeladin, Oxyacanthine, p-Acetanisidine, Pancuronium bromide, Pantoprazole, Pantothenic acid, Pantothenic acid calcium salt, Papaverine, Paracetamol, Parthenin, p-dimethoxybenzene, Pelargonidin, Pemirolast, Pentamethonium bromide, Pentamidine isethionate , Pentobarbital sodium salt, Pentoxifylline, Pentylenetetrazole, Periplocymarin, Peroxyartemorin, Persin, PGG, Phe-Leu, Phenacetin, Phenallymal, Phenazopyridine hydrochloride, Phenethyl alcohol, Phenethyl isothiocyanate, Phenobarbital sodium, Phenprobamate, Phentolamine mono-hydrochloride, Phenyl alpha-D-glucopyranoside, Phenyl beta-D-galactopyranoside, Phenyl beta-D-glucopyranoside, Phenylacetaldehyde, Phenylacetaldehyde dimethyl acetal, Phenylbiguanide, Phenylbutazone, Phenylephrine hydrochloride, Phenylethyl isothiocyanate, Phenylmethylbarbituric acid, Phenylpropanolamine HCl, Phenylthiocarbamide (PTC), Phenytoin sodium, Phe-Phe-Phe, Phe-Trp, Phloretin, Phloroisovalerophenon-3,5-di-C-beta-D-glucopyranoside, Pholcodine, Phthalylsulfathiazole, Picoline, Picoperine hydrochloride, Picric acid, Picrocrocin, Picromycin, Picrotin, Picrotoxin, Picrotoxinin, Pifarnine, Pinellic acid, Pinocembrin, Pipemidic acid, Piperazine, Piperidine, Piperidione, Piperonyl acetate, Piperonylic acid, Pipradrol hydrochloride, Pirenzapin, p-Lactophenetide, Plaunotol, p-Mentha-1,4-diene, p-Methoxybenzaldehyde, Pollenopyrroside A, Polysorbate 20, Polysorbate 60, Polysorbate 80, Poncirin , Potassium guaiacolsulfonate, Potassium sulfate, Prednisolone, Prednisone, Pro-Arg, Procainamide, Procaine, Procyanidin B1 3'-O-gallate, Procyanidin B2, Procyanidin B2 3'-O-gallate, Procyanidin B3, Procyanidin C1, Procyanidin C2, Progesterone, Progoitrin, Promethazine, Propafenone hydrochloride, Propallylonal, Propamidine isethionate, Propanolol, Propoxyphene, Propoxyphene hydrochloride, Propyl 2-furanacrylate, Propyl gallate, Propyl propionate, Propylthiouracil, Propyphenazone, Protocatechuic acid ethyl ester, Protodioscin, Prunetin, Prunin, Pseudoephedrine sulfate, Psychotrine, Purine, Pyrazine, Pyrazole, Pyridazine, Pyridine, Pyridostigmine Bromide, Pyrimidine, Pyrocatechin, Pyronaridine tetraphosphate, Pyrrole, Pyrrolidine, Pyrrolidinohexose reductone, QLFGPNVNPWHNP, Quassin, Quebrachamine, Quercetagetin, Quercetin, Quercetin-3-O-beta-D-glucopyranoside, Quinacrine dihydrochloride, Quinazoline, Quinic acid, Quinidine sulphate, Quinine, Quinine dihydrochloride, Quinine hydrochloride, Quinine sulfate, Quinizolate, Quinovic acid, Rabdosianone I, Rabdosianone II, Raffinose undecaacetate, Ranitidine hydrochloride, Resveratrol, Retamine, Rhodinyl acetate, Rhododendrin, Salicine, Salicylamide, Salsalate, Santamarine, Scabraside, Scillaren, Scorpiocohumol, Scorpiohumol, Scutellarein, Secobarbital sodium, Senecionine, Shikokianin, Silibinin, Sinapic acid, Sinapine, Sinensetin, Sinigrin, Sinigrin potassium, Sintenin, Skimmianine, Sodium benzoate, Sodium bromide, Sodium N-(2,3-dihydro-1,4-benzodioxin-6-yl)sulfamate, Sodium N-(2,4-dibromophenyl)sulfamate, Sodium N-(2,6-diethylphenyl)sulfamate, Sodium N-(2-benzylphenyl)sulfamate, Sodium N-(2-bromo-4-propan-2-ylphenyl)sulfamate, Sodium N-(2-butoxycarbonylphenyl)sulfamate, Sodium N-(2-chloro-4-fluorophenyl)sulfamate, Sodium N-(2-chloro-4-nitrophenyl)sulfamate, Sodium N-(2-methyl-4-nitrophenyl)sulfamate, Sodium N-(3-ethoxycarbonylphenyl)sulfamate, Sodium N-(3-ethyl-6-methylpyridin-2-yl)sulfamate, Sodium N-(3-fluoro-4-methylphenyl)sulfamate, Sodium N-(3-iodo-4-methylphenyl)sulfamate, Sodium N-(3-phenoxyphenyl)sulfamate, Sodium N-(3-phenylmethoxyphenyl)sulfamate, Sodium N-(3-tert-butylphenyl)sulfamate, Sodium N-(4-bromo-2-chlorophenyl)sulfamate, Sodium N-(4-bromo-2-fluorophenyl)sulfamate, Sodium N-(4-chloro-1,3-benzothiazol-2-yl)sulfamate, Sodium N-(4-chloro-2-nitrophenyl)sulfamate, Sodium N-(4-fluoro-2-methylphenyl)sulfamate, Sodium N-(4-fluoro-2-nitrophenyl)sulfamate, Sodium N-(4-fluoro-3-methylphenyl)sulfamate, Sodium N-(4-methoxy-2-methylphenyl)sulfamate, Sodium N-(4-methoxycarbonylphenyl)sulfamate, Sodium N-(4-tert-butyl-1,3-thiazol-2-yl)sulfamate, Sodium N-(5-bromo-6-methylpyridin-2-yl)sulfamate, Sodium N-(5-chloro-2-nitrophenyl)sulfamate, Sodium N-(6-nitro-1,3-benzothiazol-2-yl)sulfamate, Sodium N-[2-(butan-2-yl)phenyl]sulfamate, Sodium N-[2,6-di(propan-2-yl)phenyl]sulfamate, Sodium N-[3-(dimethylamino)phenyl]sulfamate, Sodium N-[3,5-bis(methoxycarbonyl)phenyl]sulfamate, Sodium N-[4-(1-hydroxyethyl)phenyl]sulfamate, Sodium N-[4-(4-nitrobenzenesulfonyl)phenyl]sulfamate, Sodium N-[4-(methylsulfanyl)phenyl]sulfamate, Sodium N-[4-(piperidine-1-sulfonyl)phenyl]sulfamate, Sodium N-[4-[(2-methylpropan-2-yl)oxycarbonyl]phenyl]sulfamate, Sodium N-{[1,1'-biphenyl]-2-yl}sulfamate, Sodium nitrobenzene sulfonate, Sodium phenol sulfonate, Sodium sulfate, Sodium thiocyanate, Solanidine, Spartein sulfate, Sparteine, Speciformin acetate, Streptomycin, Strychnine, Strychnine-N-oxide, Succinylcholine chloride, Sucrose octaacetate, Sugereoside, Sulfamerazine monosodium salt, Sulfameter, Sulfamethoxazole, Sulfamethoxypyridazine, Sulfisoxazole, Sulfobromophthalein sodium, Sulfonethylmethane, Sulfur dioxide, Sulfuretin, Suosan-aspartame hybrid 34, Suxibuzone, Swertiamarin, Syringic acid ethyl ester, Tacrine hydrochloride, Talbutal, Tangeretin, Tatridin A, Tatridin B, Tatridn A acetate, Taurine, Taurocholic acid, Telosmoside A2, Terpin, Terpinyl formate, Terpinyl isovalerate, Terpinyl propionate, Tetracaine hydrochloride, Tetracycloadhumol, Tetracyclocohumol, Tetracyclohumol, Tetraethylammonium hydroxide, Tetrahydroepinodosin, Teuflavin, Teuflavoside, Teumarin, Theobromine, Theophylline, Theophylline sodium acetate, Thiacetazone, Thiamine, Thiamine hydrochloride, Thioacetanilide, Thiocarbanilide, Thiosinamine, Tiaramide hydrochloride, Tiliacorine, Tinoridine hydrochloride, Tolazoline hydrochloride, Tomatine, Topiramate, Tramadol hydrochloride, trans-Adhumulinic acid, trans-Alloisoadhumulone, trans-Alloisocohumulone, trans-Alloisohumulone, trans-Cohumulinic acid, trans-Cyclo(D-Ala-L-Pro), trans-Cyclo(D-Ala-L-Val), trans-Cyclo(L-Val-D-Phe), trans-Humulinic acid, trans-Isoadhumulone, trans-Isocohumulone, trans-Isohumulone, trans-N-feruloyltyramine, trans-p-Coumaric acid ethyl ester, trans-p-Coumaric acid methyl ester, trans-Pseudoisoeugenol 2-methyl butyrate, Trapidil, Triacetin, Tributyrin, Tricetin, Tricycloadhumene, Tricycloadhumol, Tricycloadhumulactol, Tricycloadlupone, Tricyclocohumene, Tricyclocohumol, Tricyclocohumulactol, Tricyclocolupone, Tricyclohumene, Tricyclohumol, Tricyclohumulactol, Tricyclolupone, Tridihexethyl iodide, Triethyl citrate, Trigonelloside C, Trimethadione, Trimethaphan camsylate, Trimethoprim, Trp-Leu, Trp-Phe, Trp-Pro, Trp-Trp, Trp-Trp-Trp, Umbelliferone, Umbellifolide, Urea, Ursodiol, Valpromide, Vancomycin, Vanillic acid ethyl ester, Veatchine, Verbenalin, Vinbarbital sodium, Viquidil hydrochloride, Vitalboside A, Vulgarolid, Warfarin sodium salt, Xanthine, Xanthohumol, Xanthohumol B, Xanthohumol C, Xanthohumol D, Xanthohumol G, Xanthohumol H, Xanthohumol I, Xanthohumol L, Xanthohumol M, Xanthohumol N, Xanthohumol O, Xanthohumol P, Xanthone, Yohimbine, Zaluzanin D, ZINC01532585, $\alpha$-Chaconine, $\alpha$-Linolenic acid, $\alpha$-Santonin, (-)-form, $\alpha$-Solanine, $\beta$-D-Mannose, $\beta$-Glucogallin, (+)-(S)-Alapyridaine, (2E,6Z)-Nona-2,6-dienoic acid N-cyclopropyl amide, (E)-N-(3,7-dimethylocta-2,6-dienyl)cyclopropanecarboxamide, (R)-Strombine, (S)-Morelid, (S)-N2-((1-(N-butylamino)-carbonyl)-ethyl)guanosine 5'-monophosphate, 2-Allylthio-inosine 5'-monophosphate, 2-Furfurylthioinosine 5'-monophosphate, 2-Mercaptoinosine 5'-monophosphate, 6-Thioguanosine 5'-monophosphate, Adenosine 5'-monophosphate, Asp-Glu-Ser, Calcium 2-allyloxy-5'-inosinate, Calcium 2-isopentenylthio-5'-inosinate, Calcium diglutamate, Calcium guanylate, Calcium inosinate, Calcium-5'-ribonucleotides (mixture of calcium guanylate and calcium inosinate), Cyclopropanoic acid N-neomenthyl amide, Dipotassium guanylate, Dipotassium inosinate, Disodium 2-($\beta$-methallyl)thio-5'-inosinate, Disodium 2-(y-methallyl)thio-5'-inosinate, Disodium 2',3'-o-isopropylidene 5'-guanylate, Disodium 2',3'-o-isopropylidene 5'-inosinate, Disodium 2-chloro-5'-inosinate, Disodium 2-Ethoxy-5'-inosinate, Disodium 2-ethoxycarbonylethylthio-5'-inosinate, Disodium 2-ethoxyethylthio-5'-inosinate, Disodium 2-ethyl-5'-inosinate, Disodium 2-ethylthio-5'-inosinate, Disodium 2-furfurylthio-5'-inosinate, Disodium 2-i-Propoxy-5'-inosinate, Disodium 2-methoxy-5'-inosinate, Disodium 2-methyl-5'-inosinate, Disodium 2-methyl-6-mercaptopurine riboside 5'-phosphate, Disodium 2-methylthio-5'-inosinate, Disodium 2-methylthio-6-mercaptopurine riboside 5'-phosphate, Disodium 2-n-propoxy-5'-inosinate, Disodium 2-phenyl-5'-inosinate, Disodium 2-tetrahydrofurfurylthio-5'-inosinate, Disodium 5'-adenylate, Disodium 6-chloropurine riboside 5'-phosphate, Disodium 6-mercaptopurine riboside 5'-phosphate, Disodium deoxy 5'-guanylate, Disodium inosinate (disodium inosine-5'-monophosphate IMP), Disodium N1-methyl-5'-inosinate, Disodium N2,N2-dimethyl-5'-guanylate, Disodium N2-methyl-5'-guanylate, Disodium N1-methyl-2-methylthio-5'-inosinate, Disodium N1-methyl-5'-guanylate, Disodium-5'-ribonucleotides (Mixture of IMP and GMP), Ethyl 4-((2-isopropyl-5-methylcyclohexyloxy)carbonyl)butanoate, Glu-Asp-Glu, Guanosine 5'-monophosphate (5'-GMP), Guanosine 5'-monophosphate (GMP) disodium salt, Inosine 5'-monophosphate (5'-IMP), L-Ibotenic acid, L-Theanin, L-Tricholomic acid, erythro-form, Magnesium diglutamate, Methyl 4-((2-isopropyl-5-methylcyclohexyl)carbamoyl)benzoate, Monoammonium glutamate, Monopotassium glutamate, Monosodium D,L-homocystate, Monosodium D,L-threo-$\beta$-hydroxy glutamate, Monosodium L-aspartate, Monosodium L-glutamate (MSG), Monosodium L-ibotenate, Monosodium L-tricholomate, Monosodium L-$\alpha$-amino adipate, N-(1-deoxy-D-fructos-1-yl)-L-glutamic acid, N-(1-deoxy-D-fructos-1-yl)pyroglutamic acid, N-(3-methoxy-4-hydroxy-benzyl)-5-hydroxypentanamide, N-(4-hydroxyphenethyl)erythronamide, N-(4-hydroxyphenethyl)gluconamide, N-(4-hydroxyphenethyl)succinamide, N-(heptan-4-yl)benzo[d][1,3] dioxole-5-carboxamide, N2-(1-carboxy-3,4,5-trihydroxypentyl)guanosine 5'-monophosphate, N2-(1-carboxy-3-hydroxypropyl)guanosine 5'-monophosphate, N2-(1-carboxyethyl)guanosine 5'-monophosphate, N2-(2-methylthioethyl)guanosine 5'-monophosphate, N2-(propylthiomethyl)guanosine 5'-monophosphate, N-2,4-Dimethoxybenzyl-N-(2-pyridyl)ethyl oxalamide, N2-Butylguanosine 5'-monophosphate, N2-Lactoyl-guanosine 5'-monophosphate, N-Cyclopentyl-2-isopropyl-5-methyl-bicyclo[4.1.0]heptane-7-carboxamide, N-Gluconylethanolamine phosphate, N-Phenethyl-4-hydroxypentanamide, pGlu-Pro, pGlu-Pro-Glu, pGlu-Pro-Ser, Theogallin, Thr-Glu, Xanthosine 5'- monophosphate (XMP) disodium salt, Xanthosine 5'-monosphosphate, $\gamma$-L-Glutamyl-L-(S-methyl) methionine, $\gamma$-L-Glutarnyl-L-cysteinyl-glycine, 3-Chloro-4-morpholinophenylsulfamic acid sodium salt, 3-Hydroxy-4-methoxydihydrochalcone, Acetic acid, Adipic acid, Ascorbic acid, Benzoic acid, Carbonic acid, Citric acid, Formic acid, Fumaric acid, Lactic acid, Malic acid, N-(1-methylhexyl)imidodisulfuric acid disodium salt, N-(1-methyloctyl)imidodisulfuric acid disodium salt, N-(2,2-dimethoxyethyl)imidodisulfuric acid disodium salt, N-(2-methoxyethyl)imidodisulfuric acid disodium salt, N-(3-ethoxypropyl)imidodisulfuric acid disodium salt, N-[2-[Methyl(sodiooxysulfonyl)amino]ethyl]imidodisulfuric acid disodium salt, N-Isobutylimidodisulfuric acid disodium salt, N-Isopropylimidodisulfuric acid disodium salt, N-Propylimidodisulfuric acid disodium salt, Oxalic acid, Phosphoric acid, Propionic acid, Sodium 3-(sulfonatoamino)benzene-1-sulfonate, Sodium N-(1,3-benzothiazol-2-yl)sulfamate, Sodium N-(2-acetylphenyl)sulfamate, Sodium N-(2-chloro-4-methylphenyl)sulfamate, Sodium N-(2-fluoro-4-iodophenyl)sulfamate, Sodium N-(2-methoxy-5-methylphenyl)sulfamate, Sodium N-(4-methyl-5-propyl-1,3-thiazol-2-yl)sulfamate, Sodium N-(5-benzyl-1,3,4-thiadiazol-2-yl)sulfamate, Sodium N-(5-methyl-2-nitrophenyl)sulfamate, Sodium N-(5-tert-butyl-1,2-oxazol-3-yl)sulfamate, Sodium N-[4-(butan-2-yl)phenyl]sulfamate, Succinic acid, Tartaric acid, $\gamma$-Aminobutyric acid, Ammonium chloride, Disodium N,N-disulfonatopentan-1-amine, Lithium chloride, L-Ornithyltaurine, L-Ornithyl-$\gamma$-aminobutyric acid, Lys-Tau.HCl, N-(5-methylheptyl)imidodisulfuric acid disodium salt, Orn-Tau.HCl, Orn-$\beta$Ala.HCl, Orn-yAbu.HCl, Potassium chloride, Sodium chloride, (-)-Hesperitin , 13-Hydroxy-cis-9, trans-11-octadecadienoic acid, 1-Aminocyclohexane-1-carboxylic acid, 1-Aminocyclooctane-1-carboxylic acid, 1-Aminocyclopentane-1-carboxylic acid, 1-Cycloheptene-1-carboxaldehyde oxime, 2-(1H-indol-3-yl)ethanol, 2-(4-bromophenylsulfonyl)-3-methylbutanoic acid, 2-Tridecenal, 3-(p-tolilosulfonyl)butanoic acid, 3-Phenylpropyl acetate, 3-Phenylpropyl isobutyrate, 5-Chlorosaccharin, 6-Bromosaccharine, 6-Chlorosaccharin, 6-Methyl-5-hepten-2-one, 7-Chloro-2,3-dihydro-1lambda6,2-benzothiazole-1,1,3-trione, 9-Hydroxy-trans-10,cis-12-octadecadienoic acid, Allyl isothiocyanate, Aryl urea derivative 12, Aryl urea derivative 13, Aryl urea derivative 14, Barium chloride, Benzothiazolylsulfamate derivative 107, Benzyl acetate, Butanoic acid, 2-[(4-chlorophenyl)sulfonyl]-3-methyl-, Butylsulfamic acid ethyl ester, Butylsulfamic acid propyl ester, Calcium chloride, Calcium phenol sulfonate, Cefazolin sodium salt, Cinnamyl formate, Citral (neral), Citronellyl propionate, Coumarin, Cyclohexylsulfamic acid butyl ester, Cyclohexylsulfamic acid cyclohexyl ester, Cyclohexylsulfamic acid ethyl ester, Cyclohexylsulfamic acid isobutyl ester, Cyclohexylsulfamic acid isopropyl ester, Cyclohexylsulfamic acid methyl ester, Cyclohexylsulfamic acid propyl ester, Cyclohexylsulfamic acid sec-butyl ester, D-Cysteine, D-Glutamic acid, D-Norleucine, Ethyl phenylacetate, Gallic acid, Gaudichaudioside B, Gaudichaudioside E, Genistin, Glutaronitrile, Glycyl-L-Ornithine, Hexyl acetate, Hydrogen cyanide, Isoamyl acetate, Isoamyl propionate, Isoamyl salicylate, Isobutylsulfamic acid propyl ester, Isopropyl propionate, L-Cysteine, L-Glutamic acid, L-Glutamic acid diethyl ester, Linalyl formate, Linoleic acid, L-Menthol, L-Methionine, L-Ornithylglycine, L-Ornithyl-$\beta$-Alanine, Magnesium ammonium sulfate, Methyl D-mannopyranoside, Methyl $\beta$-D-glucoside, N-(1,5-dimethylhexyl)imidodisulfuric acid disodium salt, Oleic acid, Phenethyl formate, Phenethyl isobutyrate, Phenethyl isovalerate, Piperonal, p-Nitrosaccharin, Potassium acid oxalate, Propyl acetate, Propyl formate, Propyl isovalerate, Propylsulfamic acid propyl ester, Protocatechuic acid, QLFGPNVNPW-COOC2H5, QLFNPSTNPW, QLFNPSTNPW-COOC2H5, Rhodinyl formate, Rhodinyl isovalerate, Salicylic acid, Santalol acetate, Sodium (2-methyl-3-chlorophenyl)sulfamate, Sodium aspartate, Sodium N-(2,4-dimethoxyphenyl)sulfamate, Sodium N-(2-ethyl-6-methylphenyl)sulfamate, Sodium N-(2-methoxy-6-methylphenyl)sulfamate, Sodium N-(3-bromo-5-methylpyridin-2-yl)sulfamate, Sodium N-(3-methoxycarbonylphenyl)sulfamate, Sodium N-(4-chloro-2-fluorophenyl)sulfamate, Sodium N-(4-chloro-2-methylphenyl)sulfamate, Sodium N-(4-chloro-3-nitrophenyl)sulfamate, Sodium N-(4-methoxy-2-nitrophenyl)sulfamate, Sodium N-(4-methyl-3-nitrophenyl)sulfamate, Sodium N-[3-[(2-methylpropan-2-yl)oxycarbonyl]phenyl]sulfamate, Sodium N-[4-(propan-2-yl)-1,3-thiazol-2-yl]sulfamate, Strontium bromide, syn-Cyclohexane carboxaldehyde , syn-p-Anisaldehyde oxime, Tiglic aldehyde oxime , trans-2-Me-2-pentenal oxime, β-Alanyl-L-Omithine, γ-Linolenic acid, "(2R, 4aS, 7R, 8aR)-(-)-2-(3'-Hydroxy-4'-methoxyphenyl)-9,9-dimethyl tetrahydro-5H-4a,7-methano-4H-1,3-benzoxathiane, methano-4H-1,3-benzoxathiane", (3-hydroxy-4-methoxyphenyl)(phenylsulfanyl)methanone, (4-nitrophenyl)urea, (R)-3-amino-3-phenylpropionic acid analog of N-(4-cyanophenyl)-N' carboxyethyl urea, (S)-(-)-Phyllodulcin, [4-(2-phenylethyl)phenyl]urea, 1-(2,6-dihydroxyphenyl)-3-(4-hydroxy-3-methoxyphenyl)propan-1 -one, 1-(2,6-dihydroxyphenyl)-3-(4-hydroxyphenyl)propan-1-one, 1-(2-cyanoethyl)-3-(4-nitrophenyl)urea, 1-(3-hydroxy-4-methoxyphenyl)-2-phenylethanone, 1-(4-{[4,5-dihydroxy-6-(hydroxymethyl)-3-[(3,4,5-trihydroxy-6-methyloxan-2-yl)oxy]oxan-2-yl]oxy}-2,6-dihydroxyphenyl)-3-(2-hydroxyphenyl)propan-1-one, 1-(4-{[4,5-dihydroxy-6-(hydroxymethyl)-3-[(3,4,5-trihydroxy-6-methyloxan-2-yl)oxy]oxan-2-yl]oxy}-2,6-dihydroxyphenyl)-3-(3,4,5-trihydroxyphenyl)propan-1-one, 1-(4-{[4,5-dihydroxy-6-(hydroxymethyl)-3-[(3,4,5-trihydroxy-6-methyloxan-2-yl)oxy]oxan-2-yl]oxy}-2,6-dihydroxyphenyl)-3-(3-ethoxy-4-hydroxyphenyl)propan-1-one, 1-(4-{[4,5-dihydroxy-6-(hydroxymethyl)-3-[(3,4,5-trihydroxy-6-methyloxan-2-yl)oxy]oxan-2-yl]oxy}-2,6-dihydroxyphenyl)-3-(4-hydroxy-3-methoxyphenyl)propan-1-one, 1-(4-{[4,5-dihydroxy-6-(hydroxymethyl)-3-[(3,4,5-trihydroxy-6-methyloxan-2-yl)oxy]oxan-2-yl]oxy}-2,6-dihydroxyphenyl)-3-phenylpropan-1-one, 1-(4-nitrophenyl)-3-propylurea, 1,4-Benzodioxin derivative , 1,4-Cyclohexylenebis(sulfamic acid sodium) salt, 10-Methoxy-7,11b-dihydrobenz[b]indeno[1,2-d]pyran-6a,9-diol, 11-Ketodihydroisodonal, 2-((4-methylthio)benzoyl)benzoic acid, 2-(2-bromoethyl)-1,2-benzisothiazol-3(2H)-one 1,1-dioxide, 2-(3,4-dimethoxybenzoyl)benzoic acid , 2-(3-hydroxy-4-methoxyphenyl)-2,3-dihydro-1,3-benzothiazin-4-one, 2-(3-hydroxy-4-methoxyphenyl)-4,5-dihydro-1,3-benzodioxepine, 2-(3-hydroxy-4-methylthiophenyl)-2,3-dihydro-1,4-benzoxathiin-6-ol, 2-(3-hydroxy-4-methylthiophenyl)-2,3-dihydro-1,4-benzoxathiine, 2-(4-carboxybenzoyl)benzoic acid, 2-(4-hydroxy-2-methoxybenzoyl)benzoic Acid , 2-(4-hydroxy-3-methoxybenzoyl)benzoic Acid, 2-(4-methoxybenzyl)benzoic acid, 2-(4-methoxyphenoxy)benzoic acid, 2-(4-methoxyphenyl)-4H-3,1-benzoxathiine, 2-(4-methoxyphenylthio)benzoic acid, 2-(phenoxybenzoyl)benzoic acid, 2-(4-propoxybenzoyl)benzoic acid, 2-(pentyloxy)-5-(2-phenylethyl)phenol, 2',3,5'-Trihydroxy-4-ethoxydihydrochalcone, 2',3,5'-Trihydroxy-4-methoxydihydrochalcone, 2',3,5'-Trihydroxy-4-propoxydihydrochalcone, 2-[2-(3-hydroxy-4-methoxyphenyl)ethyl]benzoic acid, 2-[2-methoxy-5-(2-phenylethyl)phenoxy]acetic acid, 2-Amino-2-{[1-oxo-1-(propan-2-yloxy)propan-2-yl]carbamoyl}acetic acid, D-form, 2-Benzoylbenzoic acid, 2-Ethyl-5-nitro-2,3-dihydro-1lambda6,2-benzothiazole-1,1,3-trione, 2-Ethyl-6-nitro-1,2-benzisothiazole-3(2H)-one 1,1-dioxide, 2-Ethyl-7-nitro-2,3-dihydro-1lambda6,2-benzothiazole-1,1,3-trione, 2-Hydroxymethylphenyl-4-methoxyphenylmethanol , 2-Methoxy-5-(3-methyl-2,3-dihydro-1,4-benzodioxin-2-yl)phenol, 2-Methoxy-5-(4-phenylbutyl)phenol, 2-Methoxy-5-[2-(1-naphthalenyl)ethyl]phenol, 2-Methoxy-5-[2-(4-methoxyphenyl)ethyl]phenol, 2-Methoxy-5-[2-(4-methylphenyl)ethyl]phenol, 2-Methoxy-5-{2-[2-(propan-2-yl)phenyl]ethyl}phenol, 2-Methyl-2-(3-hydroxy-4-methoxyphenyl)-1,4-dihydrobenzodioxane , 2-Methyl-6-nitro-1,2-benzisothiazole-3(2H)-one 1,1-dioxide, 2-Nitro-4-amino-propoxybenzene, 2-Phenoxymethyl-2H-7,8-dihydrobenzopyran, 3-(2,4-dihydro-3,1-benzoxathiin-2-yl)-6-methoxy-2-[3-(4-nitrophenyl)prop-2-en-1-yl]phenol, 3-(3,4-dihydroxyphenyl)-3,4-dihydroisochromen-1-one, 3-(3,4-dimethoxyphenyl)-8-methoxy-3,4-dihydro-1H-2-benzopyran-1-one, 3-(3-hydroxy-4-methoxyphenyl)-1,3-dihydro-2-benzofuran-1-one, 3-(3 -hydroxy-4-methoxyphenyl)-1,5-dihydro-2,4-benzodioxepine, 3-(3-hydroxy-4-methoxyphenyl)-2,3-dihydro-1,3-benzoxazin-4-one, 3-(3-hydroxy-4-methoxyphenyl)-2-phenylpropanoic acid, 3-(3-Hydroxy-4-methoxyphenyl)-3,4-dihydro-2H-1-benzothiopyran, 3-(3-hydroxy-4-methoxyphenyl)-4-(3H)-1,2-dihydroquinazolinone, 3-(3-hydroxy-4-methoxyphenyl)isochromen-1-one, 3-(3-hydroxy-4-methoxyphenyl-3,4-dihydroisocarbostyril, 3-(3-hydroxyphenyl)-3,4-dihydroisocoumarin, 3-(4-hydroxy-3-methoxyphenyl)-3,4-dihydroisocoumarin, 3-(4-Methoxyphenyl)benzo[2]furan-1-one, 3-(4-methoxyphenyl)isochroman-1-one, 3,9,10-Trimethoxy-7,11b-dihydrobenz[b]indeno[1,2-d]pyran-4,6a-diol, 3-[(3-hydroxy-4-methoxyphenyl)methyl]-1,3-dihydro-2-benzofuran-1-one, 3-[(4-nitrophenyl)formohydrazido]propanoic acid, 3-[(anilinocarbonyl)amino]propanoic acid, 3-[2-(3-hydroxy-4-methoxyphenyl)ethyl]benzoic acid, 3-{[(4-cyanophenyl)carbamoyl]amino}-3-(2-methoxyphenyl)propanoic acid, 3-{[(4-nitrophenyl)carbamoyl]amino}prop-2-enoic acid, 3-{[(4-nitrophenyl)carbamoyl]oxy}propanoic acid, 3-Amino-4-oxo-4-(pentan-2-ylamino)butanoic acid, 3-Anilino-2-phenyl-3H-naphtho-[1,2-d]imidazol-5-sulfonate (TSN), 3-Amino-3-[(nonan-2-yl)carbamoyl]propanoic acid, 3-Amino-3-{[1-oxo-1-(propan-2-yloxy)hexan-2-yl]carbamoyl}propanoic acid, 3-Hydroxy-4-methoxybenzanilide, 3'-Hydroxy-4'-methoxyflavanone, 3-Hydroxy-4-methoxy-stilbene, 3-Hydroxy-β-(3-hydroxy-4-methoxyphenyl) ethylbenzene, 3-Nitro-o-toluidine, 3-Nitro-p-toluidine, 3-Ureidopropionic acid, 4-(4,5-dihydro-2H-1,3-benzodioxepin-2-yl)-2-methoxyphenol, 4-(4-methoxyphenyl)-3-methyl-4-oxobut-2-enoic acid, 4',5-Dihydroxy-3'-methoxyflavanone, 4,9,10-Trimethoxy-7,11b-dihydrobenz[b]indeno[1,2-d]pyran-3,6a-diol, 4-[(4-nitrobenzoyl)amino]butanoic acid, 4-[(4-nitrophenyl)carbamoylamino]butanoic acid, 4-[2-(3-hydroxy-4-methoxyphenyl)ethyl]benzoic acid, 4-[2-(4-nitrophenyl)hydrazinyl]-4-oxobutanoic acid, 4-{[(2-carboxyethyl)carbamoyl]amino}benzoic acid, 4-Methoxybenzophenone, 5-(1-carboxyethyl)-2-[3-(carboxymethyl)-5-oxo-4-(propan-2-yl)oxolan-3-yl]cyclohexane-1-carboxylic acid, 5-(2,4-dihydro-3,1-benzoxathiin-2-yl)-2-methoxy-4-nitrophenol, 5-(2,4-dihydro-3,1-benzoxathiin-2-yl)-2-methoxyphenyl N-ethylcarbamate, 5-(2-phenylethyl)-2-propoxyphenol, 5-(7,8-dimethyl-3,5-dihydro-1H-2,4-benzodithiepin-3-yl)-2-methoxyphenol, 5,4'-Dihydroxyflavanone, 5-[2-(4-bromophenyl)ethyl]-2-methoxyphenol, 5-[2-(4-chlorophenyl)ethyl]-2-methoxyphenol, 5-[2-(4-hydroxy-3-methoxyphenyl)ethyl]-2-methoxyphenol, 5-[4-(hydroxyimino)-3,4-dihydro-1H-2-benzopyran-3-yl]-2-methoxyphenol, 5-{2-[3-(hydroxymethyl)phenyl]ethyl}-2-methoxyphenol, 5-{2-[4-(hydroxymethyl)phenyl]ethyl}-2-methoxyphenol, 5-Aminosaccharin, 5-Benzyl-2-methoxyphenol, 5-Hydroxy-2-(3-hydroxy-4-methoxyphenyl)-4H-1-benzopyran-4-one, 5-Thio-β-D-fructofuranose, 6,6'-Dichloro sucrose, 6-Chloro-6-deoxy-D-galactose, 6-Ethoxy-1,2-benzisothiazole-3(2H)-one 1,1-dioxide, 6-Methoxybenzo[d]isothiazol-3(2H)-one 1,1-dioxide, 7,7,17-Trimethyl-3,10-dioxapentacyclo[14.2.1.01,13.04,12.08,12]nonadecane-2,6,9,18-tetrone, 7,7-Dimethyl-3a-{6-methyl-7-oxobicyclo[3.2.1]octan-2-yl}-octahydro-2-benzofuran-1,6-dione, 7,8-Dimethyl-3-(3-hydroxy-4-methoxyphenyl)-1,5-dihydro-2,4-benzodithiepine , 8-Hydroxy-3-(3-hydroxy-4-methoxyphenyl)isochromen-1-one, 9-Methoxy-6a,11a-dihydro-6H-benzofuro[3,2-c]chromen-8-ol, Acetylisodonal, Alanine amide, Allosucrose, Aspartyl-phenylalanyl-O-cyclohexane, Butanoic acid, 3-amino-4-[(4-methylpentyl)amino]-4-oxo-, Compound XXX, Compound XXXI, Compound XXXIII, Compound XXXVIII, Cyclohexane 1,2/4,5-tetrol, D-Cystine, D-Hydroxy proline, Dihydroacetylisodonal, Dihydrotrichodonin, DL-4-(2-chloro-2-propyl)-1-carboxaldehyde, D-Tertiary leucine, Ememodin, Eriocitrin, Gaudichaudioside C, Guaiacol, H-DL-Asp-NHEtPh, Hesperidin, Hydrangenol, Isosacuranetin-rutinoside, L-Aspartic acid, L-Aspartyl-L-Phenylalanine, L-Cystine, L-Tertiary leucine, Methyl 2-(4-methoxybenzoyl)benzoate, Methyl 3-[(4-nitrophenyl)carbamoylamino]propanoate, Methyl 3-[2-(3-hydroxy-4-methoxyphenyl)ethyl]benzoate, Methyl 4-[2-(3-hydroxy-4-methoxyphenyl)ethyl]benzoate, Monoacetylnodosin, N-(3-hydroxy-4-methoxybenzyl) isobutylamine, N-(3-hydroxy-4-methoxy-benzyl) propylamine, N-(3-hydroxy-4-methoxybenzyl)-tert-butylamine, N-(3-isopropoxypropyl)imidodisulfuric acid disodium salt, N-(3-morpholinopropyl)imidodisulfuric acid disodium salt, N-[6-(2,4-dihydro-3,1-benzoxathiin-2-yl)-2-hydroxy-3-methoxyphenyl]-4-nitrobenzamide, N-{[4-(2-methoxyethyl)cyclohex-1-en-1-yl]methylidene}hydroxylamine, Naringenin rutinoside, N-Ethyl saccharine, N-Methylsaccharin, o-(4-biphenylylcarbonyl)benzoic acid, o-Ethoxyphenylurea, o-Tolylurea, Phenol, 2-methoxy-5-[2-(2-naphthalenyl)ethyl]-, Phenol, 3,3'-(1,2-ethanediyl)bis[6-methoxy-, Phenol, 5-(2-(3,4-dimethoxyphenyl)ethyl)-2-methoxy-, Phenyl guanidineacetic acid, 2-(3-hydroxy-4-methoxyphenyl)-4H-1,3-benzodithiine, (S)-form, 5-(4H-3,1-benzoxathiin-2-yl)-2-methoxyphenol, (S)-form, Sodium 3-(sulfonatoamino)benzoate, Sodium 4-(sulfonatoamino)benzoate, Sodium N-(2-phenoxyphenyl)sulfamate, Sodium N-(4-ethoxycarbonylphenyl)sulfamate, Sodium N-(4-propoxycarbonylphenyl)sulfamate, Sodium N-[3-(methylsulfanyl)phenyl]sulfamate, Sodium N-[4-(2-hydroxyethyl)phenyl]sulfamate, Sodium N-[4-[ethyl(2-hydroxyethyl)amino]phenyl]sulfamate, Spiro[(4-H-1,3-benzodithian)-2,1'-(4'-hydroxy-5'-methoxy-[1H]-2',3'-dihydroindene)], Spiro[(4-H-1,3-benzodithian)-2,1'-(5'-hydroxy-6'-methoxy-[1H]-2',3'-dihydroindene)], Sulfonato 3-{[(4-nitrophenyl)carbamoyl]amino}propanoate, syn-Hydroxymethyl furfuraldehyde oxime, Telosmoside A1, Telosmoside A3, Telosmoside A4, Telosmoside A5, Telosmoside A6, Telosmoside A7, Thunberginol G, Trichodonin, Trichokaurin, β-(3-amino-4-methoxyphenyl) ethylbenzene, β-(4-hydroxy-3-methoxyphenyl) ethylbenzene, β-Aspartic isomer, (±)-Epihernandulcin, (4-chlorophenyl)sulfamic acid sodium salt, (4-fluorophenyl)sulfamic acid sodium salt, (4-nitrophenyl)sulfamic acid sodium salt, (phenylsulfonyl)acetic acid, 1-(4-methoxy-benzenesulfonyl)cyclopentanecarboxylic acid, 1-(4-methoxyphenylsulfonyl)cyclohexane-1-carboxylic acid, 1-(4-methylbenzenesulfonyl)cyclopentane-1-carboxylic acid, 1-(phenylsulfonyl)cyclopentanecarboxylic acid, 1-(phenylsulfonyl)cyclopropanecarboxylic acid, 1,4-Anhydro-erythritol, 1',6'-Di-O-acetate sucrose, 1'-O-acetyl derivative of hernandulcin, 1-Phenylsulfonyl-2,4,5-trimethylcyclohexanecarboxylic acid, 1-Phenylsulfonyl-2,4-dimethylcyclohexanecarboxylic acid, 1-Phenylsulfonyl-2-methylcyclohexanecarboxylic acid, 1-Phenylsulfonyl-3-cyclohexenecarboxylic acid, 1-Phenylsulfonyl-4-methylcyclohexanecarboxylic acid, 1-Phenylsulfonylcyclobutane-1-carboxylic acid, 1-Phenylsulfonylcyclohexanecarboxylic acid, 2-(4-isopropylphenylsulfonyl)-3-methylbutanoic acid, 2-(4-tert-Butylphenylsulfonyl)-3-methylbutanoic acid, 2-(benzenesulfonyl)-2-methylbutanoic acid, 2-(benzenesulfonyl)-3-oxo-3-phenylpropanoic acid, 2-Benzenesulfonyl-hexanoic acid, 2-Chloro-2-deoxy-mannosucrose, 2-Ethyl-2-phenylsulfonylbutyric acid, 2-Methyl-2-phenylsulfonylpropanoic acid, 2-Methyltetrahydro-2H-thiopyran-3-ylsulfamic acid sodium salt, 2-Phenylsulfonyl-3-phenylpropanoic acid, 2-Phenylsulfonylpentanoic acid, 2-Phenylsulphinylpropionic acid, 2-Piperidinophenylsulfamic acid sodium salt, 2-Propyl-2-phenylsulfonylpentanoic acid, 2-Pyrimidinylsulfamic acid sodium salt, 2-Thiazoline-2-ylsulfamic acid sodium salt, 3-(p-bromophenylosulfonyl)butanoic acid, 3-{[1-(acetyloxy)-3-methylpentan-2-yl]carbamoyl}-3-aminopropanoic acid, 3-{[1-(acetyloxy)-3-phenylpropan-2-yl]carbamoyl}-3-aminopropanoic acid, 3-{[1-(acetyloxy)-4-methylpentan-2-yl]carbamoyl}-3-aminopropanoic acid, 3-Amino-3-({3-[(2-methylcyclohexyl)oxy]-3-oxopropyl}carbamoyl)propanoic acid, 3-Amino-3-[(1-methoxy-3-{5-methyl-2-(propan-2-yl)cyclohexyl]oxy}-1,3-dioxopropan-2-yl)carbamoyl]propanoic acid, 3-Amino-3-[(2-benzyl-3-methoxy-3-oxopropyl)carbamoyl]propanoic acid, 3-Amino-3-[(3-butoxy-3-oxopropyl)carbamoyl]propanoic acid, 3-Amino-3-[(4-ethoxy-4-oxo-1-phenylbutan-2-yl)carbamoyl]propanoic acid, 3-Amino-3-{[1-(3,3-dimethylcyclohexanecarbonyloxy)propan-2-yl]carbamoyl}propanoic acid, 3-Amino-3-{[1-(benzoyloxy)propan-2-yl]carbamoyl}propanoic acid, 3-Amino-3-{[1-(cyclohexanecarbonyloxy)butan-2-yl]carbamoyl}propanoic acid, 3-Amino-3-{[1-(cyclohexanecarbonyloxy)propan-2-yl]carbamoyl}propanoic acid, 3-Amino-3-{[1-(cyclohexyloxy)-1-oxopentan-3-yl]carbamoyl}propanoic acid, 3-Amino-3-{[1-(pentanoyloxy)butan-2-yl]carbamoyl}propanoic acid, 3-Amino-3-{[1-(propanoyloxy)pentan-2-yl]carbamoyl}propanoic acid, 3-Amino-3-{[1-oxo-1-(propan-2-yloxy)pentan-3-yl]carbamoyl}propanoic acid, 3-Amino-3-{[3-(benzoyloxy)-1-methoxy-1-oxopropan-2-yl]carbamoyl}propanoic acid, 3-Amino-3-{[3-(cyclohexyloxy)-2-(methoxycarbonyl)-3-oxopropyl]carbamoyl}propanoic acid, 3-Amino-3-{[3-(cyclopentyloxy)-2-(methoxycarbonyl)-3-oxopropyl]carbamoyl}propanoic acid, 3-Amino-3-{[3-methoxy-2-(methoxycarbonyl)-3-oxopropyl]carbamoyl}propanoic acid, 3-Amino-3-{[4-(cyclohexyloxy)-1-methoxy-1,4-dioxobutan-2-yl]carbamoyl}propanoic acid, 3-Amino-3-{[4-methyl-1-oxo-1-(propan-2-yloxy)pentan-2-yl]carbamoyl}propanoic acid, 3-Chloro-5-(trifluoromethyl)-2-pyridylsulfamic acid sodium salt, 3-Methyl-2-pyridylsulfamic acid sodium salt, 3'-O-acetate mannosucrose, 3-Phenylosulfonylbutanoic acid, 4-(trifluoromethyl)-2-pyridylsulfamic acid sodium salt, 4,6-Dichloro-2-pyrimidinylsulfamic acid sodium salt, 4',6'-Dichloro sucrose, 4,6-Dimethyl-2-pyrimidinylsulfamic acid sodium salt, 4-Ethyl-2-pyridylsulfamic acid sodium salt, 4-Methoxy-6-methyl-2-pyrimidinylsulfamic acid sodium salt, 4-Methyl-2-pyridylsulfamic acid sodium salt, 4-Methyl-2-pyrimidinylsulfamic acid sodium salt, 4-Methyltetrahydro-2H-thiopyran-3-ylsulfamic acid sodium salt, 4-Phenylpiperidinosulfamic acid sodium salt, 5,6-Dimethyl-1,2,4-triazine-3-ylsulfamic acid sodium salt, 5-Bromo-2-pyridylsulfamic acid sodium salt, 5-Chloro-2-pyridylsulfamic acid sodium salt, 5-Chloro-6-{[2-(chloromethyl)-3,4-dihydroxy-5-(hydroxymethyl)oxolan-2-yl]oxy}-2-(hydroxymethyl)oxane-3,4-diol, 5-Ethoxybenzothiazole-2-ylsulfamic acid sodium salt, 5-Isoquinolinylsulfamic acid sodium salt, 5-Methyl-2-pyridylsulfamic acid sodium salt, 5-Methyl-2-thiazolylsulfamic acid sodium salt, 5-Methyltetrahydro-2H-thiopyran-3-ylsulfamic acid sodium salt, 5-Nitro-2-pyridylsulfamic acid sodium salt, 6-(2-hydroxy-6-methylhept-5-en-2-yl)-3-methylcyclohex-2-en-1-ol, 6,1'-Dichloro sucrose, 6-Chloro-4-(trifluoromethyl)-2-pyridylsulfamic acid sodium salt, 6-Methyltetrahydro-2H-thiopyran-3-ylsulfamic acid sodium salt, 6-Mono-O-acetate sucrose, 6-O-isopropyl derivative of sucralose, Abrusoside E dimethyl ester, Astilbin, Disodium [2-(sulfonatoamino)phenyl]sulfanide, Disodium [3-(sulfonatoamino)phenyl]sulfanide, Disodium [4-(sulfonatoamino)phenyl]sulfanide, Ethanol, L-Ala-L-Asp-L-Phe-OMe, Methyl β-D-fructofuranoside, m-Nitrophenylsulfamic acid sodium salt, N-(1-methylpropyl)amidosulfuric acid sodium salt, N-(3-methylpent-3-en-2-ylidene)hydroxylamine, N-[(2,6-dimethyl-5,6-dihydro-2H-pyran-3-yl)methylidene]hydroxylamine, N-[1-(cyclohex-1-en-1-yl)ethylidene]hydroxylamine, N-{[4-(1,2-dimethoxyethyl)cyclohex-1-en-1-yl]methylidene}hydroxylamine, N-{[5-(methoxymethyl)cyclohexa-1,4-dien-1-yl]methylidene}hydroxylamine, Pentanoic acid, 2-ethyl-2-(phenylsulfonyl)-, Polydextrose, Polypodoside C, Selligueain B, Sodium 2-(sulfonatoamino)butan-1-ol, Sodium 2-[(2-{4-[(hydroxyimino)methyl]cyclohex-3-en-1-yl}propan-2-yl)oxy]acetate, Sodium 2-methyl-2-(sulfonatoamino)propan-1-ol, Sodium 3-(sulfonatoamino)benzen-1-olate, Sodium 4-phenyl-1-(sulfonatoamino)pyridin-1-ium, Sodium hexylsulfamate, Sodium isopropylsulfamate, Sodium methylsulfamate, Sodium N-(1,3-benzodioxol-5-yl)sulfamate, Sodium N-(1-methoxypropan-2-yl)sulfamate, Sodium N-(2,2-dimethoxyethyl)sulfamate, Sodium N-(2,3-dichlorophenyl)sulfamate, Sodium N-(2,3-difluorophenyl)sulfamate, Sodium N-(2,3-dihydro-1H-inden-5-yl)sulfamate, Sodium N-(2,4,4-trimethylpentan-2-yl)sulfamate, Sodium N-(2,4-dichlorophenyl)sulfamate, Sodium N-(2,4-difluorophenyl)sulfamate, Sodium N-(2,4-dimethylphenyl)sulfamate, Sodium N-(2,4-dinitrophenyl)sulfamate, Sodium N-(2,5-dichlorophenyl)sulfamate, Sodium N-(2,6-difluorophenyl)sulfamate, Sodium N-(2,6-dimethylphenyl)sulfamate, Sodium N-(2-aminophenyl)sulfamate, Sodium N-(2-bromophenyl)sulfamate, Sodium N-(2-chlorophenyl)sulfamate, Sodium N-(2-chloropyridin-3-yl)sulfamate, Sodium N-(2-cyanophenyl)sulfamate, Sodium N-(2-cyclohexylethyl)sulfamate, Sodium N-(2-ethoxypropyl)sulfamate, Sodium N-(2-ethylphenyl)sulfamate, Sodium N-(2-fluoro-5-methylphenyl)sulfamate, Sodium N-(2-fluorophenyl)sulfamate, Sodium N-(2-hydroxyethyl)sulfamate, Sodium N-(2-iodophenyl)sulfamate, Sodium N-(2-methoxy-4-nitrophenyl)sulfamate, Sodium N-(2-methoxy-5-nitrophenyl)sulfamate, Sodium N-(2-methoxyethyl)sulfamate, Sodium N-(2-methylbutan-2-yl)sulfamate, Sodium N-(2-nitrophenyl)sulfamate, Sodium N-(2-piperidin-1-ylethyl)sulfamate, Sodium N-(2-sulfanyl-1,3-benzothiazol-5-yl)sulfamate, Sodium N-(3,3-dimethylbutan-2-yl)sulfamate, Sodium N-(3,4-dichlorophenyl)sulfamate, Sodium N-(3,4-difluorophenyl)sulfamate, Sodium N-(3,4-dimethylphenyl)sulfamate, Sodium N-(3-acetylphenyl)sulfamate, Sodium N-(3-aminophenyl)sulfamate, Sodium N-(3-chloro-4-fluorophenyl)sulfamate, Sodium N-(3-chloro-4-methylphenyl)sulfamate, Sodium N-(3-ethoxypropyl)sulfamate, Sodium N-(3-fluoro-2-methylphenyl)sulfamate, Sodium N-(3-hydroxyphenyl)sulfamate, Sodium N-(3-hydroxypropyl)sulfamate, Sodium N-(3-iodophenyl)sulfamate, Sodium N-(3-methoxypropyl)sulfamate, Sodium N-(3-methylpentan-2-yl)sulfamate, Sodium N-(3-propylphenyl)sulfamate, Sodium N-(4-acetylphenyl)sulfamate, Sodium N-(4-butylphenyl)sulfamate, Sodium N-(4-cyano-1H-imidazol-5-yl)sulfamate, Sodium N-(4-ethoxy-2-nitrophenyl)sulfamate, Sodium N-(4-ethyl-5-methyl-1,3-thiazol-2-yl)sulfamate, Sodium N-(4-fluoro-3-nitrophenyl)sulfamate, Sodium N-(4-methylpentan-2-yl)sulfamate, Sodium N-(4-methylpentyl)sulfamate, Sodium N-(4-methylpiperidin-1-yl)sulfamate, Sodium N-(4-phenyl-1,3-thiazol-2-yl)sulfamate, Sodium N-(4-phenylphenyl)sulfamate, Sodium N-(4-propylphenyl)sulfamate, Sodium N-(4-tert-butylphenyl)sulfamate, Sodium N-(5-bromo-3-methylpyridin-2-yl)sulfamate, Sodium N-(5-butyl-1,3,4-thiadiazol-2-yl)sulfamate, Sodium N-(5-butyl-4-methyl-1,3-thiazol-2-yl)sulfamate, Sodium N-(5-chloro-2-methylphenyl)sulfamate, Sodium N-(5-chloropyrazin-2-yl)sulfamate, Sodium N-(5-ethyl-4-methyl-1,3-thiazol-2-yl)sulfamate, Sodium N-(5-fluoro-2-methylphenyl)sulfamate, Sodium N-(5-methylhexan-2-yl)sulfamate, Sodium N-(5-pentyl-1,3,4-thiadiazol-2-yl)sulfamate, Sodium N-(6-ethoxy-1,3-benzothiazol-2-yl)sulfamate, Sodium N-(6-fluoro-1,3-benzothiazol-2-yl)sulfamate, Sodium N-(6-methoxy-1,3-benzothiazol-2-yl)sulfamate, Sodium N-(heptan-2-yl)sulfamate, Sodium N-(hexan-2-yl)sulfamate, Sodium N-(pyrrolidin-1-yl)sulfamate, Sodium N-[2-(butan-2-yl)-6-ethylphenyl]sulfamate, Sodium N-[2-(dimethylamino)ethyl]sulfamate, Sodium N-[2-(morpholin-4-yl)phenyl]sulfamate, Sodium N-[2-(propan-2-yloxy)ethyl]sulfamate, Sodium N-[2-(trifluoromethyl)phenyl]sulfamate, Sodium N-[2-bromo-5-(trifluoromethyl)phenyl]sulfamate, Sodium N-[2-chloro-4-(trifluoromethyl)phenyl]sulfamate, Sodium N-[2-chloro-5-(trifluoromethyl)phenyl]sulfamate, Sodium N-[2-ethyl-6-(propan-2-yl)phenyl]sulfamate, Sodium N-[2-fluoro-5-(trifluoromethyl)phenyl]sulfamate, Sodium N-[2-methyl-6-(propan-2-yl)phenyl]sulfamate, Sodium N-[3-(dimethylamino)propyl]sulfamate, Sodium N-[3-(trifluoromethyl)phenyl]sulfamate, Sodium N-[3,5-bis(trifluoromethyl)phenyl]sulfamate, Sodium N-[3-chloro-5-(trifluoromethyl)phenyl]sulfamate, Sodium N-[4-(2-ethoxy-2-oxoethyl)-1,3-thiazol-2-yl]sulfamate, Sodium N-[4-(2-nitrophenyl)-1,3-thiazol-2-yl]sulfamate, Sodium N-[4-(3-nitrophenyl)-1,3-thiazol-2-yl]sulfamate, Sodium N-[4-(4-chlorophenyl)-1,3-thiazol-2-yl]sulfamate, Sodium N-[4-(pentan-3-yl)phenyl]sulfamate, Sodium N-[5-(1-phenylpropan-2-yl)-1,3,4-thiadiazol-2-yl]sulfamate, Sodium N-[5-(2-methylpropyl)-1,3,4-thiadiazol-2-yl]sulfamate, Sodium N-[5-(2-phenylethyl)-1,3,4-thiadiazol-2-yl]sulfamate, Sodium N-[5-(3-chlorophenyl)-1,3,4-thiadiazol-2-yl]sulfamate, Sodium N-[5-(3-methylbutyl)-1,3,4-thiadiazol-2-yl]sulfamate, Sodium N-[5-(4-chlorophenyl)-1,3,4-thiadiazol-2-yl]sulfamate, Sodium N-[5-(butan-2-yl)-1,3,4-thiadiazol-2-yl]sulfamate, Sodium N-[5-(methylsulfanyl)-1,3,4-thiadiazol-2-yl]sulfamate, Sodium N-[5-(pentan-2-yl)-1,3,4-thiadiazol-2-yl]sulfamate, Sodium N-amylsulfamate, Sodium N-ethylsulfamate, Sodium N-heptylsulfamate, Sodium N-octylsulfamate, Sodium N-pentan-3-ylsulfamate, Sodium N-tert-butylsulfamate, Sodium p-tolylsulfamate, Sucralose 3',4'-epoxide, Thietane-3-ylsulfamic acid sodium salt, Thiocane-3-ylsulfamic acid sodium salt, Thiocane-4-ylsulfamic acid sodium salt, (+)-Brazilin, (+)-Viboquercitol, [2-cyano-4-[3,4,5-trihydroxy-6-(hydroxymethyl)oxan-2-yl]oxybut-2-enyl] 4-hydroxy-3-methoxybenzoate, [2-cyano-4-[3,4,5-trihydroxy-6-(hydroxymethyl)oxan-2-yl]oxybut-2-enyl] 4-hydroxybenzoate, [6]-Paradol, [8]-Gingerole, 1-(1-b-glucopyranosyl)-1H-indole-3-acetic acid, 1,4-Dithiepane-6-ylsulfamic acid sodium salt, 3-Methoxy-1,3,5-estratrien-2-ol, 6-Aminosaccharin, 6-Chloro-L-tryptophan, 9-Hydroperoxy-trans-10,cis-12-octadecadienoic acid, 13-Hydroperoxy-cis-9,trans-11-octadecadienoic acid, alpha-Hydroxy sanshool, Arachidonic acid, Butanoic acid, 2-[(4-methoxyphenyl)sulfonyl]-3-methyl-, Capsaicin, cis-Pellitorine, Clovamide, Cooling agent 10, Cubebol, Cyclobutyl sulfamic acid (Na-salt), D-Arginine, D-Aspartic acid, Dihydrocapsaicin, D-Proline, Elaidic acid, Epimer of Selligueain A, Evercool 180, Frescolat MGA, Frescolat MPC, Gingerol, Hamameli tannine, Icilin, L-Asparagine, L-Glutamine, Limonin monolactone, Linolelaidic acid, Menthyl glutarate, Menthyl lactate, Menthyl succinate, Methyl 1-(1-β-glucopyranosyl)-1H-indole-3-acetate, Mioganal, Naringenin, Neohesperidin DHC derivative 8, Nonivamide, Nordihydrocapsaicin, Piperanine, Piperine, Piperylin, Polygodial, Proanthocyanidin A2, Rutin, Shogaol, Sodium (2,3-dimethylphenyl)sulfamate, Sodium (4-ethoxyphenyl)sulfamate, Sodium 4-methoxyphenylsulfamate, Sodium 4-nitro-2-(sulfonatoamino)benzen-1-olate, Sodium N-(2,5-difluorophenyl)sulfamate, Sodium N-(2,5-dimethylphenyl)sulfamate, Sodium N-(2-chloro-5-nitrophenyl)sulfamate, Sodium N-(2-ethoxycarbonylphenyl)sulfamate, Sodium N-(2-fluoro-5-nitrophenyl)sulfamate, Sodium N-(2-methoxyphenyl)sulfamate, Sodium N-(2-methyl-5-nitrophenyl)sulfamate, Sodium N-(3,4-dimethoxyphenyl)sulfamate, Sodium N-(3,5-dimethylphenyl)sulfamate, Sodium N-(3-methoxyphenyl)sulfamate, Sodium N-(4-cyanophenyl)sulfamate, Sodium N-(4-ethylphenyl)sulfamate, Sodium N-(4-iodophenyl)sulfamate, Sodium N-(4-phenylmethoxyphenyl)sulfamate, Sodium N-(5,6-dimethyl-1,3-benzothiazol-2-yl)sulfamate, Sodium N-(5-chloro-2-methoxyphenyl)sulfamate, Sodium N-(5-tert-butyl-1,3,4-thiadiazol-2-yl)sulfamate, Sodium N-(pentan-2-yl)sulfamate, Sodium N-[2-(hydroxymethyl)phenyl]sulfamate, Sodium N-[3-(hydroxymethyl)phenyl]sulfamate, Sodium N-[4-(4-bromophenyl)-1,3-thiazol-2-yl]sulfamate, Sodium N-[4-(4-methylphenyl)-1,3-thiazol-2-yl]sulfamate, Sodium N-[5-(2-bromophenyl)-1,3,4-thiadiazol-2-yl]sulfamate, Sodium N-[5-(3-bromophenyl)-1,3,4-thiadiazol-2-yl]sulfamate, Spilanthol, Tannic acid, trans-Pellitorine, WS23, WS3.

Olfactive products can encompass flavors, chemical molecules, aromas, extracts (e.g. yeast), digests, hydrolysates (e.g. poultry liver), protein ingredients (e.g., poultry meal), carbohydrate food (e.g. rice flour), powders and the like. For example, the olfactive product can include fragrances such as food fragrances, odour masking agents and mixtures thereof, such as flavor compound as well as precursors for the above.

Most preferably, the term "olfactive product" relates those compound(s), composition(s), formulation(s), or other material, which can provide an odour or smell at room temperature.

In an embodiment, the "olfactive product" refers to an odour product which can be presented in a liquid, jelly, foam, oily, gel, solid form, aromatic cocktail, patch, powder, alcohol, fat, tabs or any other suitable presentation. In some embodiments, the olfactive product can be in a liquid form such as in the form of a solution or of a suspension. In some other embodiments, the olfactive product can consist of a solid form, such as a powder form.

According to an embodiment of the disclosure, the palatability enhancer (e.g. the olfactive product) can be, without limitation, a liquid, a paste, a powder, an encapsulated substance, a scratch and sniff pad, or any other equivalents.

According to an embodiment of the disclosure, the palatability enhancer is an olfactive product that can be selected from: acetic acid, propanoic acid, butyric acid, 3-methylbutyric acid, hexanoic acid, citric acid, tartaric acid, fumaric acid, lactic acid, hexamic acid, butyl hexanoate, heptyl formate, ethyl decanoate, ethyl caprylate, acetaldehyde, 3-methyl butanal, pentanal, heptanal, octanal, benzaldehyde, anisole, pentanol, 2-ethyl hexanol, 2,3-butanediol, thymol, carvacrol, 1,5-octadien-3-ol, acetone, 2,3-pentanedione, 2-piperidione, 2-heptanone, 1,5-octadien-3-one, ethyl vanillin, vanillin, pyrazine, methyl pyrazine, methyl pyrazine, 2,5-dimethylpyrazine, 2,6-dimethylpyrazine, 2-methyl-6-(methio)-pyrazine, 2-ethyl-3,5-dimethylpyrazine, 2-ethyl-5-methyl pyrazine, 2-ethyl-6-methylpyrazine, ethyl pyrazine, 2-pentyl furan, 2-ethylfuran, 2,5-dimethylfuran, 2-[(methyldithio)methyl]-furan, 2-(2-propenyl)-furan, 2-furanmethanol, 4-hydroxy-3(2H)-furanone and alkyl-substituted 4-hydroxy-3(2H)-furanone compounds, indole, furfural, sulphurol, 2-acetylpyridine, 2,3-dihydrothiophene, 2-methyl thiophene, 3-methyl thiophene, 2,5-dimethyl thiophene, dihydro-2-methyl-3(2H)- thiophene, benzo[b]thiophene-4-ol, 5-methyl-2-thiophenecarboxaldehyde, methyl ethyl disulfide, dimethyl trisulfide, methyl-2-methyl-3-furyl disulfide, 2-methyl-1-ethyl pyrrolidine, 2-acetylthiazole, 4-methylthiazole, 2-ethylthiazole, theanine, glutamine, tea, 2-methyl-3-furanthiol, 2-furanmethanethiol, 3-mercapto-2-pentanone, ethyl furanone, 2,4-decadienal, 2,3-butanedione, di-(2-methyl-3-furyl)-disulfide, proline, hydroxyproline, glutamic acid, aspartic acid, arginine, cystine, glutamine, isoleucine, lysine, threonine, histidine, alanine, glycine, valine, ornithine, adenosine monophosphate (AMP), guanosine monophosphate (GMP), inosine monophosphate (IMP), uridine monophosphate (UMP), cytidine monophosphate (CMP), xanthosine monophosphate (XMP), and a mixture thereof.

Within the disclosure, the term "alkyl" refers to $C_1$-$C_6$, preferably $C_1$-$C_4$, more preferably $C_1$-$C_3$, and more preferably $C_1$-$C_2$, linear or branched, saturated alkyl moieties.

In embodiments, the alkyl-substituted 4-hydroxy-3(2H)-furanone compound may be selected from: 5-methyl-4-hydroxy-3(2H)-furanone; 2,5-dimethyl-4-hydroxy-3(2H)-furanone; 5-methyl-2-ethyl-4-hydroxy-3(2H)-furanone; 5-ethyl-2-methyl-4-hydroxy-3(2H)-furanone; and 2,5-diethyl-4-hydroxy-3(2H)-furanone, and a mixture thereof.

In other embodiments, an olfactive product can be formulated as described in WO 2010/018365A1, or WO2021/087309A1. In another embodiment, olfactive product can be selected from any commercially available products. such as, without limitation, palatability solutions named D'TECHPALATABILITY ENHANCER (for dog) or C'SENS PALATABILITY ENHANCER (for cat).

In another embodiment, an olfactive product can be selected from 2.5 dimethylpyrazine, 4-hydroxy-3-methoxybenzaldehyde (= vanillin) and methional.

As other possible olfactive product useful for the disclosure, one can mention the commercially available beef flavouring OF9137, chicken flavouring (OF6320) and mackerel flavouring (OF2257) available from Aromco Ltd, Bell Farm Industrial Park, Nuthampstead, Hertfordshire, UK. They are found to provide excellent attractant properties when used in amounts in the range 0.25% to 3% by weight of the total weight of the olfactive product.

In other embodiments, an olfactive product suitable for the present disclosure can be one of the exemplary compositions of the examples 1 to 4 as described in WO 2010/018365A1, the content of which being incorporated by reference.

The olfactive compounds can be selected from hexanoic acid; acetaldehyde; 2-heptanone; butyl hexanoate; heptyl formate; methyl pyrazine; 2,5-dimethyl pyrazine; pentanal; ethyl decanoate; heptanal; octanal; pentanol; acetone; ethyl caprylate; 3-methyl butanal; anisole; 2-ethyl hexanol; 2-pentyl furan; 2,3-butanediol; benzaldehyde; ethyl vanillin; and vanillin are described in Maoshen et al. 2016 (Optimization of key aroma compounds for dog food attractant in Animal Feed Science and Technology), the entire contents of which is herein incorporated by reference.

The olfactive compounds can be selected from butyric acid; 3-methylbutyric acid; 2-piperidione; 2,3-pentanedione; 2-ethyl-3,5-dimethylpyrazine; furfural; sulphurol; and indole are described in WO 2010/138372, the entire contents of which is herein incorporated by reference.

The olfactive compounds can be selected from 2-acetylpyridine; 2-acetylthiazole and 4-hydroxy-5-methyl-3(2H)-furanone are described in Hautala J. Improving the Palatability of Minitabletsfor Feline Medication. Helsinki: University of Helsinki, 2017. 72 p. (Dissertationes Scholae Doctoralis Ad Sanitatem Investigandam Universitatis Helsinkiensis; 2017/23).

The olfactive compounds can be selected from thymol (also named "5-methyl-2-isopropylphenol") and carvacrol (also named "2-methyl-5-isopropylphenol") are described in US2005/0112259, the entire contents of which are herein incorporated by reference.

The olfactive compounds can be selected from 2-ethyl furan; 2,3-dihydrothiophene; methyl pyrazine; 2-furanmethanol; ethyl pyrazine; 2-ethyl-5-methyl pyrazine; 2-methyl-6-(methio)-pyrazine; 2.5-dimethyl furan; 2-methyl thiophene; methyl ethyl disulfide; 2,5-dimethylpyrazine; 2-methyl-1-ethyl pyrrolidine; 2-ethyl-6-methyl pyrazine; 2-[(methyldithio)methyl]-furan; pyrazine; 3-methyl thiophene; 2-(2-propenyl)-furan; 2,6-dimethylpyrazine; dimethyl trisulfide (DMTS); 5-methyl-2-thiophenecarboxaldehyde; benzo[b]thiophene-4-ol; propanoic acid; 4-methylthiazole; 2,5-dimethyl thiophene; ethylthiazone; dihydro-2-methyl-3(2H)-thiophene; and methyl-2-methyl-3-furyl disulfide are described in US 6,660,319 B1, the entire contents of which are herein incorporated by reference.

The olfactive compounds can be selected from theanine; glutamine; tea; 1,5 octadien-3 one; and 1,5-octadien-3-ol are described in US 2008/0299286 A1, the entire contents of which are herein incorporated by reference.

The olfactive compounds can be selected from citric acid; tartaric acid; fumaric acid; lactic acid; acetic acid; and hexamic acid are described in US 3,679,429, the entire contents of which are herein incorporated by reference.

The olfactive compounds can be selected from alkyl-substituted 4-hydroxy-3(2H)-furanone compound and the selected compounds 5-methyl-4-hydroxy-3(2H)-furanone; 2,5-dimethyl-4-hydroxy-3(2H)-furanone; 5-methyl-2-ethyl-4-hydroxy-3(2H)-furanone; 5-ethyl-2-methyl-4-hydroxy-3(2H)-furanone; and 2,5-diethyl-4-hydroxy-3(2H)-furanone; are described in WO 2005/053421 A2, the entire contents of which are herein incorporated by reference.

The following embodiments are non-mutually exclusive and can be further combined. Hence, the olfactive product can include as olfactive compound acetic acid. The olfactive product can include as olfactive compound propanoic acid. The olfactive product can include as olfactive compound butyric acid. The olfactive product can include as olfactive compound 3-methylbutyric acid. The olfactive product can include as olfactive compound hexanoic acid. The olfactive product can include as olfactive compound citric acid. The olfactive product can include as olfactive compound tartaric acid. The olfactive product can include as olfactive compound fumaric acid. The olfactive product can include as olfactive compound lactic acid. The olfactive product can include as olfactive compound hexamic acid. The olfactive product can include as olfactive compound butyl hexanoate. The olfactive product can include as olfactive compound heptyl formate. The olfactive product can include as olfactive compound ethyl decanoate. The olfactive product can include as olfactive compound ethyl caprylate. The olfactive product can include as olfactive compound acetaldehyde. The olfactive product can include as olfactive compound 3-methyl butanal. The olfactive product can include as olfactive compound pentanal. The olfactive product can include as olfactive compound heptanal. The olfactive product can include as olfactive compound octanal. The olfactive product can include as olfactive compound benzaldehyde. The olfactive product can include as olfactive compound anisole. The olfactive product can include as olfactive compound pentanol. The olfactive product can include as olfactive compound 2-ethyl hexanol. The olfactive product can include as olfactive compound 2,3-butanediol. The olfactive product can include as olfactive compound thymol. The olfactive product can include as olfactive compound carvacrol. The olfactive product can include as olfactive compound 1,5-octadien-3-ol. The olfactive product can include as olfactive compound acetone. The olfactive product can include as olfactive compound 2,3-pentanedione. The olfactive product can include as olfactive compound 2-piperidione. The olfactive product can include as olfactive compound 2-heptanone. The olfactive product can include as olfactive compound 1,5-octadien-3-one. The olfactive product can include as olfactive compound ethyl vanillin. The olfactive product can include as olfactive compound vanillin. The olfactive product can include as olfactive compound pyrazine. The olfactive product can include as olfactive compound methyl pyrazine. The olfactive product can include as olfactive compound 2,5-dimethylpyrazine. The olfactive product can include as olfactive compound 2,6-dimethylpyrazine. The olfactive product can include as olfactive compound 2-methyl-6-(methio)-pyrazine. The olfactive product can include as olfactive compound 2-ethyl-3,5-dimethylpyrazine. The olfactive product can include as olfactive compound 2-ethyl-5-methyl pyrazine. The olfactive product can include as olfactive compound 2-ethyl-6-methylpyrazine. The olfactive product can include as olfactive compound ethyl pyrazine. The olfactive product can include as olfactive compound 2-pentyl furan. The olfactive product can include as olfactive compound 2-ethylfuran. The olfactive product can include as olfactive compound 2,5-dimethylfuran. The olfactive product can include as olfactive compound 2-[(methyldithio)methyl]-furan. The olfactive product can include as olfactive compound 2-(2-propenyl)-furan. The olfactive product can include as olfactive compound 2-furanmethanol. The olfactive product can include as olfactive compound 4-hydroxy-3(2H)-furanone. The olfactive product can include as olfactive compound alkyl-substituted 4-hydroxy-3(2H)-furanone compounds. The olfactive product can include as olfactive compound indole. The olfactive product can include as olfactive compound furfural. The olfactive product can include as olfactive compound sulphurol. The olfactive product can include as olfactive compound 2-acetylpyridine. The olfactive product can include as olfactive compound 2,3-dihydrothiophene. The olfactive product can include as olfactive compound 2-methyl thiophene. The olfactive product can include as olfactive compound 3-methyl thiophene. The olfactive product can include as olfactive compound 2,5-dimethyl thiophene. The olfactive product can include as olfactive compound dihydro-2-methyl-3(2H)-thiophene. The olfactive product can include as olfactive compound benzo[b]thiophene-4-ol. The olfactive product can include as olfactive compound 5-methyl-2-thiophenecarboxaldehyde. The olfactive product can include as olfactive compound methyl ethyl disulfide. The olfactive product can include as olfactive compound dimethyl trisulfide. The olfactive product can include as olfactive compound methyl-2-methyl-3-furyl disulfide. The olfactive product can include as olfactive compound 2-methyl-1-ethyl pyrrolidine. The olfactive product can include as olfactive compound 2-acetylthiazole. The olfactive product can include as olfactive compound 4-methylthiazole. The olfactive product can include as olfactive compound 2-ethylthiazole. The olfactive product can include as olfactive compound theanine. The olfactive product can include as olfactive compound glutamine. The olfactive product can include as olfactive compound tea.

One can also mention that the skilled person in the art can find listings of active ingredients usable for olfactive products suitable for carrying out the present disclosure from databases provided by various professional petfood associations, such as AAFCO (Association of American feed control official) or the FEDIAF (The European Pet Food Industry).

According to an embodiment of the disclosure, the olfactive product can be selected from flavours, flagrances, chemical molecules, aromas, extracts, digest, hydrolysates, protein ingredient, carbohydrate food or powder or any aromatic ingredient known bu the person skilled in the art.

According to an embodiment of the disclosure, an olfactive product can have an odour or smell of or resembling one or more of meat, poultry, fish, marine organism, mollusc, crustacean, cheese, bacon, butter, cream, game, gravy, rabbit, turkey, fowl, rodent, mouse, bird, plant, yeast, seafood and/or extracts of any one or more of these.

According to an embodiment of the disclosure, an olfactive product can include an olfactive compound, as previously defined, formulated with at least one formulating ingredient to confer an appropriate consistence: liquid, solid, powder-like or pasty-like. Appropriate formulating ingredients can be water, oil, flour, starch, or carbohydrate such as maltodextrin.

An olfactive product can include at least one olfactive compound as previously defined; or alternatively more than one (a "plurality") olfactive compound.

A tastant product can include at least one tastant compound as previously defined; or alternatively more than one (a "plurality") tastant compound.

A palatability enhancer can include at least one olfactive compound as previously defined and at least one tastant product as previously defined.

A palatability enhancer can include a plurality of olfactive compounds as previously defined and a plurality of tastant products as previously defined.

According to an embodiment of the disclosure, an olfactive product can include as sole olfactive compound a compound selected in the above-defined list of olfactive products, or a mixture thereof.

According to an embodiment of the disclosure, a tastant product can include, as sole tastant, a compound selected in the above-defined list of tastant products, or a mixture thereof.

According to an embodiment of the disclosure, the olfactive product can include as olfactive compound a mixture of the above listed compounds, in particular a mixture comprising 2, 3, 4, 5, 6 or more, up to 11, 12, 13, 14 or 15 of any of the above listed compounds

As used herein, the term "food composition" or "diet" covers all of foodstuff, diet, food supplement, liquid or a material that can contain proteins, carbohydrates and/or crude fats. Food composition can also contain supplementary substances or additives, for example, minerals, vitamins and condiments (See Merriam-Webster's Collegiate Dictionary, 10th Edition, 1993). Such food composition can be nutritionally complete or not.

As used herein, the term "wet food" or "wet food composition" generally refers to a food composition having a moisture content of 30% or more, or more than 40% by weight, relative to the total weight of the food composition. Preferably, the wet food composition has a moisture content lower than 90% by weight, relative to the total weight of the food composition. In general, it is the final product of a process comprising a final step of sterilization (instead of a drying step). For example, the wet food consists of a chunk form, more particularly of chunks in gravy form. For example, the wet food consists of chunks and gravy, chunks in jelly, loaf, mousse, terrine, bites form. "Chunks and gravy" products include a preformed meat particle prepared by making a meat emulsion and by putting this meat emulsion through a muzzle under pressure and then cooked. A product, such as cooked meat, is diced into chunks, which are eventually mixed with a gravy or sauce. The two components are then filled into a container, usually a can or pouch, which is seamed or sealed and sterilized. As opposed to the ground loaf, chunk and gravy compositions have physically separated, discrete chunks (*i.e.* pieces of ground meat and grains) as prepared. These discrete particles are present in the gravy-type liquid in the final container. When serving, chunk and gravy products flow out of the can and can be easily mixed with other dry products. While the chunk and gravy products allow better integrity of the individual ingredients, the heterogeneous formulation of the chunk and gravy products are sometimes disfavored by consumers. Wet food compositions are generally packaged in can-like containers and are considered "wet" in appearance because of the moisture contained therein. Two types of wet compositions are generally known in the art. The first is known in the art as "ground loaf." Loaf products are typically prepared by contacting a mixture of components under heat to produce an essentially homogeneous, intracellular honeycomb-type mass or "ground loaf." The ground loaf mass is then packaged into a cylindrical container, such as a can. Upon packing, ground loaf assumes the shape of the container such that the ground loaf must be cut when serving to a companion animal. The wet food composition is preferably packaged. In this way, the consumer is able to identify, from the packaging, the ingredients in the food product and confirm that it is suitable for the particular pet in question. The packaging can be metal, plastic, paper or card.

As used herein, the term "semi-moist food" or "semi-moist food composition" generally refers to a food composition with an intermediate moisture content of about 12% to about 30% in weight, relative to the total weight of the food composition. Hence, such semi-moist food composition is generally the final product of a process allowing a moisture content value that is intermediate between a dry food and a wet food. In some embodiments, the said process can comprise a step of adding a humectant agent. In some embodiments, the said process comprises an extrusion step and a subsequent treatment step with Super-Heated Steam (SHS). In some embodiments, the semi-moist food according to the present disclosure containing more than 12% and at most 30% moisture by weight, relative to the total weight of the food composition. Illustratively, a semi-moist food composition has 11% to 25% moisture by weight, relative to the total weight of the food composition, and/or a water activity of 0.64 to 0.75, preferably both.

As used herein, the term "dry food" or "dry food composition" generally refers to a food or composition having a moisture content of less than 12% by weight, relative to the total weight of the food composition, and commonly even less than 7% by weight, relative to the total weight of the food composition. In preferred embodiments of the present disclosure, dry food according to the present disclosure has a moisture content up to 12% by weight, relative to the total weight of the considered composition and/or food product. This can include all subranges, such as for example up to 12%, 11%, 10%, 9%, 8%, 7%, 6% and 5%. In some embodiments, the said dry food has a moisture content of 7% or less, such as 5% by weight, relative to the total weight of the composition. In preferred embodiments, the dry food has a moisture content of more than 3% by weight, relative to the total weight of the food composition.

In a non-exhaustive manner, a dry food composition can be manufactured by mixing together ingredients and kneading in order to make consistent dough that can be cooked.

As used herein, and in the absence of any other indication, the terms "*heating*" or *"heating step"* generally refer to any heating protocol leading to an increase of temperature of the food product or composition, or alternatively of maintaining the temperature of the food product or composition, above a reference temperature, such as ambient temperature.

In the absence of any other indication, the term *"ambient temperature"* refers to the tempreature at which the dry food composition is provided. An "ambient temperature" is typically a temperature ranging from about 15 to about 25° C. Accordingly, and in the context of a method of preparation of animal food products according to the disclosure, it will be readily understood that the term can vary depending on the localization of the preparation.

As used herein, the term *"fat"* encompasses any food-acceptable fat(s) and/or oil (s) irrespective of their consistency at room temperature, i.e. irrespective of whether said "fat" is present in essentially fluid form or in essentially solid form. The fat-containing composition according to the disclosure can comprise fat of animal and/or vegetable origin. Fat can be supplied by any of a variety of sources known by those skilled in the art. Plant fat sources can include, without limitation, wheat, sunflower, safflower, rapeseed, olive, borage, flaxseed, peanuts, blackcurrant seed, cottonseed, wheat, germ, corn germ, algae oil as well as oils derived from these and other plant fat sources. Animal sources include, for example and without limitation, chicken fat, turkey fat, beef fat, duck fat, pork fat, lamb fat, etc., fish oil, krill oil or any meat, meat by-products, seafood, dairy, eggs, etc. Fat content of foods can be determined by any number of methods known by those of skill in the art. A fat source can comprise, or even consist essentially of a mixture of fatty acids.

As used herein, the term "fat composition" or « fat-containing composition » means any composition which comprise at least a lipid, in particular at least one fatty acid.

As used herein, the terms "fat", "oil", and "lipid" are synonymous and encompass also mixtures of fats or oils. Animal fats as well as vegetable oils and/or marine oils can be used. Any commercially-available source of animal, vegetable, marine fat can be tested. Plant oils are typically canola oil, soybean oil, corn oil, olive oil, sunflower oil, linseed oil, peanut oil, palm oil, palm kernel oil, safflower oil, rapeseed oil, cottonseed oil, coconut oil, and the like. Typical animal fats are beef fat (including beef tallow), pork fat (including pork lard), poultry fat (including chicken fat, turkey fat, duck fat, and combinations thereof), and the like. Marine oils are typically tuna oil, sardine oil, salmon oil, menhaden oil, anchovy oil, fish oil, and the like. Also are encompassed herein fats that are derived from animal, plant, marine sources, or that are produced by animals and plants.

Fatty acids which can considered as part of the « fat-containing composition » can include essential fatty acids (EFAs), non-essential fatty acids, and/or those susceptible to be found in nature, including fatty acids, saturated or unsaturated, having from about 10 or more carbons, such as about 10 to about 20 carbons. Examples of such fatty acids include omega-8, omega-6 and omega-3 fatty acids, capric acid, lauric acid, myristic acid, palmitic acid, and stearic acid, as well as oleic, linoleic, and linolenic acids, arachidic and arachidonic acid, and/or other long chain polyunsaturated fatty acid having a carbon chain length of at least about 18, most commonly about 18 to about 22, carbon atoms and a minimum of 2 olefinic double bonds in the carbon chain.

Fatty acids, according to the present disclosure, can comprise or consist of isolated fatty acids or mixtures of fatty acids.

For example mixtures of different fatty acids, can be those selected from oleic acid, palmitic acid, linoleic acid, stearic acid, and/or linolenic acid.

For example a fat-containing composition according to the present disclosure, comprising at least about 0.5% of fat in dry matter (FDM) of the total weight of the fat-containing composition, can be further characterized in that the said fat comprises or consists of fatty acids or mixture of at least two fatty acids, which can for example differ in a characteristic that is one or more of (i) length of the aliphatic tail, (ii) the position of one or more double bonds between carbon atoms, if any such bonds are present in the fatty acid, and (iii) the configuration of the two carbon atoms that are bound next to either side of the double bond.

### EXAMPLES

### Example 1. Methodology for establishing palatability for cats

A palatability test is carried out on a panel of a plurality (40) of adult cats, males and females, of various breeds. The Versus Methodology was used. It consists in presenting simultaneously two blows to each cat.

The test was performed over two meals. Both diets were swapped between meal 1 and meal 2, in order to avoid potential bias related to bowl position.

The measured critera for cat were:

- **1st choice:** first food consumed by the animal.
- **Intake ratio** for each product.

- **Preferred:** preferred food for the animal.

The measured critera for dogs were:

- **1st choice:** first food consumed by the animal.
- **1st bowl finished:** product for which the bowl is finished first
- **Preferred:** preferred food for the animal.

Food preparation is done 1 hour before the test starts. The same amount of food is distributed in each bowl, after weighting. Quantity is calculated according to the individual characteristics of each animal. The test consists in individual long meals, starting at 4:00 pm and ending at 7:00 am on the next morning.

Palatability tests were achieved at the kennel & cattery to assess the performance between: (i) a standard dry product coating, and (ii) an animal food product coated in two-steps, according to the disclosure (elsewhere reported as *"last minute coating"),* including a first coating step with fat, and then three weeks or two months later, a second coating step with aromas in liquid and powder form, as shown in **figure 1.**

For each product (i.e. the control or standard dry product coating vs. the two-step "last minute" coating), the expected benefits include freshness, homogeneity and precision. For each product, the same aroma batches were used.

For the purpose of this experiment, low fat coatings were defined as fat-containing compositions comprising about 3% of fat in dry matter (FDM) of the total weight of the fat-containing composition. Standard fat coatings were defined as fat-containing compositions comprising about 6% of fat in dry matter (FDM) of the total weight of the fat-containing composition. The fat-containing composition is produced from poultry.

Statistical analysis of the **consumption ratio** was achieved for quantitative data and dependent samples with a Student test. In palatability tests, the consumption ratio of food A depends on the consumption ratio of food B:

Step 1: For each animal, calculation of: D = Ratio A - Ratio B
Step 2: Calculation of the Student variable, taking into account:

- Each D of the animals
- The difference between each D and the average of all D
- The total number of animals

$$z = \frac{\bar{X}_D}{S_D \sqrt{N}}$$

Step 3: Search for the associated p-value, thans to the Student Table. In the Student Table, each Student variable corresponds to a specific p-value. Significant results are defined as $p < 0.05$ & highly significant results are defined as $p < 0.01$.

In appetence tests, the **preferred** animal food product is determined by calculating the significance of the difference beween food A and B. Data were collected over 16h. The T°c of each meal is comparable. Only animals eating more than 5g/meal on all meals are included in the analysis.

The Chi-square test is used for qualitative data. In appetence tests, the **first choices** offer two possible answers: food A or food B. The sum of the animals having chosen A or B is determined, and compared to the expected results if no differences are to be found. The signficance theresholds are the same as for Student.

Significant or highly significant differences were observed at T + 2 months for low and standard fat-containing compositions coated with the protocol of the disclosure vs. the control protocol, on, respectively, the following parameters: **preferred** and **ratio.**

Accordingly, the experimental data demonstrate that the two-steps coating process is not detrimental for the palatability of the final product in the long term in the cat population. The two-steps process further demonstrates final animal food products with improved palatability over the control food products, when the amount of fat in the fat-containing composition is lowered.

**Example 2. Methodology for establishing palatability for dogs & mini dogs**

The same method was used for establishing palatability for dogs, with regards to the coating process of the disclosure.

For the purpose of this experiment, low fat coatings were defined as fat-containing compositions comprising about 3% of fat in dry matter (FDM) of the total weight of the fat-containing composition. Standard fat coatings were defined as fat-containing compositions comprising about 8% of fat in dry matter (FDM) of the total weight of the fat-containing composition. The fat-containing composition is produced from pork.)

Significant or highly significant differences were observed over a long period after preparation, at T + 2 weeks and T + 2 months for low fat-containing compositions on **preferred** and **ratio** parameters.

In view of the above, the improved palatability previously observed for cats (see example 1) is also found in the dog and mini dog population.

**Example 3. Formulation of a final kibble composition after 2-step protocol.**

| Name | Poultry fat (%) | Palatant liquid (%) | Palatant powder (%) |
|---|---|---|---|
| **Composition 1 (cats)** | 3 | 3 | 2 |
| | 3 | 3 | 2.3 |
| | 6 | 3 | 2 |
| **Composition 2 (dogs)** | 3 | 3.3 | 0.7 |
| | 3 | 3.3 | 0.9 |
| | 8 | 3.3 | 0.7 |

**Claims**

1.  A method for preparing an animal food product, comprising the steps of:

    a) providing a dry food composition comprising a first coating, said first coating comprising a fat-containing composition comprising between about 0.5% and about 10% of fat in dry matter (FDM) of the total weight of the fat-containing composition;
    b) applying a second coating, preferably by spraying, to the dry food composition, the second coating comprising (i) a palatability enhancer product in liquid form and (ii) a palatability enhancer product in powder form;

    **characterized in that** the second coating is applied at a temperature less than about 37° C and/or within about 10° C of the ambient temperature.

2.  The method according to claim 1, which further comprises a step of packaging the prepared animal food product.

3.  The method according to claim 1, which comprises the steps of:

    a) providing a dry food composition comprising a first coating, said first coating comprising a fat-containing composition comprising between about 0.5% and about 10% of fat in dry matter (FDM) of the total weight of the fat-containing composition;
    b) applying a second coating, preferably by spraying, to the dry food composition, the second coating comprising a palatability enhancer product in powder form;
    c) applying a third coating, preferably by spraying, to the coated dry food composition obtained at the previous step b), the third coating comprising a palatability enhancer product in liquid form;

    **characterized in that** the third coating is applied at a temperature less than about 37° C and/or within about 10° C of the ambient temperature.

4.  The method according to any one of the preceding claims, which does not comprise a step of heating the dry food composition.

5.  The method according to any one of the preceding claims, wherein the temperature of the dry food composition does not exceed about 25° C.

**6.** The method according to any one of the preceding claims, comprising spraying the dry food composition with the olfactive product in liquid form.

**7.** The method according to any one of the preceding claims, wherein the palatability enhancer product is an olfactive product, and the palatability enhancer product in liquid form is the same as the palatability enhancer product in powder form.

**8.** The method according to any one of the preceding claims, wherein the palatability enhancer product is an olfactive product selected from acetic acid, propanoic acid, butyric acid, 3-methylbutyric acid, hexanoic acid, citric acid, tartaric acid, fumaric acid, lactic acid, hexamic acid, butyl hexanoate, heptyl formate, ethyl decanoate, ethyl caprylate, acetaldehyde, 3-methyl butanal, pentanal, heptanal, octanal, benzaldehyde, anisole, pentanol, 2-ethyl hexanol, 2,3-butanediol, thymol, carvacrol, 1,5-octadien-3-ol, acetone, 2,3-pentanedione, 2-piperidione, 2-heptanone, 1,5-octadien-3-one, ethyl vanillin, vanillin, pyrazine, methyl pyrazine, methyl pyrazine, 2,5-dimethylpyrazine, 2,6-dimethylpyrazine, 2-methyl-6-(methio)-pyrazine, 2-ethyl-3,5-dimethylpyrazine, 2-ethyl-5-methyl pyrazine, 2-ethyl-6-methylpyrazine, ethyl pyrazine, 2-pentyl furan, 2-ethylfuran, 2,5-dimethylfuran, 2-[(methyldithio)methyl]-furan, 2-(2-propenyl)-furan, 2-furanmethanol, 4-hydroxy-3(2H)-furanone and alkyl-substituted 4-hydroxy-3(2H)-furanone compounds, indole, furfural, sulphurol, 2-acetylpyridine, 2,3-dihydrothiophene, 2-methyl thiophene, 3-methyl thiophene, 2,5-dimethyl thiophene, dihydro-2-methyl-3(2H)- thiophene, benzo[b]thiophene-4-ol, 5-methyl-2-thiophenecarboxaldehyde, methyl ethyl disulfide, dimethyl trisulfide, methyl-2-methyl-3-furyl disulfide, 2-methyl-1-ethyl pyrrolidine, 2-acetylthiazole, 4-methylthiazole, 2-ethylthiazole, theanine, glutamine, tea, 2-methyl-3-furanthiol, 2-furanmethanethiol, 3-mercapto-2-pentanone, ethyl furanone, 2,4-decadienal, 2,3-butanedione, di-(2-methyl-3-furyl)-disulfide, proline, hydroxyproline, glutamic acid, aspartic acid, arginine, cystine, glutamine, isoleucine, lysine, threonine, histidine, alanine, glycine, valine, ornithine, adenosine monophosphate (AMP), guanosine monophosphate (GMP), inosine monophosphate (IMP), uridine monophosphate (UMP), cytidine monophosphate (CMP), xanthosine monophosphate (XMP), and a mixture thereof.

**9.** The method according to any one of the preceding claims, wherein the prepared animal food product is a dry animal food product.

**10.** The method according to any one of the preceding claims, wherein the fat-containing composition comprises at least about 1% of fat in dry matter (FDM) of the total weight of the fat-containing composition, and less than about 8% of FDM.

**11.** The method according to any one of the preceding claims, wherein the pre dry food composition is in the form of a kibble.

**12.** A kit comprising:

- A kibble comprising a core dry food composition suitable for animal consumption, and an external coating comprising a fat-containing composition comprising at least about 0.5% of fat in dry matter (FDM) of the total weight of the fat-containing composition, and less than about 10% of FDM,
- A palatability enhancer product in powder form, and
- A palatability enhancer product in liquid form.

**13.** An animal food product obtainable by the method according to any one of claims 1 to 11, said animal food product being in the form of a kibble.

**14.** An animal food product comprising an external coating comprising at least i) a fat-containing composition comprising at least about 0.5% of fat in dry matter (FDM) of the total weight of the fat-containing composition, and less than about 10% of FDM, ii) a palatability enhancer product in powder form, and iii) a palatability enhancer product in liquid form.

**15.** A method for feeding an animal, comprising a step of administering said animal an animal food product according to the preceding claim.

**FIGURE 1**

Europäisches
Patentamt

European
Patent Office

Office européen
des brevets

## EUROPEAN SEARCH REPORT

**Application Number**

EP 22 19 8943

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/235094 A1 (MAO MATHIEU [DE] ET AL) 18 August 2016 (2016-08-18) * claims 7-9,15 * | 1-15 | INV. A23K50/42 A23K40/30 |
| X | US 3 930 031 A (KEALY RICHARD D) 30 December 1975 (1975-12-30) * claim 4 * * column 3, lines 3-30 * | 1-15 | |
| X | US 2015/173397 A1 (MARTINEZ VILLAGRAN MARIA DOLORES [US] ET AL) 25 June 2015 (2015-06-25) * claims 14-15,17 * | 1-15 | |
| X | US 5 968 569 A (CAVADINI CHRISTOF [CH] ET AL) 19 October 1999 (1999-10-19) * claim 1 * | 1-15 | |

**TECHNICAL FIELDS SEARCHED (IPC)**

A23K

The present search report has been drawn up for all claims

| Place of search | Date of completion of the search | Examiner |
|---|---|---|
| The Hague | 22 February 2023 | Heirbaut, Marc |

EPO FORM 1503 03.82 (P04C01)

## ANNEX TO THE EUROPEAN SEARCH REPORT
## ON EUROPEAN PATENT APPLICATION NO.

EP 22 19 8943

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2023

| Patent document cited in search report | | Publication date | Patent family member(s) | | Publication date |
|---|---|---|---|---|---|
| US 2016235094 | A1 | 18-08-2016 | AU | 2014342584 A1 | 26-05-2016 |
| | | | AU | 2018204867 A1 | 19-07-2018 |
| | | | CN | 105682473 A | 15-06-2016 |
| | | | EP | 3065557 A1 | 14-09-2016 |
| | | | EP | 3622826 A1 | 18-03-2020 |
| | | | HK | 1225577 A1 | 15-09-2017 |
| | | | PL | 3065557 T3 | 18-05-2020 |
| | | | US | 2016235094 A1 | 18-08-2016 |
| | | | WO | 2015066009 A1 | 07-05-2015 |
| US 3930031 | A | 30-12-1975 | AU | 8275175 A | 06-01-1977 |
| | | | CA | 1052615 A | 17-04-1979 |
| | | | CH | 613098 A5 | 14-09-1979 |
| | | | DE | 2526237 A1 | 22-01-1976 |
| | | | DK | 313075 A | 12-01-1976 |
| | | | FR | 2277534 A1 | 06-02-1976 |
| | | | GB | 1459740 A | 31-12-1976 |
| | | | IT | 1036984 B | 30-10-1979 |
| | | | JP | S5133077 A | 19-03-1976 |
| | | | JP | S5329631 B2 | 22-08-1978 |
| | | | LU | 72931 A1 | 04-02-1976 |
| | | | NL | 7507250 A | 13-01-1976 |
| | | | NO | 140485 B | 05-06-1979 |
| | | | SE | 406541 B | 19-02-1979 |
| | | | US | 3930031 A | 30-12-1975 |
| US 2015173397 | A1 | 25-06-2015 | AU | 2014368875 A1 | 21-07-2016 |
| | | | CA | 2933189 A1 | 25-06-2015 |
| | | | CN | 106659197 A | 10-05-2017 |
| | | | EP | 3082450 A1 | 26-10-2016 |
| | | | JP | 2017501701 A | 19-01-2017 |
| | | | RU | 2016129485 A | 25-01-2018 |
| | | | US | 2015173397 A1 | 25-06-2015 |
| | | | WO | 2015095881 A1 | 25-06-2015 |
| US 5968569 | A | 19-10-1999 | AR | 011397 A1 | 16-08-2000 |
| | | | AT | 206873 T | 15-11-2001 |
| | | | AU | 740761 B2 | 15-11-2001 |
| | | | BR | 9800271 A | 29-06-1999 |
| | | | CA | 2222758 A1 | 09-07-1998 |
| | | | CN | 1192330 A | 09-09-1998 |
| | | | DE | 29724815 U1 | 22-07-2004 |
| | | | DE | 29724816 U1 | 22-07-2004 |
| | | | DE | 69707413 T2 | 16-05-2002 |
| | | | DK | 0862863 T3 | 04-02-2002 |
| | | | EP | 0862863 A2 | 09-09-1998 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 22 19 8943

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2023

| Patent document cited in search report | Publication date | Patent family member(s) | | Publication date |
|---|---|---|---|---|
| | | ES | 2164299 T3 | 16-02-2002 |
| | | JP | 4308337 B2 | 05-08-2009 |
| | | JP | H10191916 A | 28-07-1998 |
| | | MY | 120969 A | 30-12-2005 |
| | | NZ | 329464 A | 28-01-2000 |
| | | PT | 862863 E | 29-04-2002 |
| | | US | 5968569 A | 19-10-1999 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20100303976 A1
- WO 2015066009 A
- WO 2010018365 A1
- WO 2021087309 A1
- WO 2010138372 A
- US 20050112259 A
- US 6660319 B1
- US 20080299286 A1
- US 3679429 A
- WO 2005053421 A2

### Non-patent literature cited in the description

- **SAMANT et al.** Dry Pet Food Flavor Enhancers and Their Impact on Palatability: A Review. *Foods,* 2021
- **MAOSHEN et al.** Optimization of key aroma compounds for dog food attractant. *Animal Feed Science and Technology,* 2016
- Improving the Palatability of Minitabletsfor Feline Medication. **HAUTALA J.** Dissertationes Scholae Doctoralis Ad Sanitatem Investigandam Universitatis Helsinkiensis. University of Helsinki, 2017, vol. 23, 72
- **MERRIAM.** Webster's Collegiate Dictionary. 1993